# EUROPEAN PATENT APPLICATION

(11) **EP 2 128 757 A2**
(43) Date of publication of application: **02.12.2009**
(21) Application number: 09010828.3
(22) Date of filing: 06.05.2002
(51) Int. Cl.: G06F 9/44, H04M 3/493

(54) **Markup language extensions for web enabled recognition**

(30) Priority: 04.05.2001 US 289041 P; 20.09.2001 US 960233; 05.04.2002 US 117141
(62) Divisional of application: 02010064.0
(71) Applicant: Microsoft Corp., Redmond, WA 98052-6399 (US)
(72) Inventor: Wang, Kuansan, Bellevue, WA 98006 (US); Hon, Hsiao-Wuen, Bellevue, WA 98006 (US)
(74) Representative: Grünecker, Kinkeldey, Stockmair & Schwanhäusser Anwaltssozietät

(57) **Abstract**

A markup language for execution on a client device in a client/server system includes extensions for recognition.

## Description

### BACKGROUND OF THE INVENTION

The present invention relates to access of information over a wide area network such as the Internet. More particularly, the present invention relates to web enabled recognition allowing information and control on a client side to be entered using a variety of methods.

Small computing devices such as personal information managers (PIM), devices and portable phones are used with ever increasing frequency by people in their day-to-day activities. With the increase in processing power now available for microprocessors used to run these devices, the functionality of these devices are increasing, and in some cases, merging. For instance, many portable phones now can be used to access and browse the Internet as well as can be used to store personal information such as addresses, phone numbers and the like.

In view that these computing devices are being used for browsing the Internet, or are used in other server/client architectures, it is therefore necessary to enter information into the computing device. Unfortunately, due to the desire to keep these devices as small as possible in order that they are easily carried, conventional keyboards having all the letters of the alphabet as isolated buttons are usually not possible due to the limited surface area available on the housings of the computing devices.

Recently, voice portals such as through the use of VoiceXML (voice extensible markup language) have been advanced to allow Internet content to be accessed using only a telephone. In this architecture, a document server (for example, a web server) processes requests from a client through a VoiceXML interpreter. The web server can produce VoiceXML documents in reply, which are processed by the VoiceXML interpreter and rendered audibly to the user. Using voice commands through voice recognition, the user can navigate the web.

VoiceXML is a markup language with flow control tags; however, flow control does not follow the HTML (Hyper Text Markup Language) flow control model, which includes eventing and separate scripts. Rather, VoiceXML generally includes a form interpretation algorithm that is particularly suited for telephone-based voice-only interaction, and commonly, where the information obtained from the user is under the control of the system or application. Incorporation of VoiceXML directly into applications available in a client-server relationship where graphically user interfaces are also provided will require the developer to master two forms of web authoring, one for VoiceXML and the other using HTML (or the like), each one following a different flow control model.

There is thus an ongoing need to improve upon the architecture and methods used to provide speech recognition in a server/client architecture such as the Internet. The authoring tool for speech recognition should be easily adaptable to small computing devices such as PIMs, telephones and the like. An architecture or method of web authoring that addresses one, several or all of the foregoing disadvantages is particularly needed.

### SUMMARY OF THE INVENTION

A markup language for execution on a client device in a client/server system includes an instruction indicating a grammar to associate with input data entered through the client device.

With the availability of this extension and as another aspect of the present invention, a client device can execute instructions to receive a markup language page from a web server having a field for input data. The client device can then receive input data from a user related to the field and send the data and an indication of the grammar for recognition to a recognition server, typically, located at a remote location for processing.

The recognition server can execute instructions to receive the input data and the indication of the grammar to perform recognition. The results of recognition can then be sent back to the client device or web server for further processing.

### BRIEF DESCRIPTION OF THE DRAWINGS

FIG. 1 is a plan view of a first embodiment of a computing device operating environment.
FIG. 2 is a block diagram of the computing device of FIG. 1.
FIG. 3 is a plan view of a telephone.
FIG. 4 is a block diagram of a general purpose computer.
FIG. 5 is a block diagram of an architecture for a client/server system.
FIG. 6 is a display for obtaining credit card information.
FIG. 7 is a page of mark-up language executable on a client.
FIG. 8 is an exemplary page of mark-up language executable on a client having a display and voice recognition capabilities.
FIGS. 9A and 9B are an exemplary page of mark-up language executable on a client with audible rendering only and system initiative.
FIG. 10A and 10B are an exemplary page of mark-up language executable on a client with audible rendering only and mixed initiative.
FIG. 11 is an exemplary script executable by a server side plug-in module.
FIG. 12 is a pictorial illustration of a first operational mode of a recognition server.
FIG. 13 is a pictorial illustration of a second operational mode of the recognition server.
FIG. 14 is a pictorial illustration of a third operational mode of the recognition server.
FIGS. 15A and 15B are an exemplary page of declarative mark-up language executable on a client without scripting.

### DETAILED DESCRIPTION OF THE ILLUSTRATIVE EMBODIMENTS

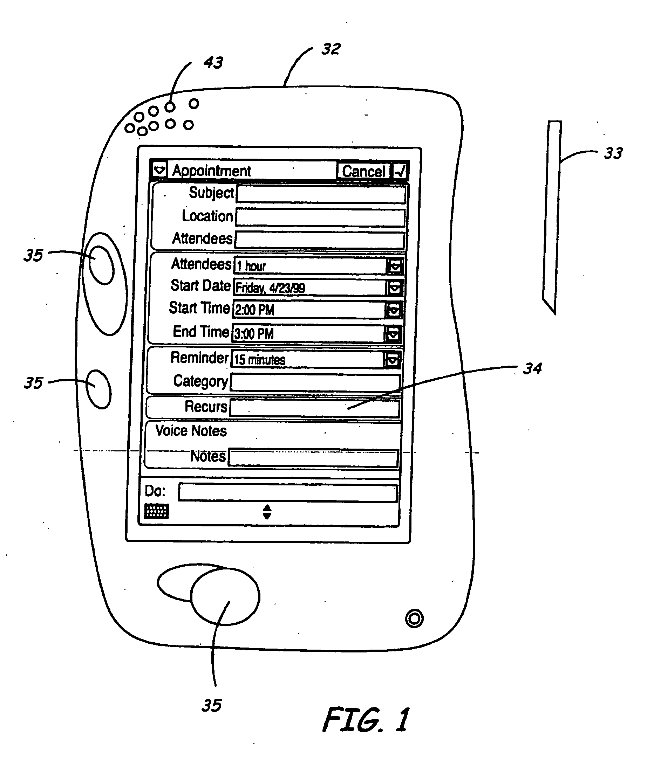

Before describing an architecture of web based recognition and methods for implementing the same, it may be useful to describe generally computing devices that can function in the architecture. Referring now to FIG. 1, an exemplary form of a data management device (PIM, PDA or the like) is illustrated at 30. However, it is contemplated that the present invention can also be practiced using other computing devices discussed below, and in particular, those computing devices having limited surface areas for input buttons or the like. For example, phones and/or data management devices will also benefit from the present invention. Such devices will have an enhanced utility compared to existing portable personal information management devices and other portable electronic devices, and the functions and compact size of such devices will more likely encourage the user to carry the device at all times. Accordingly, it is not intended that the scope of the architecture herein described be limited by the disclosure of an exemplary data management or PIM device, phone or computer herein illustrated.

An exemplary form of a data management mobile device 30 is illustrated in FIG. 1. The mobile device 30 includes a housing 32 and has an user interface including a display 34, which uses a contact sensitive display screen in conjunction with a stylus 33. The stylus 33 is used to press or contact the display 34 at designated coordinates to select a field, to selectively move a starting position of a cursor, or to otherwise provide command information such as through gestures or handwriting. Alternatively, or in addition, one or more buttons 35 can be included on the device 30 for navigation. In addition, other input mechanisms such as rotatable wheels, rollers or the like can also be provided. However, it should be noted that the invention is not intended to be limited by these forms of input mechanisms. For instance, another form of input can include a visual input such as through computer vision.

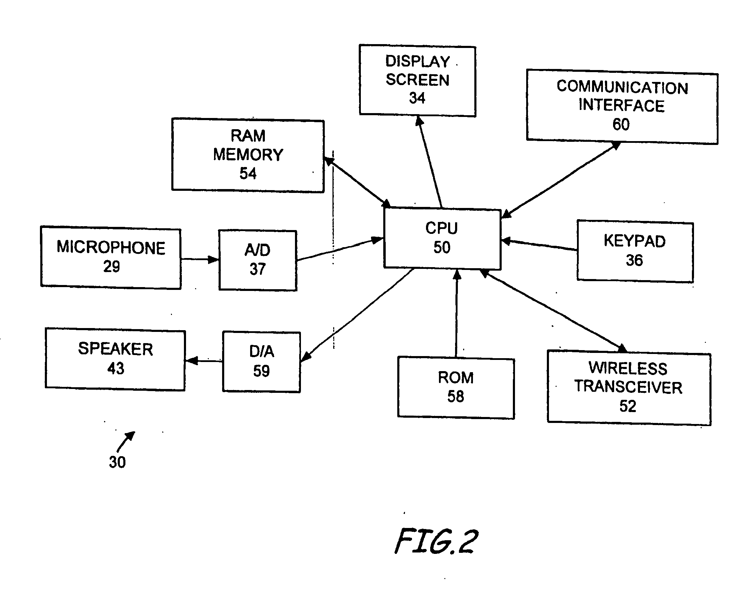

Referring now to FIG. 2, a block diagram illustrates the functional components comprising the mobile device 30. A central processing unit (CPU) 50 implements the software control functions. CPU 50 is coupled to display 34 so that text and graphic icons generated in accordance with the controlling software appear on the display 34. A speaker 43 can be coupled to CPU 50 typically with a digital-to-analog converter 59 to provide an audible output. Data that is downloaded or entered by the user into the mobile device 30 - is stored in a non-volatile read/write random access memory store 54 bi-directionally coupled to the CPU 50. Random access memory (RAM) 54 provides volatile storage for instructions that are executed by CPU 50, and storage for temporary data, such as register values. Default values for configuration options and other variables are stored in a read only memory (ROM) 58. ROM 58 can also be used to store the operating system software for the device that controls the basic functionality of the mobile 30 and other operating system kernel functions (e.g., the loading of software components into RAM 54).

RAM 54 also serves as a storage for the code in the manner analogous to the function of a hard drive on a PC that is used to store application programs. It should be noted that although non-volatile memory is used for storing the code, it alternatively can be stored in volatile memory that is not used for execution of the code.

Wireless signals can be transmitted/received by the mobile device through a wireless transceiver 52, which is coupled to CPU 50. An optional communication interface 60 can also be provided for downloading data directly from a computer (e.g., desktop computer), or from a wired network, if desired. Accordingly, interface 60 can comprise various forms of communication devices, for example, an infrared link, modem, a network card, or the like.

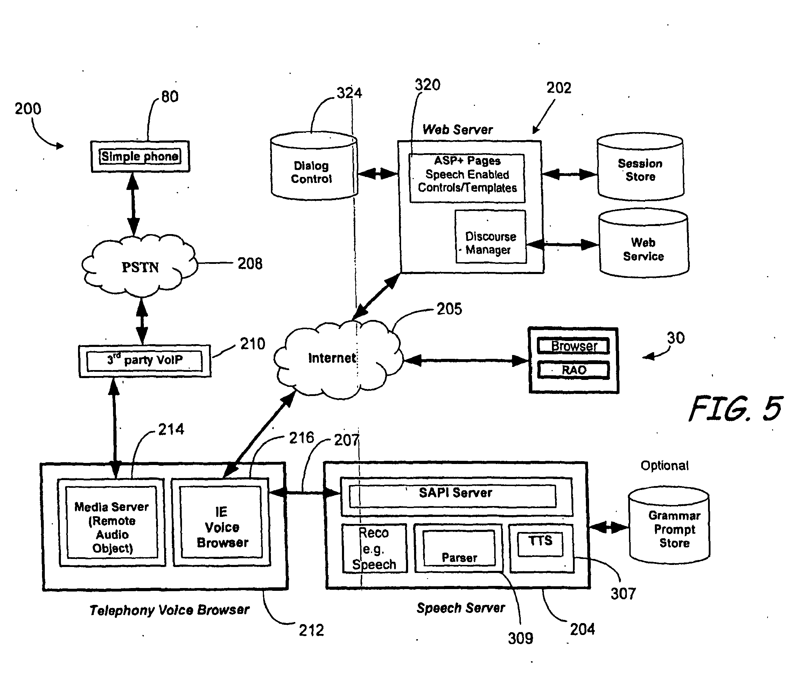

Mobile device 30 includes a microphone 29, and analog-to-digital (A/D) converter 37, and an optional recognition program (speech, DTMF, handwriting, gesture or computer-vision) stored in store 54. By way of example, in response to audible information, instructions or commands from a user of device 30, microphone 29 provides speech signals, which are digitized by A/D converter 37. The speech recognition program can perform normalization and/or feature extraction functions on the digitized speech signals to obtain intermediate speech recognition results. Using wireless transceiver 52 or communication interface 60, speech data is transmitted to a remote recognition server 204 discussed below and illustrated in the architecture of FIG. 5. Recognition results are then returned to mobile device 30 for rendering (e.g. visual and/or audible) thereon, and eventual transmission to a web server 202 (FIG. 5), wherein the web server 202 and mobile device 30 operate in a client/server relationship. Similar processing can be used for other forms of input. For example, handwriting input can be digitized with or without preprocessing on device 30. Like the speech data, this form of input can be transmitted to the recognition server 204 for recognition wherein the recognition results are returned to at least one of the device 30 and/or web server 202. Likewise, DTMF data, gesture data and visual data can be processed similarly. Depending on the form of input, device 30 (and the other forms of clients discussed below) would include necessary hardware such as a camera for visual input.

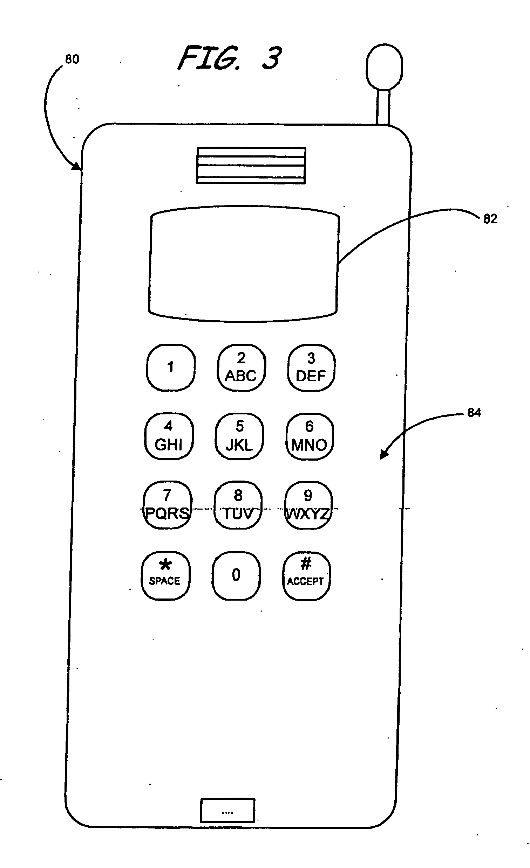

FIG. 3 is a plan view of an exemplary embodiment of a portable phone 80. The phone 80 includes a display 82 and a keypad 84. Generally, the block diagram of FIG. 2 applies to the phone of FIG. 3, although additional circuitry necessary to perform other functions may be required. For instance, a transceiver necessary to operate as a phone will be required for the embodiment of FIG. 2; however, such circuitry is not pertinent to the present invention.

In addition to the portable or mobile computing devices described above, it should also be understood that the present invention can be used with numerous other computing devices such as a general desktop computer. For instance, the present invention will allow a user with limited physical abilities to input or enter text into a computer or other computing device when other conventional input devices, such as a full alpha-numeric keyboard, are too difficult to operate.

The invention is also operational with numerous other general purpose or special purpose computing systems, environments or configurations. Examples of well known computing systems, environments, and/or configurations that may be suitable for use with the invention include, but are not limited to, regular telephones (without any screen) personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

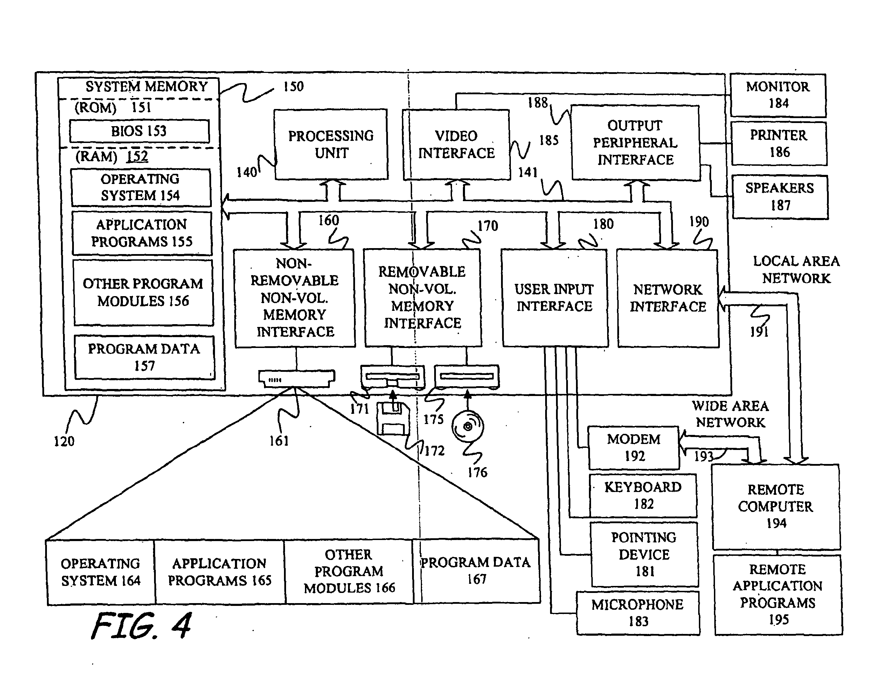

The following is a brief description of a general purpose computer 120 illustrated in FIG. 4. However, the computer 120 is again only one example of a suitable computing environment and is not intended to suggest any limitation as to the scope of use or functionality of the invention. Neither should the computer 120 be interpreted as having any dependency or requirement relating to any one or combination of components illustrated therein.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices. Tasks performed by the programs and modules are described below and with the aid of figures. Those skilled in the art can implement the description and figures as processor executable instructions, which can be written on any form of a computer readable medium.

With reference to FIG. 4, components of computer 120 may include, but are not limited to, a processing unit 140, a system memory 150, and a system bus 141 that couples various system components including the system memory to the processing unit 140. The system bus 141 may be any of several types of bus structures including a memory bus or memory controller, a peripheral bus, and a local bus using any of a variety of bus architectures. By way of example, and not limitation, such architectures include Industry Standard Architecture (ISA) bus, Universal Serial Bus (USB), Micro Channel Architecture (MCA) bus, Enhanced ISA (EISA) bus, Video Electronics Standards Association (VESA) local bus, and Peripheral Component Interconnect (PCI) bus also known as Mezzanine bus. Computer 120 typically includes a variety of computer readable mediums. Computer readable mediums can be any available media that can be accessed by computer 120 and includes both volatile and nonvolatile media, removable and non-removable media. By way of example, and not limitation, computer readable mediums may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 120.

Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, FR, infrared and other wireless media. Combinations of any of the above should also be included within the scope of computer readable media.

The system memory 150 includes computer storage media in the form of volatile and/or nonvolatile memory such as read only memory (ROM) 151 and random access memory (RAM) 152. A basic input/output system 153 (BIOS), containing the basic routines that help to transfer information between elements within computer 120, such as during start-up, is typically stored in ROM 151. RAM 152 typically contains data and/or program modules that are immediately accessible to and/or presently being operated on by processing unit 140. By way of example, and not limitation, FIG. 4 illustrates operating system 54, application programs 155, other program modules 156, and program data 157.

The computer 120 may also include other removable/non-removable volatile/nonvolatile computer storage media. By way of example only, FIG. 4 illustrates a hard disk drive 161 that reads from or writes to non-removable, nonvolatile magnetic media, a magnetic disk drive 171 that reads from or writes to a removable, nonvolatile magnetic disk 172, and an optical disk drive 175 that reads from or writes to a removable, nonvolatile optical disk 176 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 161 is typically connected to the system bus 141 through a non-removable memory interface such as interface 160, and magnetic disk drive 171 and optical disk drive 175 are typically connected to the system bus 141 by a removable memory interface, such as interface 170.

The drives and their associated computer storage media discussed above and illustrated in FIG. 4, provide storage of computer readable instructions, data structures, program modules and other data for the computer 120. In FIG. 4, for example, hard disk drive 161 is illustrated as storing operating system 164, application programs 165, other program modules 166, and program data 167. Note that these components can either be the same as or different from operating system 154, application programs 155, other program modules 156, and program data 157. Operating system 164, application programs 165, other program modules 166, and program data 167 are given different numbers here to illustrate that, at a minimum, they are different copies.

A user may enter commands and information into the computer 120 through input devices such as a keyboard 182, a microphone 183, and a pointing device 181, such as a mouse, trackball or touch pad. Other input devices (not shown) may include a joystick, game pad, satellite dish, scanner, or the like. These and other input devices are often connected to the processing unit 140 through a user input interface 180 that is coupled to the system bus, but may be connected by other interface and bus structures, such as a parallel port, game port or a universal serial bus (USB). A monitor 184 or other type of display device is also connected to the system bus 141 via an interface, such as a video interface 185. In addition to the monitor, computers may also include other peripheral output devices such as speakers 187 and printer 186, which may be connected through an output peripheral interface 188.

The computer 120 may operate in a networked environment using logical connections to one or more remote computers, such as a remote computer 194. The remote computer 194 may be a personal computer, a hand-held device, a server, a router, a network PC, a peer device or other common network node, and typically includes many or all of the elements described above relative to the computer 120. The logical connections depicted in FIG. 4 include a local area network (LAN) 191 and a wide area network. (WAN) 193, but may also include other networks. Such networking environments are commonplace in offices, enterprise-wide computer networks, intranets and the Internet.

When used in a LAN networking environment, the computer 120 is connected to the LAN 191 through a network interface or adapter 190. When used in a WAN networking environment, the computer 120 typically includes a modem 192 or other means for establishing communications over the WAN 193, such as the Internet. The modem 192, which may be internal or external, may be connected to the system bus 141 via the user input interface 180, or other appropriate mechanism. In a networked environment, program modules depicted relative to the computer 120, or portions thereof, may be stored in the remote memory storage device. By way of example, and not limitation, FIG. 4 illustrates remote application programs 195 as residing on remote computer 194. It will be appreciated that the network connections shown are exemplary and other means of establishing a communications link between the computers may be used.

FIG. 5 illustrates architecture 200 for web based recognition as can be embodied in the present invention. Generally, information stored in a web server 202 can be accessed through, mobile, device 30 (which herein also represents other forms of computing devices having a display screen, a microphone, a camera, a touch sensitive panel, etc., as required based on the form of input), or through phone 80 wherein information is requested audibly or through tones generated by phone 80 in response to keys depressed and wherein information from web server 202 is provided only audibly back to the user.

More importantly though, architecture 200 is unified in that whether information is obtained through device 30 or phone 80 using speech recognition, a single recognition server 204 can support either mode of operation. In addition, architecture 200 operates using an extension of well-known mark-up languages (e.g. HTML, XHTML, cHTML, XML, WML, and the like). Thus, information stored on web server 202 can also be accessed using well-known GUI methods found in these mark-up languages. By using an extension of well-known mark-up languages, authoring on the web server 202 is easier, and legacy applications currently existing can be also easily modified to include voice recognition.

Generally, device 30 executes HTML pages, scripts, or the like, provided by web server 202. When voice recognition is required, by way of example, speech data, which can be digitized audio signals or speech features wherein the audio signals have been preprocessed by device 30 as discussed above, are provided to recognition server 204 with an indication of a grammar or language model to use during speech recognition. The implementation of the recognition server 204 can take many forms, one of which is illustrated, but generally includes a recognizer 211. The results of recognition are provided back to device 30 for local rendering if desired or appropriate. Upon compilation of information through recognition and any graphical user interface if used, device 30 sends the information to web server 202 for further processing and receipt of further HTML pages/scripts, if necessary.

As illustrated in FIG. 5, device 30, web server 202 and recognition server 204 are commonly connected, and separately addressable, through a network 205, herein a wide area network such as the Internet. It therefore is not necessary that any of these devices be physically located adjacent each other. In particular, it is not necessary that web server 202 includes recognition server 204. In this manner, authoring at web server 202 can be focused on the application to which it is intended without the authors needing to know the intricacies of recognition server 204. Rather, recognition server 204 can be independently designed and connected to the network 205, and thereby, be updated and improved without further changes required at web server 202. As discussed below, web server 202 can also include an authoring mechanism that can dynamically generate client-side markups and scripts. In a further embodiment, the web server 202, recognition server 204 and client 30 may be combined depending on the capabilities of the implementing machines. For instance, if the client comprises a general purpose computer, e.g. a personal computer, the client may include the recognition server 204. Likewise, if desired, the web server 202 and recognition server 204 can be incorporated into a single machine.

An aspect of the present invention is a method for processing input data in a client/server system that includes receiving from a server a markup language page having extensions configured to obtain input data from a user of a client device; executing the markup language page on the client device; transmitting input data (indicative of speech, DTMF, handwriting, gestures or images obtained from the user) and an associated grammar to a recognition server remote from the client; and receiving a recognition result from the recognition server at the client. Another aspect is a computer readable medium having a markup language for execution on a client device in a client/server system, the markup language having an instruction indicating a grammar to associate with input data entered through the client device.

Access to web server 202 through phone 80 includes connection of phone 80 to a wired or wireless telephone network 208, that in turn, connects phone 80 to a third party gateway 210. Gateway 210 connects phone 80 to a telephony voice browser 212. Telephony voice browser 212 includes a media server 214 that provides a telephony interface and a voice browser 216. Like device 30, telephony voice browser 212 receives HTML pages/scripts or the like from web server 202. More importantly though, the HTML pages/scripts are of the form similar to HTML pages/scripts provided to device 30. In this manner, web server 202 need not support device 30 and phone 80 separately, or even support standard GUI clients separately. Rather, a common mark-up language can be used. In addition, like device 30, voice recognition from audible signals transmitted by phone 80 are provided from voice browser 216 to recognition server 204, either through the network 205, or through a dedicated line 207, for example, using TCP/IP. Web server 202, recognition server 204 and telephone voice browser 212 can be embodied in any suitable computing environment such as the general purpose desktop computer illustrated in FIG. 4.

However, it should be noted that if DTMF recognition is employed, this form of recognition would generally be performed at the media server 214, rather than at the recognition server 204. In other words, the DTMF grammar would be used by the media server.

As indicated above, one aspect of the present invention includes extension of mark-up languages such as HTML, XHTML cHTML, XML, WML or with any other SGML-derived markup to include controls and/or objects that provide recognition in a client/server architecture. In this manner, authors can leverage all the tools and expertise in these mark-up languages that are the predominant web development platform used in such architectures.

Generally, controls and/or objects can include one or more of the following functions: recognizer controls and/or objects for recognizer configuration, recognizer execution and/or post-processing; synthesizer controls and/or objects for synthesizer configuration and prompt playing; grammar controls and/or objects for specifying input grammar resources; and/or binding controls and/or objects for processing recognition results. The extensions are designed to be a lightweight markup layer, which adds the power of an audible, visual, handwriting, etc. interface to existing markup languages. As such, the extensions can remain independent of: the high-level page in which they are contained, e.g. HTML; the low-level formats which the extensions used to refer to linguistic resources, e.g. the text-to-speech and grammar formats; and the individual properties of the recognition and speech synthesis platforms used in the recognition server 204.

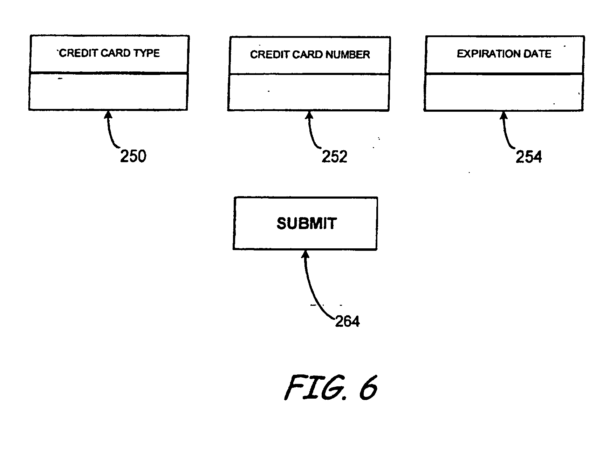

Before describing mark-up languages having controls and/or objects suited for recognition, it may be helpful to examine a simple GUI example herein embodied with the HTML mark-up language. Referring to FIG. 6, a simple GUI interface comprises submission of credit card information to the web server to complete an on-line sale. In this example, the credit card information includes a field 250 for entry of the type of credit card being used, for example, Visa, MasterCard or American Express. A second field 252 allows entry of the credit card number, while a third field 254 allows entry of the expiration date. Submit button 264 is provided to transmit the information entered in fields 250, 252 and 254.

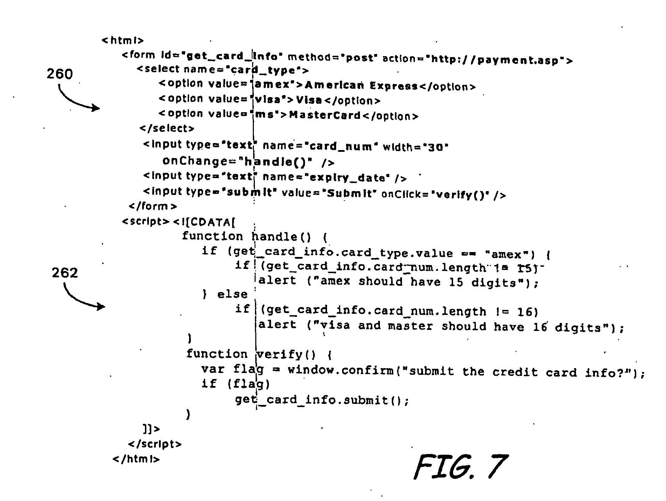

FIG. 7 illustrates the HTML code for obtaining the foregoing credit card information from the client. Generally, as is common in these forms of mark-up languages, the code includes a body portion 260 and a script portion 262. The body portion 260 includes lines of code indicating the type of action to be performed, the form to use, the various fields of information 250, 252 and 254, as well as a code for submit button 264 (FIG. 6). This example also illustrates eventing support and embedded script hosting, wherein upon activation of the submit button 264, a function "verify" is called or executed in script portion 262. The "verify" function ascertains whether the card number length for each of the credit cards (Visa, MasterCard and American Express) is of the proper length.

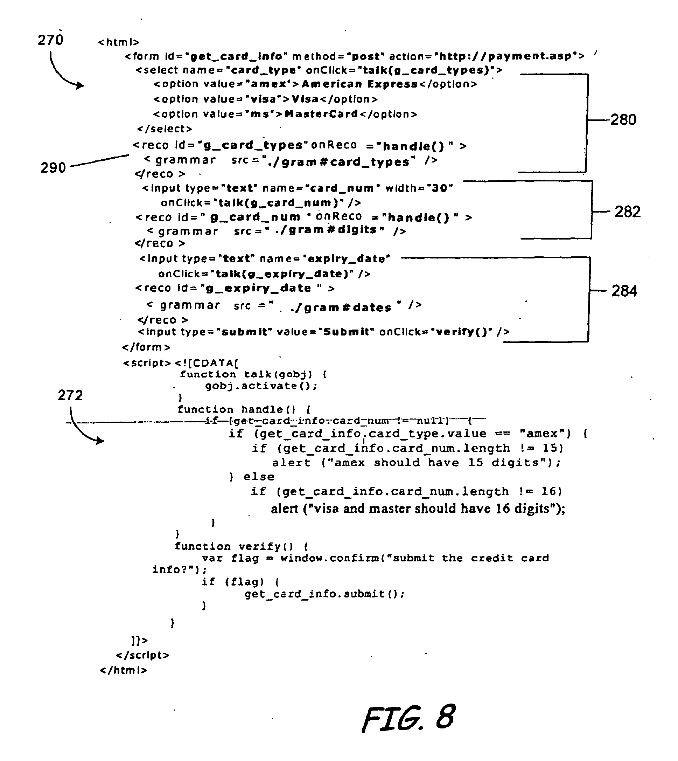

FIG. 8 illustrates a client markup that generates the same GUI of FIG. 6 for obtaining credit card information to be provided to web server 204 using speech recognition. Although speech recognition will be discussed below with respect to FIGS. 8-14, it should be understood that the techniques described can be similarly applied in handwriting recognition, gesture recognition and image recognition.

Generally, the extensions (also commonly known as "tags") are a small set of XML elements, with associated attributes and DOM object properties, events and methods, which may be used in conjunction with a source markup document to apply a recognition interface, DTMF or call control to a source page. The extensions formalities and semantics are independent of the nature of the source document, so the extensions can be used equally effectively within HTML, XHTML, cHTML, XML, WML, or with any other SGML-derived markup. The extension follow the document object model wherein new functional objects or elements, which can be hierarchical, are provided. Each of the elements are discussed in detail in the Appendix, but generally the elements can include attributes, properties, methods, events and/or other "child" elements.

At this point, it should also be noted that the extensions may be interpreted in two different "modes" according to the capabilities of the device upon which the browser is being executed on. In a first mode, "object mode", the full capabilities are available. The programmatic manipulation of the extensions by an application is performed by whatever mechanisms are enabled by the browser on the device, e.g. a JScript interpreter in an XHTML browser, or a WMLScript interpreter in a WML browser. For this reason, only a small set of core properties and methods of the extensions need to be defined, and these manipulated by whatever programmatic mechanisms exist on the device or client side. The object mode provides eventing and scripting and can offer greater functionality to give the dialog author a much finer client-side control over speech interactions. As used herein, a browser that supports full event and scripting is called an "uplevel browser". This form of a browser will support all the attributes, properties, methods and events of the extensions. Uplevel browsers are commonly found on devices with greater processing capabilities.

The extensions can also be supported in a "declarative mode". As used herein, a browser operating in a declarative mode is called a "downlevel browser" and does not support full eventing and scripting capabilities. Rather, this form of browser will support the declarative aspects of a given extension (i.e. the core element and attributes), but possibly not all the DOM (document object model) object properties, methods and events. This mode employs exclusively declarative syntax, and may further be used in conjunction with declarative multimedia synchronization and coordination mechanisms (synchronized markup language) such as SMIL (Synchronized Multimedia Integration Language) 2.0. Downlevel browsers will typically be found on devices with limited processing capabilities.

At this point though, a particular mode of entry should be discussed. In particular, use of speech recognition in conjunction with at least a display and, in a further embodiment, a pointing device as well to indicate the fields for data entry is particularly useful. Specifically, in this mode of data entry, the user is generally under control of when to select a field and 20 provide corresponding information. For instance, in the example of FIG. 6, a user could first decide to enter the credit card number in field 252 and then enter the type of credit card in field 250 followed by the expiration date in field 254. Likewise, the user could return back to field 252 and correct an errant entry, if desired. When combined with speech recognition as described below, an easy and natural form of navigation is provided. As used herein, this form of entry using both a screen display allowing free form selection of fields and voice recognition is called "multi-modal".

Referring back to FIG. 8, an example of HTML mark-up language code is illustrated. Like the HTML code illustrated in FIG. 7, this code also includes a body portion 270 and a script portion 272. Also like the code illustrated in FIG. 7, the code illustrated in FIG. 8 includes indications as to the type of action to perform as well as the location of the form. Entry of information in each of the fields 250, 252 and 254 is controlled or executed by code portions 280, 282 and 284, respectively. Referring first to code portion 280, on selection of field 250, for example, by use of stylus 33 of device 30, the event "onClick" is initiated which calls or executes function "talk" in script portion 272. This action activates a grammar used for speech recognition that is associated with the type of data generally expected in field 250. This type of interaction, which involves more than one technique of input (e.g. voice and pen-click/roller) is referred as "multimodal".

It should be noted that the speech recognition extensions exemplified in Fig. 8 are not intended to have a default visual representation on the browser of the client, since for many applications it is assumed that the author will signal the speech enablement of the various components of the page by using application-specification graphical mechanisms in the source page. Nevertheless, if visual representations are desired, the extensions can so be modified.

Referring now back to the grammar, the grammar is a syntactic grammar such as but not limited to a context-free grammar, a N-grammar or a hybrid grammar. (Of course, DTMF grammars, handwriting grammars, gesture grammars and image grammars would be used when corresponding forms of recognition are employed. As used herein, a "grammar" includes information for performing recognition, and in a further embodiment, information corresponding to expected input to be entered, for example, in a specific field) A new control 290 (herein identified as "reco"), comprising a first extension of the mark-up language, includes various elements, two of which are illustrated, namely a grammar element "grammar" and a "bind" element. Generally, like the code downloaded to a client from web server 202, the grammars can originate at web server 202 and be downloaded to the client and/or forwarded to a remote server for speech processing. The grammars can then be stored locally thereon in a cache. Eventually, the grammars are provided to the recognition server 204 for use in recognition. The grammar element is used to specify grammars, either inline or referenced using an attribute.

Upon receipt of recognition results from recognition server 204 corresponding to the recognized speech, handwriting, gesture, image, etc., syntax of reco control 290 is provided to receive the corresponding results and associate it with the corresponding field, which can include rendering of the text therein or display 34. In the illustrated embodiment, upon completion of speech recognition with the result sent back to the client, it deactivates the reco object and associates the recognized text with the corresponding field. Portions 282 and 284 operate similarly wherein unique reco objects and grammars are called for each of the fields 252 and 254 and upon receipt of the recognized text is associated with each of the fields 252 and 254. With respect to receipt of the card number field 252, the function "handle" checks the length of the card number with respect to the card type in a manner similar to that described above with respect to FIG. 7.

Generally, use of speech recognition in conjunction with architecture 200 and the client side mark-up language occurs as follows: first, the field that is associated with the speech to be given is indicated. In the illustrated embodiment, the stylus 33 is used; however, it should be understood that the present invention is not limited to use of the stylus 33 wherein any form of indication can be used such as buttons, a mouse pointer, rotatable wheels or the like. Corresponding event such as "onClick" can be provided as is well known with use of visual mark-up languages. It should be understood that the present invention is not limited to the use of the "onClick" event to indicate the start of voice, handwriting, gesture, etc commands. Any available GUI event can be used for the same purpose as well, such as "onSelect'. In one embodiment, such eventing is particularly useful for it serves to indicate both the beginning and/or end of the corresponding speech. It should also be noted that the field for which the speech is directed at can be- indicated by the user as well as programs running on the browser that keep track of user interactions.

At this point, it should be stated that,different scenarios of speech recognition require different behaviors and/or outputs from recognition server 204. Although the starting of the recognition process is standard in all cases - an explicit start () call from uplevel browsers, or a declarative <reco> element in downlevel browsers - the means for stopping speech recognition may differ.

In the example above, a user in a multimodal application will control input into the device by, for example, tapping and holding on a pressure sensitive display. The browser then uses a GUI event, e.g. "pen-up", to control when recognition should stop and then returns the corresponding results. However, in a voice-only scenario such as in a telephone application (discussed below) or in a hands-free application, the user has no direct control over the browser, and the recognition server 204 or the client 30, must take the responsibility of deciding when to stop recognition and return the results (typically once a path through the grammar has been recognized). Further, dictation and other scenarios where intermediate results need to be returned before recognition is stopped (also known as "open microphone") not only requires an explicit stop function, but also needs to return multiple recognition results to the client 30 and/or web server 202 before the recognition process is stopped.

In one embodiment, the Reco element can include a "mode" attribute to distinguish the following three modes of recognition, which instruct the recognition server 204 how and when to return results. The return of results implies providing the "onReco" event or activating the "bind" elements as appropriate. In one embodiment, if the mode is unspecified, the default recognition mode can be "automatic" .

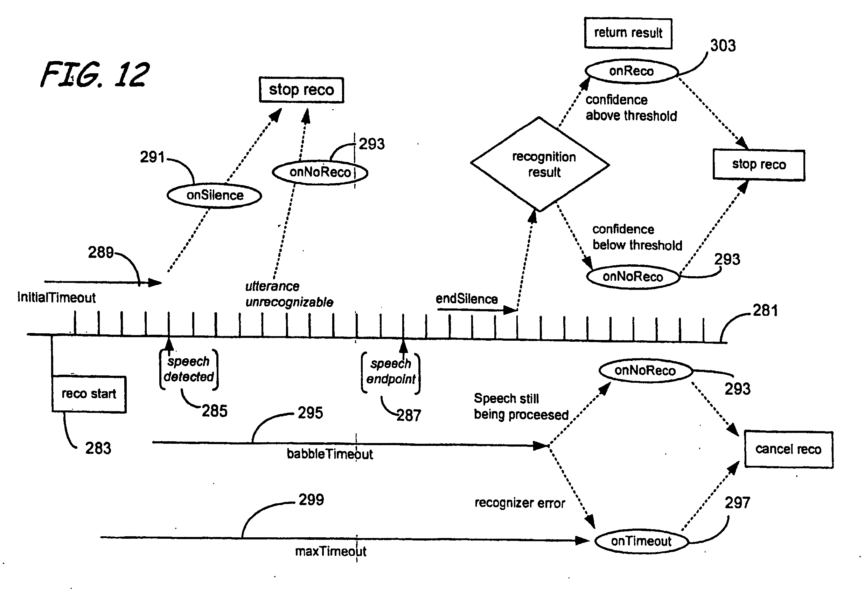

FIG. 12 is a pictorial representation of operation of the "automatic" mode for speech recognition (similar modes, events, etc. can be provided for other forms of recognition). A timeline 281 indicates when the recognition server 204 is directed to begin recognition at 283, and where the recognition server 204 detects speech at 285 and determines that speech has ended at 287.

Various attributes of the Reco element control behavior of the recognition server 204. The attribute "initialTimeout" 289 is the time between the start of recognition 283 and the detection of speech 285. If this time period is exceeded, "onSilence" event 291 will be provided from the recognition server 204, signaling that recognition has stopped. If the recognition server 204 finds the utterance to be unrecognizable, an "onNoReco" event 293 will be issued, which will also indicate that recognition has stopped.

Other attributes that can stop or cancel recognition include a "babbleTimeout" attribute 295, which is the period of time in which the recognition server 204 must return a result after detection of speech at 285. If exceeded, different events are issued according to whether an error has occurred or not. If the recognition server 204 is still processing audio, for example, in the case of an exceptionally long utterance, the "onNoReco" attribute 293 is issued. However, if the "babbleTimeout" attribute 295 is exceeded for any other reason, a recognizer error is more likely and an "onTimeout" event 297 is issued. Likewise, a "maxTimeout" attribute 299 can also be provided and is for the period of time between the start of recognition 283 and the results returned to the client 30. If this time period is exceeded, the "onTimeout" event 297 is issued.

If, however, a time period greater than an "endSilence" attribute 301 is exceeded, implying that recognition is complete, the recognition server 204 automatically stops recognition and returns its results. It should be noted that the recognition server 204 can implement a confidence measure to determine if the recognition results should be returned. If the confidence measure is below a threshold, the "onNoReco" attribute 293 is issued, whereas if the confidence measure is above the threshold a "onNoReco" attribute 303 and the results of recognition are issued. FIG. 12 thereby illustrates that in "automatic mode" no explicit stop () calls are made.

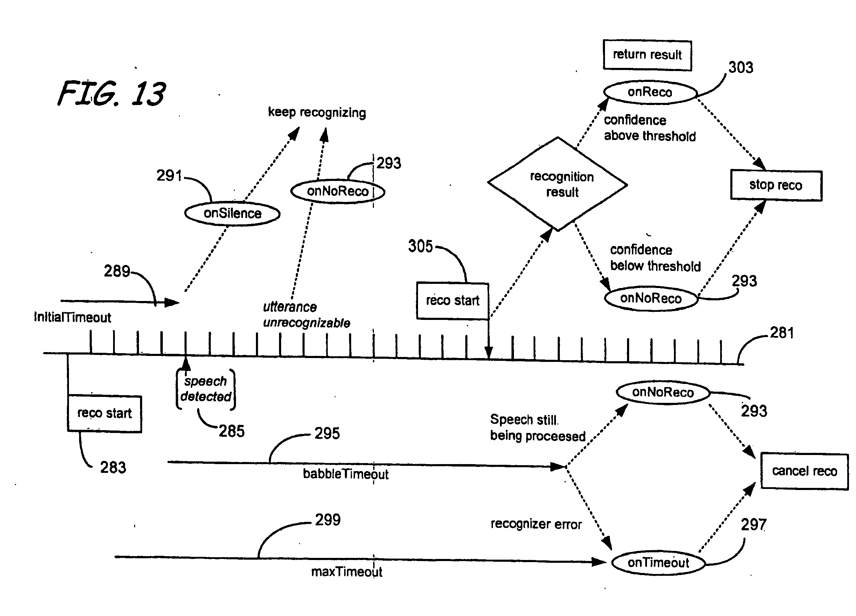

FIG. 13 pictorially illustrates "single mode" operation of the recognition server 204. Attributes and events described above with respect to the "automatic mode" are applicable and are so indicated with the same reference numbers. However, in this mode of operation, a stop () call 305 is indicated on timeline 281. The stop () call 305 would correspond to an event such as "pen-up" by the user. In this mode of operation, the return of a recognition result is under the control of the explicit stop () call 305. As with all modes of operation, the "onSilence" event 291 is issued if speech is not detected within the "initialTimeout" period 289, but for this mode of operation recognition is not stopped. Similarly, a "onNoReco" event 293 generated by an unrecognizable utterance before the stop () call 305 does not stop recognition. However, if the time periods associated with the "babbleTimeout" attribute 295 or the "maxTimeout" attribute 299 are exceeded recognition will stop.

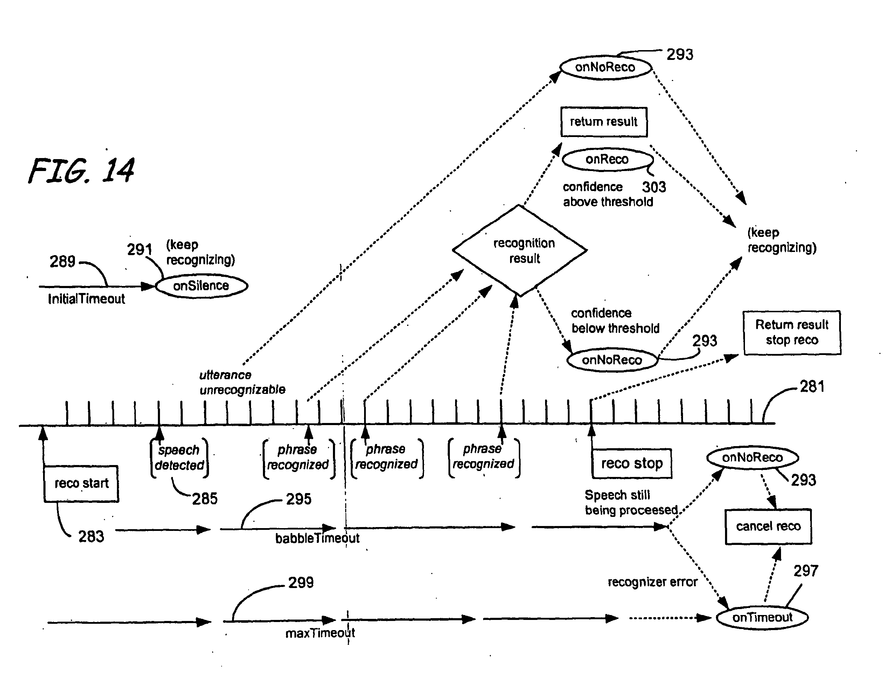

FIG. 14 pictorially illustrates "multiple mode" operation of the recognition server 204. As indicated above, this mode of operation is used for an "open-microphone" or in a dictation scenario. Generally, in this mode of operation, recognition results are returned at intervals until an explicit stop ()_ call 305 is received or the time, periods associated with the "babbleTimeout" attribute 295 or the "maxTimeout" attribute 299 are exceeded. It should be noted, however, that after any "onSilence" event 291, "onReco" event 303, or "onNoReco" event 293, which does not stop recognition, timers for the "babbleTimeout" and "maxTimeout" periods will be reset.

Generally, in this mode of operation, for each phrase that is recognized, a "onReco" event 303 is issued and the result is returned until the stop () call 305 is received. If the "onSilence" event 291 is issued due to an unrecognizable utterance these events are reported but recognition will continue.

As indicated above, the associated reco object or objects for the field is activated, which includes providing at least an indication to the recognition server 204 of which grammar to use. This information can accompany the speech data recorded at the client 30 and sent to the recognition server 204. As indicated above, speech data can comprise streaming data associated with the speech entered by the user, or can include pre-processed speech data indicating speech features that are used during speech recognition. In a further embodiment, client side processing can also include normalization of the speech data such that the speech data received by the recognition server 204 is relatively consistent from client to client. This simplifies speech processing of the recognition server 204 thereby allowing easier scalability of the recognition server 204 since the recognition server can be made stateless with respect to the type of client and communication channel.

Upon receipt of the recognition result from the recognition server 204, the recognition result is associated with the corresponding field, and client-side verification or checking can be performed, if desired. Upon completion of all of the fields associated with the code currently rendered by the client, the information is sent to web server 202 for application processing. From the foregoing, it should be clear that although the web server 202 has provided code or pages/scripts suitable for recognition to the client 30, the recognition services are not performed by the web server 202, but rather by the recognition server 204. The invention, however, does not preclude an implementation where the recognition server 204 is collocated with the web server 202, or the recognition server 204 is part of the client 30. In other words, the extensions provided herein are beneficial even when the recognition server 204 is combined with the web server 202 or client 30 because the extension provide a simple and convenient interface between these components.

While not shown in the embodiment illustrated in FIG. 8, the reco control can also include a remote audio object (RAO) to direct the appropriate speech data to the recognition server 204. The benefit for making RAO a plug-in object is to allow a different one for each different device or client because the sound interface may likely be different. In addition, the remote audio object can allow multiple reco elements to be activated at the same time.

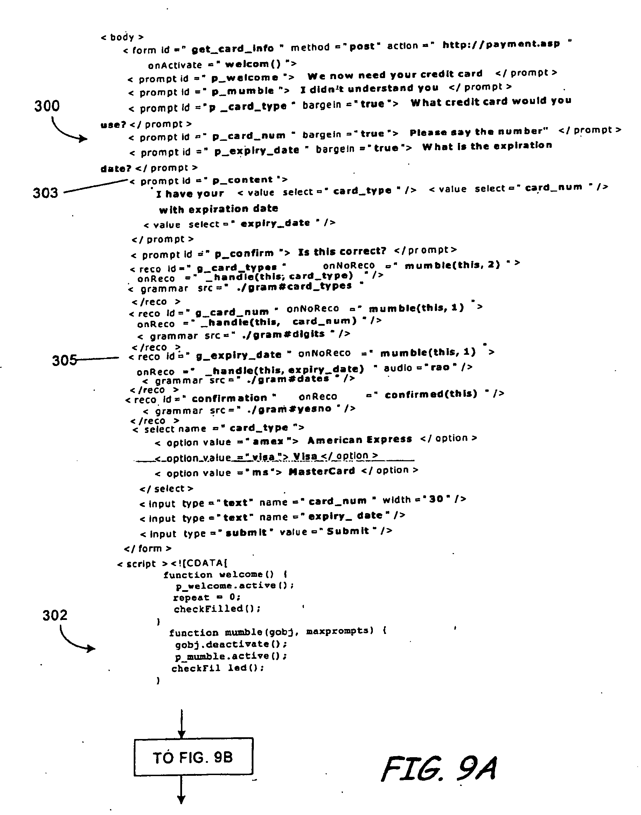

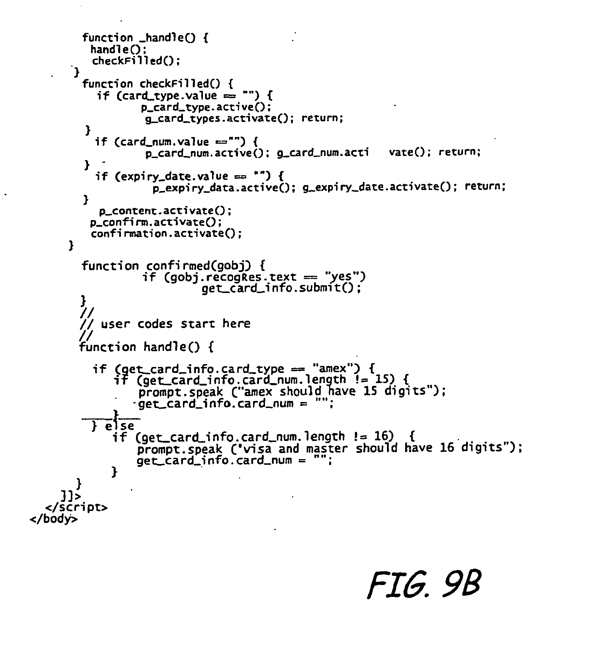

FIGS. 9A and 9B illustrate a voice-only mark-up language embodied herein as HTML with pages/scripts. As clearly illustrated, the code also includes a body portion 300 and a script portion 302. There is another extension of the markup language - prompt control 303 which include attributes like, bargein. However, speech recognition is conducted differently in the voice-only embodiment of FIGS. 9A and 9B. The process is now controlled entirely by the script function "checkFilled" which will determine the unfilled fields and activate correspondent prompt and new objects. Nevertheless, grammars are activated using the same context as that described above with respect to FIG. 8, wherein speech data and the indication of the grammar to use are provided to the recognition server 204. Likewise, the output received from the recognition server 204 is associated with fields of the client (herein telephony voice browser 212).

Other features generally unique to voice-only applications is an indication to the user when speech has not been recognized. In multimodal applications such as Fig 8, 'onNoReco' simply puts null value on the displayed field to indicate no-recognition, thus no further action is required. In the voice-only embodiment, "onNoReco" 305 calls or executes a function "mumble", which forwards a word phrase to recognition server 204, that in turn, is converted to speech using a suitable text-to-speech system 307 (FIG. 5). Recognition server 204 returns an audio stream to the telephony voice browser 212, which in turn, is transmitted to phone 80 to be heard by the user. Likewise, other waveform prompts embodied in the voice-only application are also converted, when necessary, to an audio stream by recognition server 204.

It should be noted that in this example after playing the welcome prompt via function "welcome", function "checkFilled" prompts the user for each of the fields and activates the appropriate grammars, including repeating the fields that have been entered and confirming that the information is correct, which includes activation of a "confirmation" grammar. Note in this embodiment, each of the reco controls is initiated from the script portion 302, rather than the body portion of the previous example.

As another aspect of the present invention, the markup language executable on different types of client devices (e.g. multimodal and non-display, voice input based client devices such as a telephone) unifies at least one of speech-related events, GUI events and telephony events for a web server interacting with each of the client devices. This is particular advantageous for it allows significant portions of the web server application to be written generically or independent of the type of client device. An example is illustrated in FIGS. 8 and 9A, 9B with the "handle" functions.

Although not shown in Fig 9, there are two more extensions to the markup language to support telephony functionality - DTMF (Dual Tone Modulated Frequency) control and call control elements or objects. DTMF works similarly to reco control. It specifies a simple grammar mapping from keypad string to text input. For example, "1" means grocery department, "2" mean pharmacy department, etc. On the other hand, call object deals with telephony functions, like call transfer and 3^{rd} party call. The attributes, properties, methods and events are discussed in detail in the Appendix.

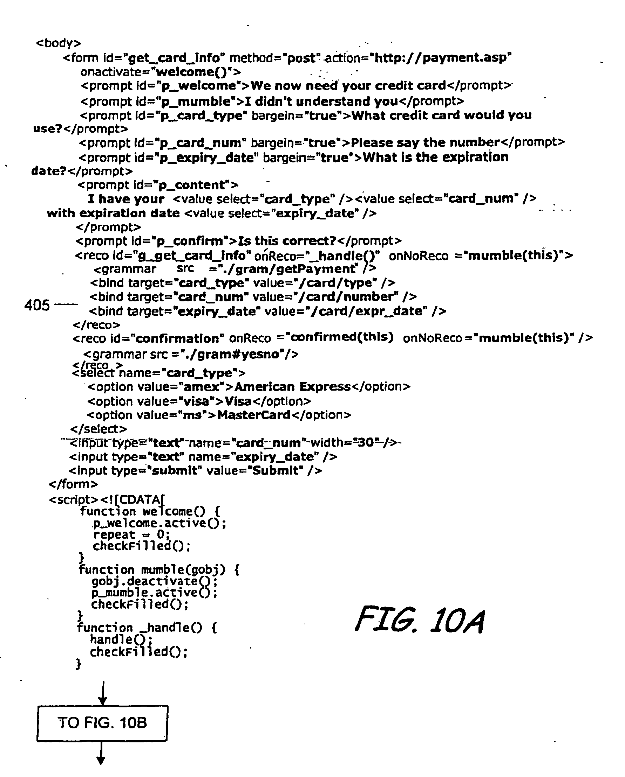

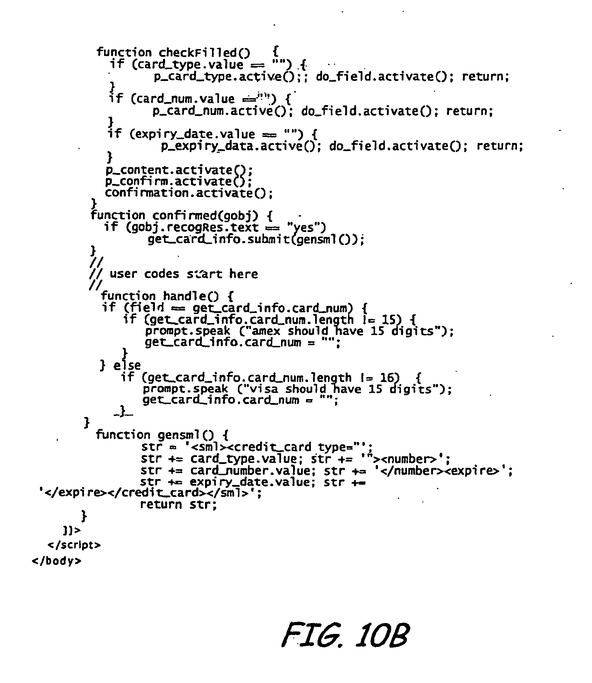

FIGS. 10A and 10B illustrate yet another example of a mark-up language suitable for a voice-only mode of operation. In this embodiment, the user is allowed to have some control over when information is entered or spoken. In' other words, although the system may initiate or otherwise direct the user to begin speaking, the user may offer more information than what was initially asked for. This is an example of "mixed initiative". Generally, in this form of dialog interaction, the user is permitted to share the dialog initiative with the system. Besides the example indicated above and discussed below in detail where the user provides more information then requested by a prompt, the user could also switch tasks when not prompted to do so.

In the example of FIGS 10A and 10B, a grammar identified as "do_field" includes the information associated with the grammars "g_card_types", "g_card_num" and "g_expiry date". In this example, telephony voice browser 212 sends speech data received from phone 80 and an indication to use the "do_field" grammar to recognition server 204 upon receipt of the recognized speech as denoted by "onReco"', the function "handle" is called or executed that includes associating the values for any or all of the fields recognized from the speech data. In other words, the result obtained from the recognition server 204 also includes indications for each of the fields. This information is parsed and associated with the corresponding fields according to binding rules specified in 405. As indicated in FIG. 5, the recognition server 204 can include a parser 309.

From FIGS. 7, 8, 9A, 9B, 10A and 10B, a very similar web development framework is used. Data presentation is also very similar in each of these cases. In addition, the separation of data presentation and flow controls allow maximum reusability between different applications (system initiative and mixed-initiative), or different modalities (GUI web-based, voice-only and multimodal). This also allows a natural extension from voice-only operation through a telephone to a multimodal operation when phones include displays and functionalities similar to device 30. Appendix A provides further details of the controls and objects discussed above.

As indicated above, uplevel browsers can use scripting in order to perform various needs such as invoking the function "handle" in the above examples to assign the recognition results. In the embodiments described above and as further described in Appendix A at 2.1.2, the "bind" element will parse the recognition results and assign values wherein the "bind" element is a subelement or child element of the "reco" element.

Although scripting can be useful, it is believed by many not to be always the best form of browser implementation due, for example, to security concerns. Therefore, in yet another embodiment or aspect of the present invention, the "bind" element is a high level element (similar to "reco") and is provided with other richer properties, which can in effect mimic scripting without scripting per se.

Without using scripting or without using the aspect of the present invention discussed below, some of the capabilities discussed below such as sophisticated dialog effects could only be accomplished by submitting a page back to the web server 202, executing the application logic thereon to generate a new page, and sending the page back to the client device. This aspect of the present invention allows a programmer to invoke methods on objects of the page without incurring a server roundtrip.

In the embodiments described above, the "bind" element has only the attributes "TargetElement" and "TargetAttribute" for assigning recognition results to a field in the form or web page. In a further embodiment, the "bind" element also includes a' "TargetMethod", which is added for object method invocation. The use and capability of "TargetMethod" is the principal technique for mimicking scripting. For example, the following syntax can be used to invoke the "X" method of the object "OBJ1":
<bind TargetElement = "OBJ1" TargetMethod = "X"...>.

Note that although the examples shown here follow the HTML/XHTML event syntax, those skilled at art should find it straightforward to generalize the <bind> usage to other eventing mechanisms, including but not limited to W3C Document Object Model Level 2 or Level 3 eventing standard, ECMA Common language Infrastructure (CLI) event model, Java programming language event model, W3C Synchronous Multimedia Integration Language (SMIL), and the upcoming W3C XML Events standard proposal.

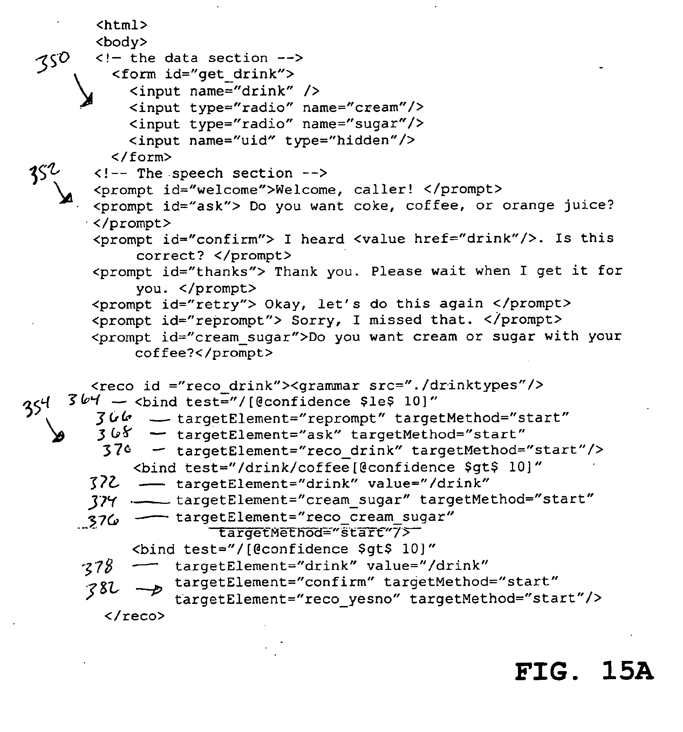

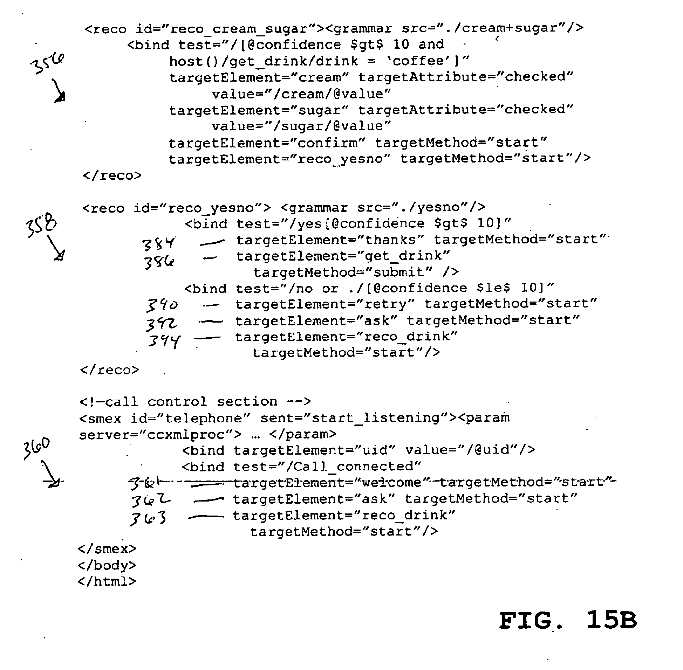

FIGS. 15A and 15B are a page of mark-up language executable on a client, particularly a downlevel browser. In this example, the user is asked through audio prompts for a drink. The system then confirms what drink was ordered. Depending on the recognition results, the "bind" element guides the execution using declared logic. When the drink is confirmed, the form is submitted back to the web server 202, all without scripting.

Generally, the mark-up example of FIGS. 15A and 15B includes a data section 350, a speech section 352 and user interface sections 354, 356 and 358. Section 354 receives the recognition result from the general inquiry as to what drink the user would like and directs interactive recognition flow to either reprompting, inquiring as to whether cream or sugar is needed, or confirming the drink ordered. In particular, section 356 receives a recognition result when cream or sugar is also ordered. Section 358 receives the recognition result for confirmation of the drink. Section 360 is a call control section employing a new messaging object "SMEX", which is discussed further below.

As indicated above, the "bind" element of this aspect of the present invention includes object method invocation, which will initiate user interaction in the example of FIGS. 15A and 15B by playing the "welcome" prompt when the "start" method on the "welcome" object is executed at 361.

The user is then asked "Do you want coke, coffee or orange juice?" by executing the "start" method of the "asked" object at 362. Recognition is then performed by invoking the "start" method on the recognition "reco_ drink" object at 363.

The mark-up of section 354 is then executed wherein the grammar used by the recognition server 204 is provided by the Xpath statement "./drink types". Note that although this example utilizes W3C Xpath language, those skilled at art should find it straightforward to extend the concept to other standard languages, including but not limited to W3C XML Query Language (XQL). As specified by the "bind" element 364, if the recognition result received from the recognition server 204 has a confidence score less than 10, the prompt object "reprompt" is executed at 366, followed by the prompt object "ask" 368, at which point, the recognition object "reco_drink" is reinitiated at 370. If the recognition result returned is "coffee" having a confidence greater than 10, the field "drink" is assigned the value of the recognition result at 372 and the user is then prompted as to whether or not he/she would like cream or sugar by the prompt object "cream_sugar" at 374. The recognition object "reco_cream_sugar" in section 356 is then invoked at 376. Otherwise, if the confidence score of the recognition result is greater than 10, but not coffee, the field drink is then again assigned at 378. Confirmation of the recognition result is provided at 380 by executing the prompt object "confirm", followed by invocation of the recognition object "reco_yesno" in section 358 at 382. If the user answers "yes" with a confidence score greater than 10, the prompt object "thanks" is played at 384 and then the form is then submitted at 386. Otherwise, if the user answers "no" or the confidence score of the recognition result is less than 10, the prompt object "retry" is executed at 390, once again followed by the prompt object "ask" being executed at 392, and invocation of the "reco_drink" recognition object at 394.

From the foregoing example, the "bind" element allows multiple invocations of methods as indicated in sections 354, 356 or 358. If desired, multiple assignments of the recognized result can also be declared. In the embodiment illustrated, when multiple assignments and method invocations are declared, they are executed in the document order.

In a further embodiment, a convention for passing method arguments is also provided. In other words, some methods may require a list of arguments. This is achieved by using "arg" subelement. For example, given the following mark-up:
<bind TargetElement = "OBJ" TargetMethod = "F"><arg>X</arg><arg>Y</arg></bind> is equivalent to "OBJ.F(X,Y)", or "OBJ" is an object that has a method "F" with parameters or arguments "X" and "Y".

The "bind" element can also include an "event" attribute, which declares the bind element is intended for which event. For example, the mark-up:
<bind event = "onNoReco" = TargetElement = "prompt1" TargetMethod = "start"/> means when the "onNoReco" event is sent, the method "start" of the object "prompt1" will be invoked. To be consistent with use of the "bind" element as a child element of the "Reco" element as described above for example with respect to FIG. 8, the default attribute for the "bind" element is "onReco".

The "bind" element as a high level element can include any of the events specified in section 2.4 of the Appendix. In addition, the "bind" element can also include a "onError" event having a "status" attribute that can be accessed and used to direct program flow. To the extent other events of the "bind" element have "status" attributes, these can be accessed as well.

In addition to checking the conditions of the recognition result, the current document or page being executed can also be checked as well. In particular, both the "test" and the "value" attribute can be extended to include a "host" primitive that refers to the root node of the containing document. For example, referring back to FIGS.15A, 15B, the example contained therein has additional logic at section 354 to ask whether the user wants cream or sugar when he/she asks for coffee. The flags for adding cream or sugar and thus invocation of section 356, will be turned on only if the drink field is "coffee" as specified by the markup "host()/get_drink/drink='coffee'".

It should also be noted, the "bind" element is not only applicable to recognition results from the speech server 204 and receive or assign values in the document, but also to message objects (herein denoted by "smex", for example, from applications running on the client device. In the example of FIGS. 15A and 15B, the page is executed when a telephony application running on the client device detects a call. In section 360, the "bind" element executes or plays the "welcome" prompt and begins recognition by executing the "reco_drink" object, when the message "/Call_connected" is received. Like the recognition results received from the speech server 204, the messages received can vary greatly. Some of the messages are well-defined in order to initiate desired program flow. Others can be received and processed (e.g. parsed just like received recognition results of the recognition server. For example, this allows the markup to be used like a natural language parser of text from a keyboard. The reco element in Appendix A includes a property for performing this function. Likewise, the prompt element can be used to provide a textual message for dynamic content or audio wave files by using the property "innertext", also further explained in the Appendix A. Eventing can be similar to eventing for recognition results. For example, eventing can include "onReceived", which gets sent when the message source (e.g. application running on the client device) has a message available for the browser.

The "smex" or message object thus allows the markup tags discussed herein to be extended to other components or applications running on the client device. As another example, the message object can be used to communicate to a TTY component for the hearing impaired running on the client device. Rather than using speech recognition, the TTY component will provide a message of what the user has typed. This message is then used as if a recognition result was received from the recognition server wherein the message can be parsed and assigned to fields of the form, or other processing can take place using the "reco", "grammar" or "bind" elements described above. Further discussion of the message or "smex" object is provided in Appendix A.

The "bind" element can also include a "for" attribute, which allows its action to be attached to other objects on the page. For example, a mark-up such as:
<bind for = "prompt 1" event = 'onComplete" targetElement = "prompt 2" = targetMethod = "start" />. will invoke the start method of the object "prompt 2" when the object "prompt 1" sends the event "onComplete".

Referring back to FIG. 5, web server 202 can include a server side plug-in declarative authoring tool or module 320 (e.g. ASP or ASP+ by Microsoft Corporation, JSP, or the like). Server side plug-in module 320 can dynamically generate client-side mark-ups and even a specific form of mark-up for the type of client accessing the web server 202. The client information can be provided to the web server 202 upon initial establishment of the 20 client/server relationship, or the web server 202 can include modules or routines to detect the capabilities of the client. In this manner, server side plug-in module 320 can generate a client side mark-up for each of the voice recognition scenarios, i.e. voice only through phone 80 or multimodal for device 30. By using a consistent client side model (reco and prompt controls that can be used in each application), application authoring for many different clients is significantly easier.

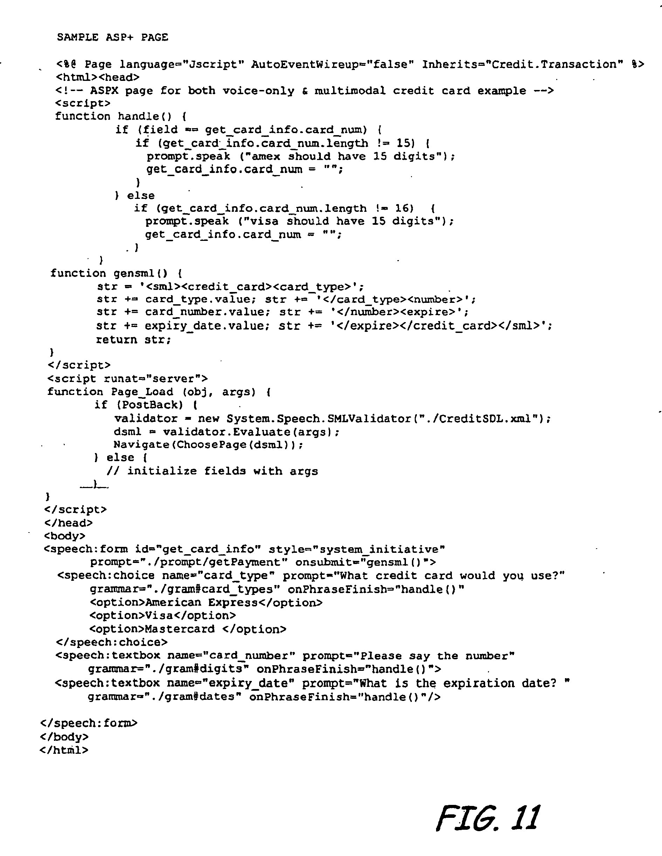

In addition to dynamically generating client side mark-ups, high-level dialog modules, like getting credit card information illustrated in FIG. 6 with a mark-up examples of FIGS. 8, 9A and 9B, can be implemented as a server-side control as stored in store 324 for use by developers in application authoring. In general, the high-level dialog modules 324 would generate dynamically clientside markup and script in both voice-only and multimodal scenarios based on parameters specified by developers. The high-level dialog modules can include parameters to generate client-side mark-ups to fit the developers' needs. For example, a credit card information module can include a parameter indicating what types of credit cards the client/side mark-up script should allow. A sample ASP+ page using in server side plug-in module 320 is illustrated in FIG. 11.

Although the present invention has been described with reference to preferred embodiments, workers skilled in the art will recognize that changes may be made in form and detail without departing from the spirit and scope of the invention.

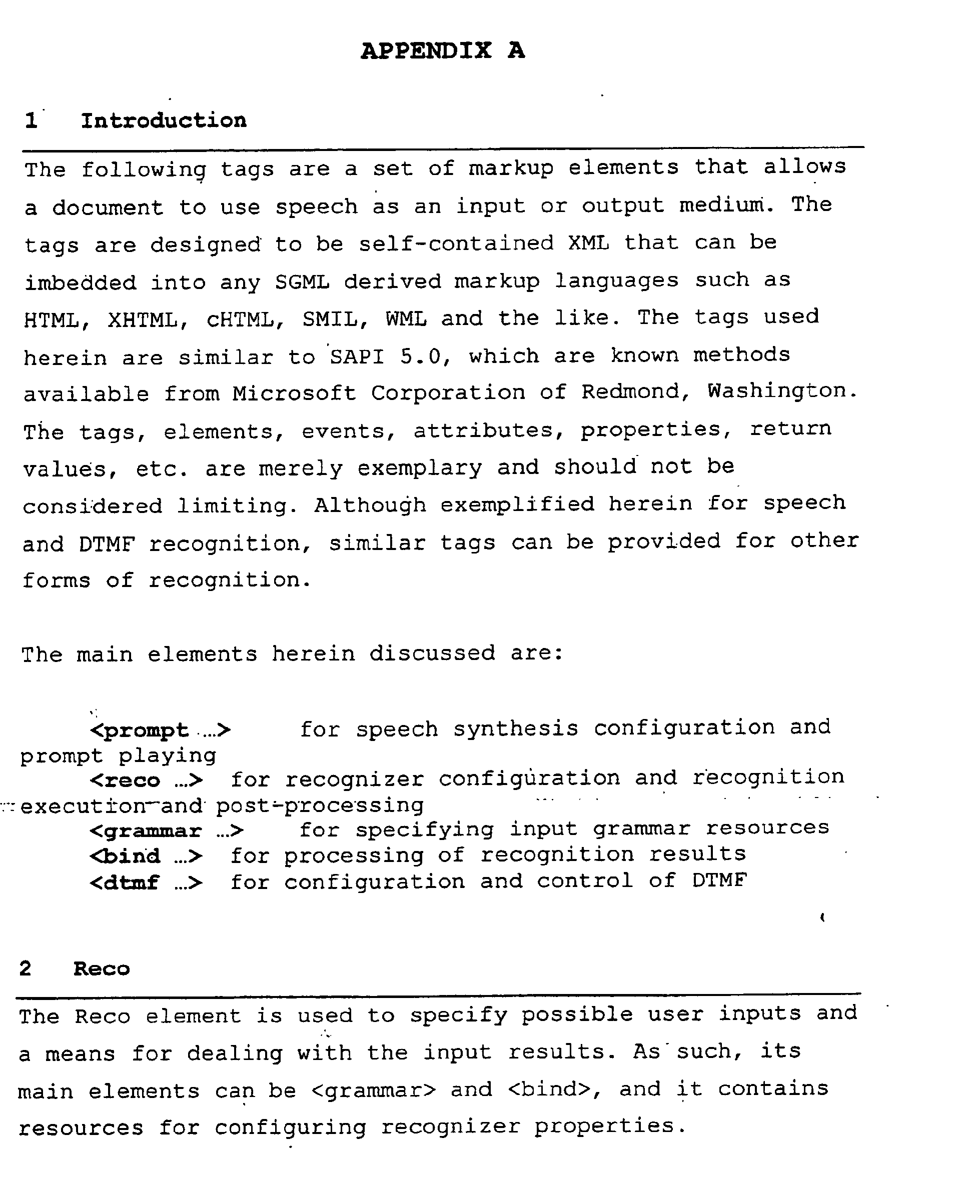

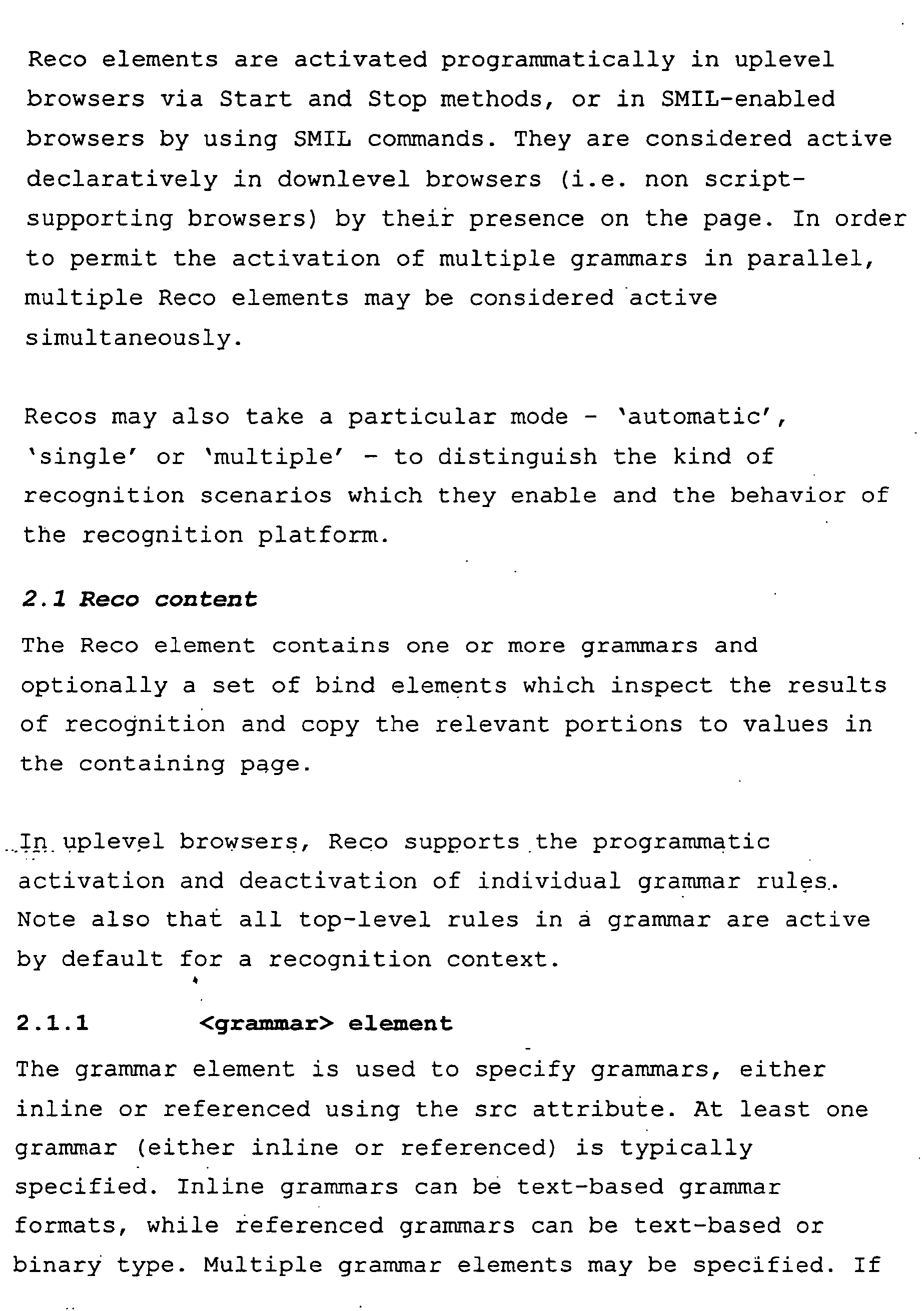

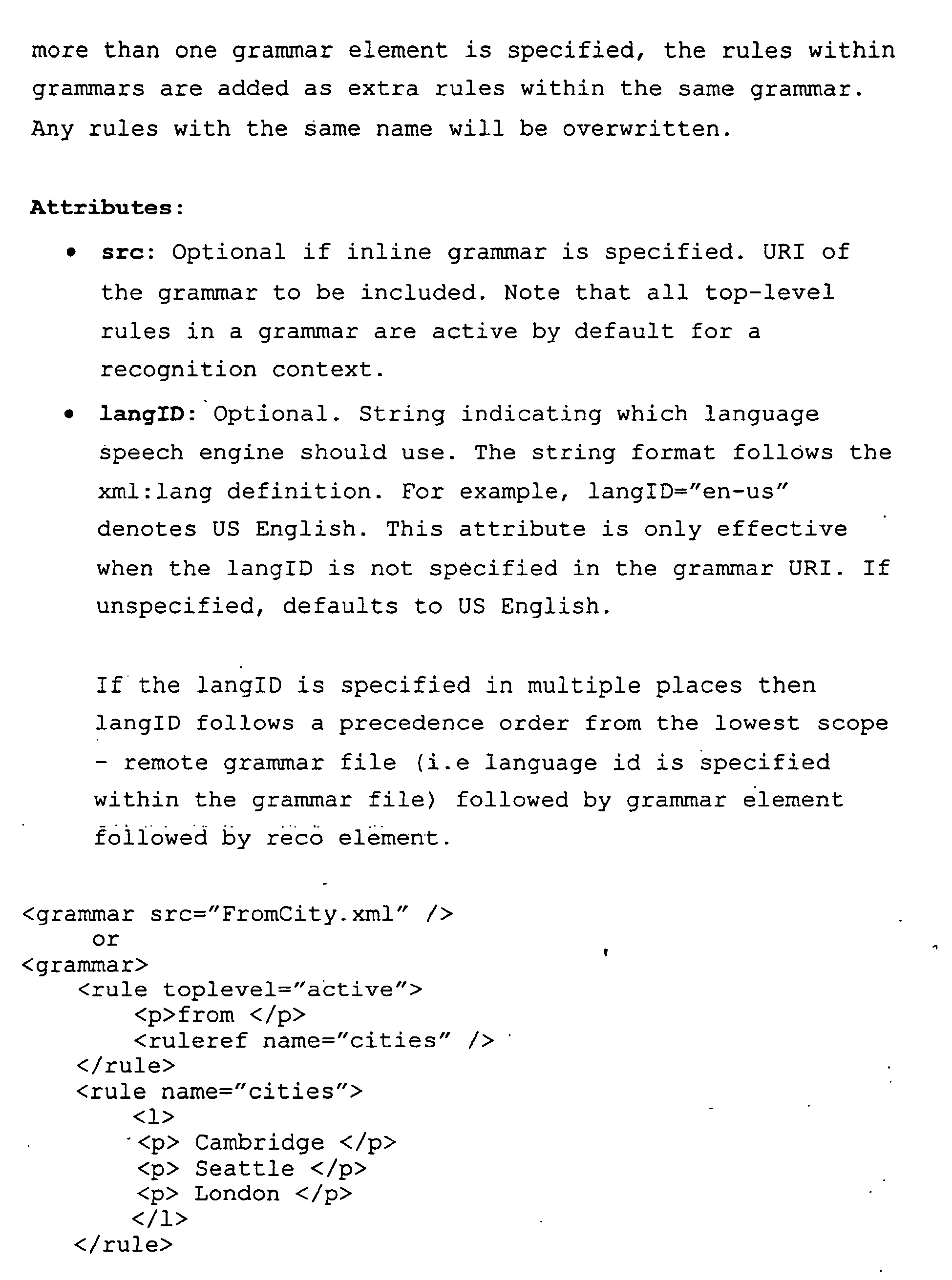

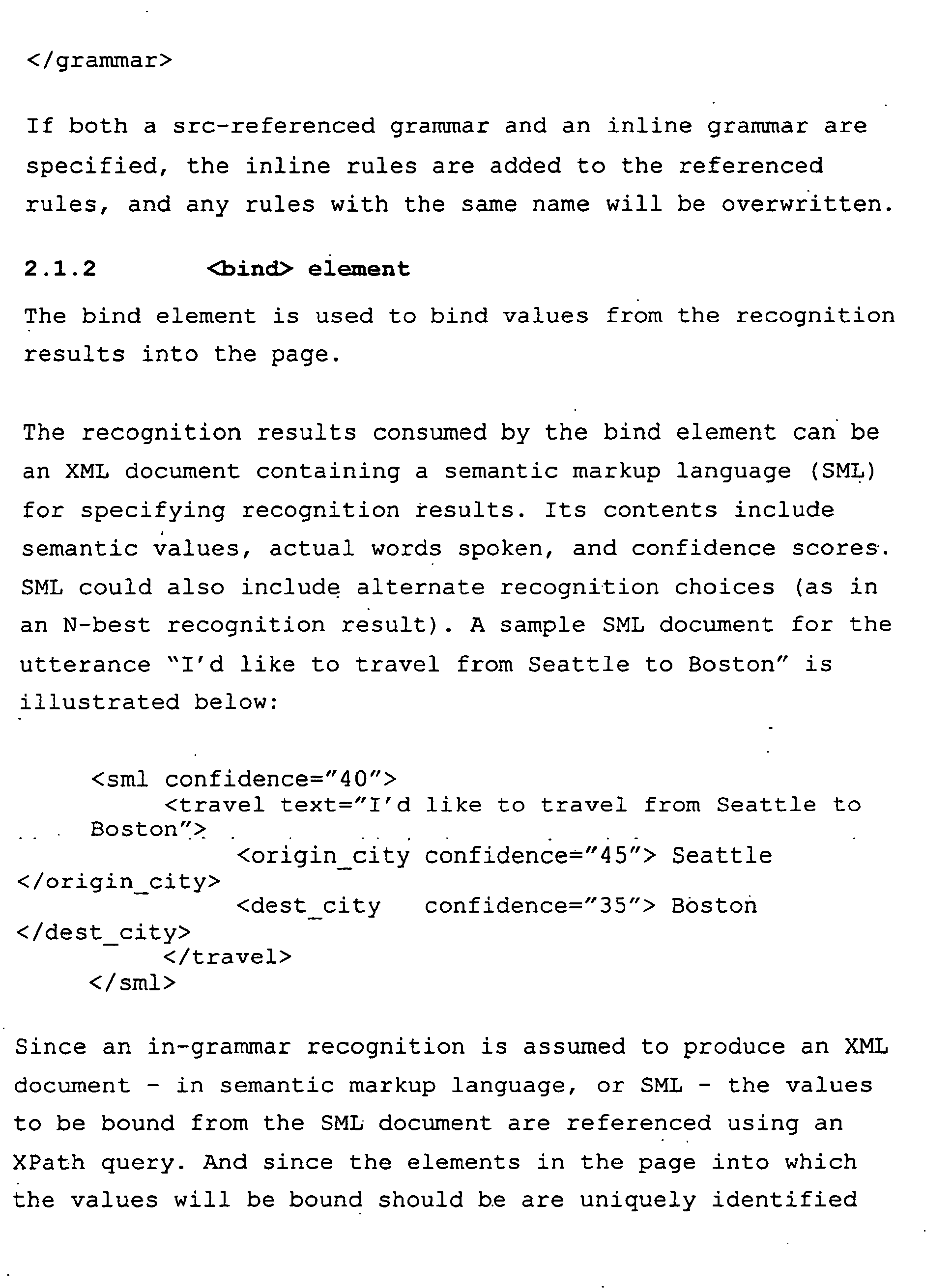

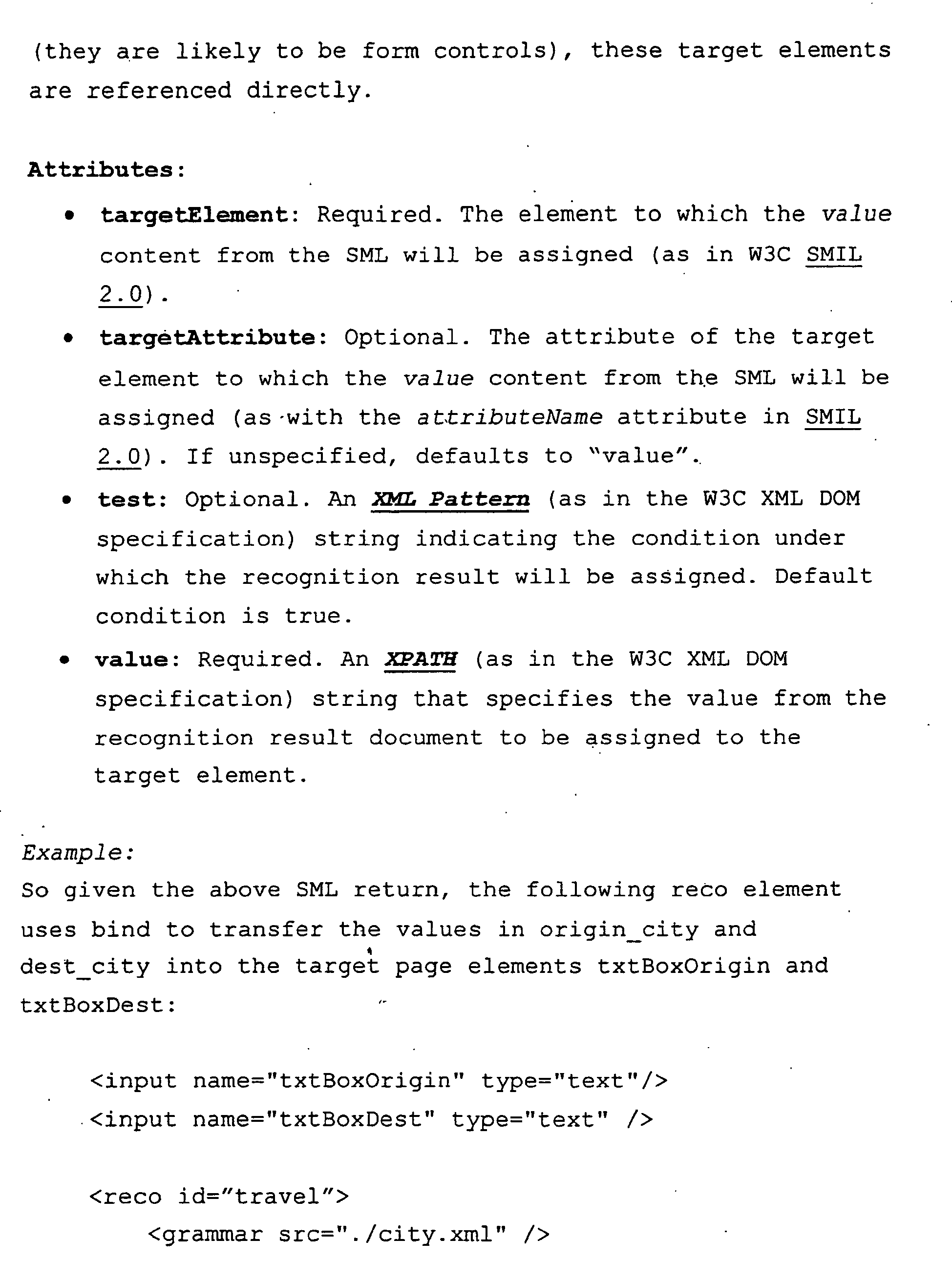

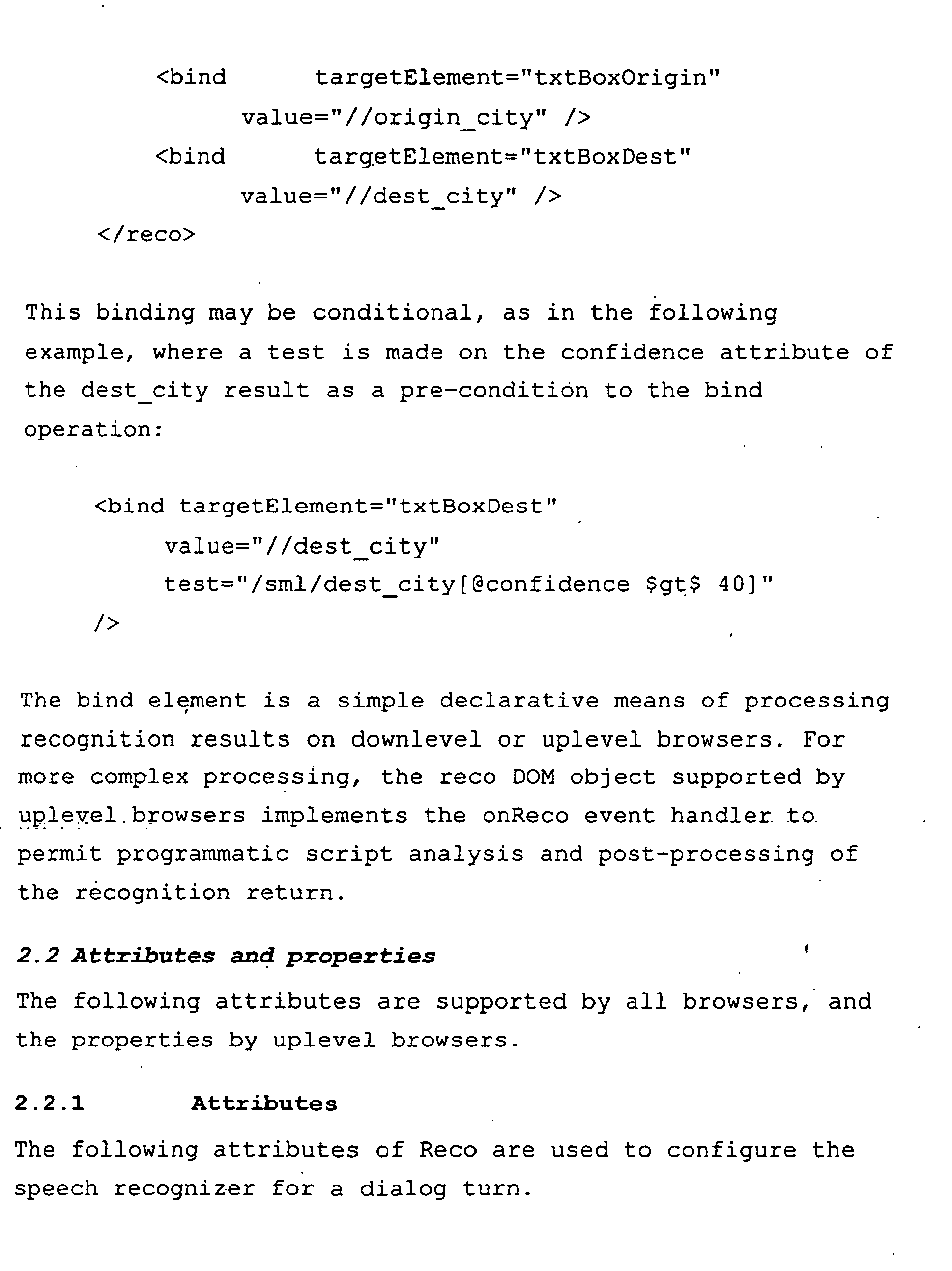

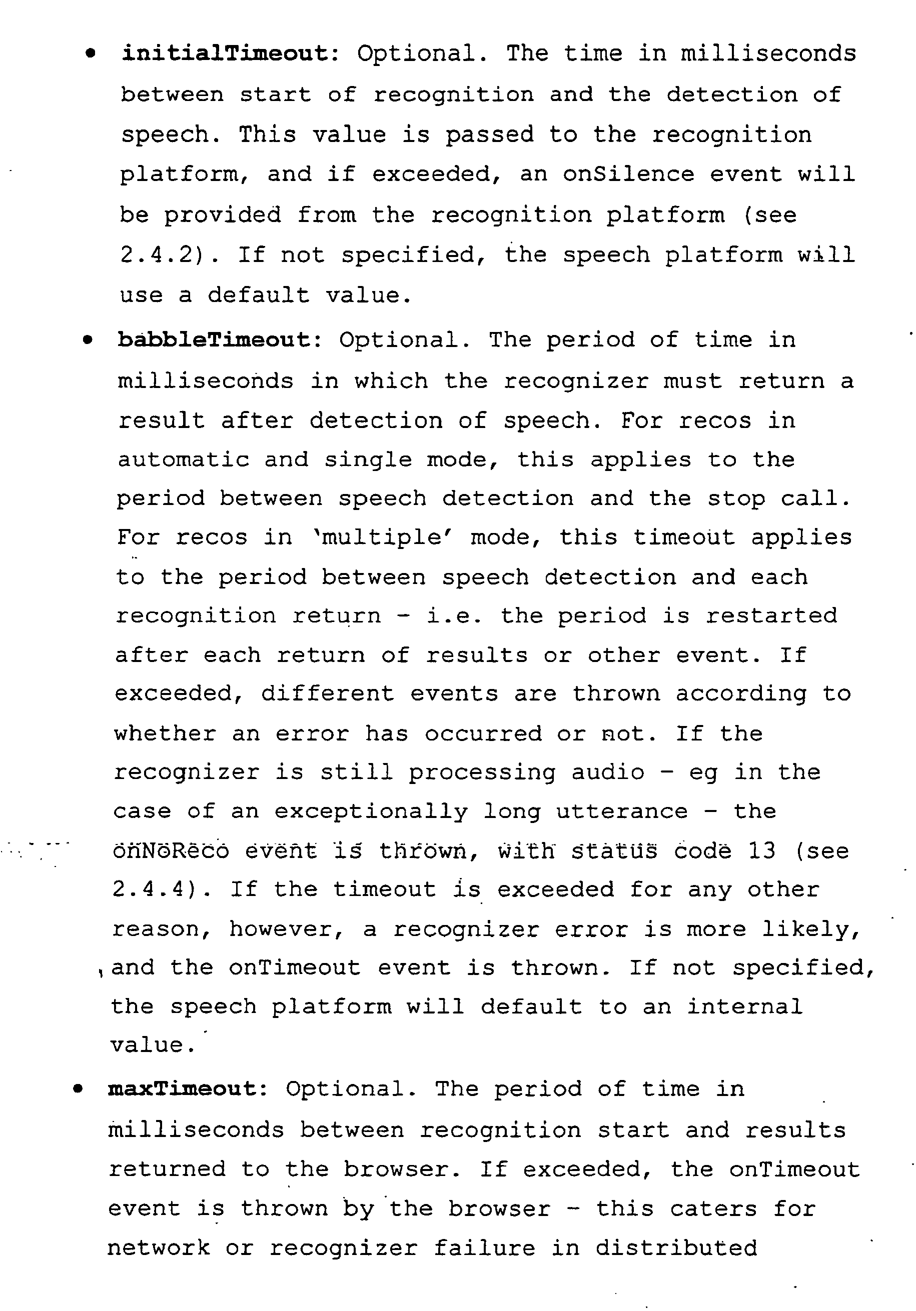

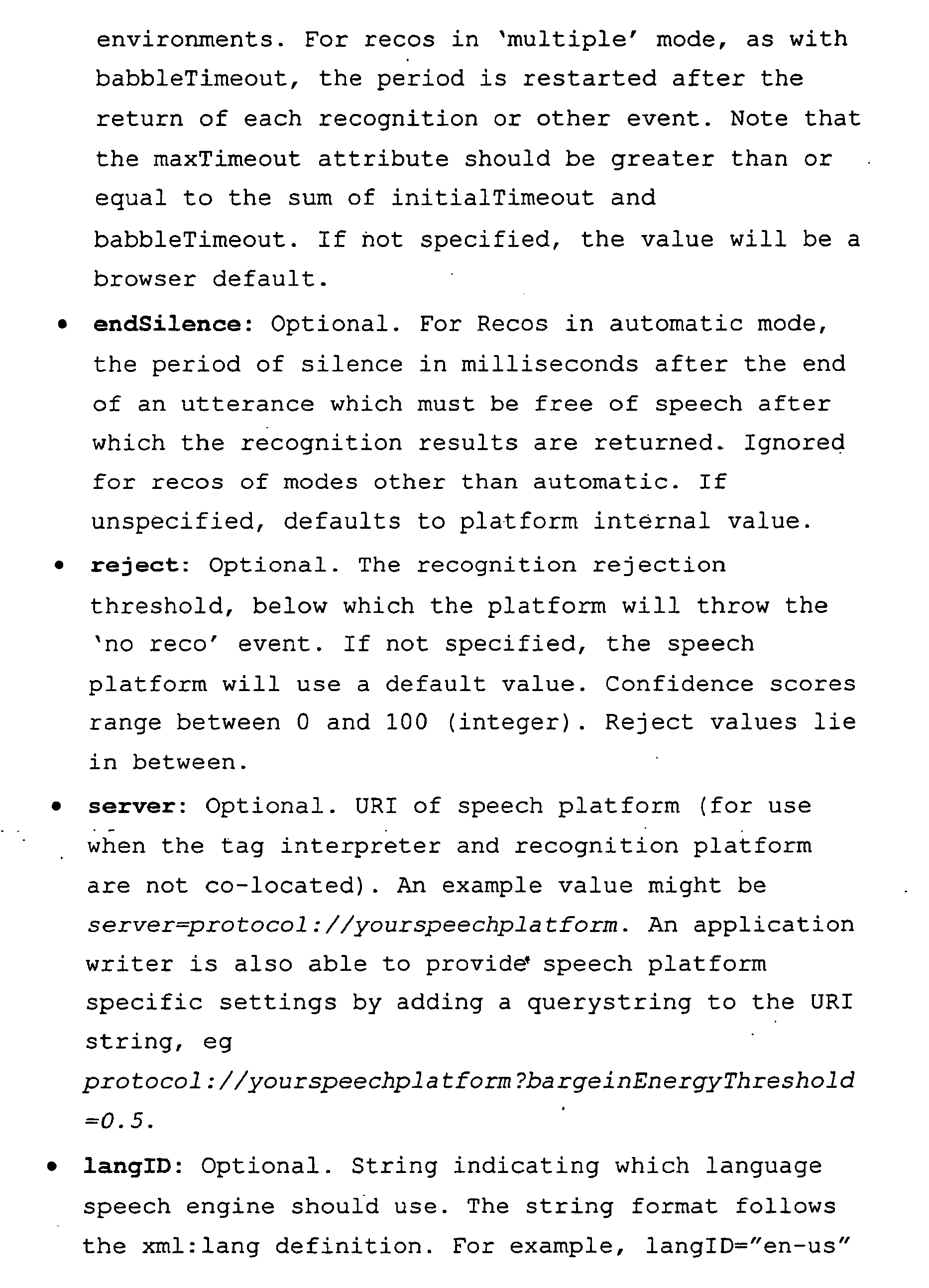

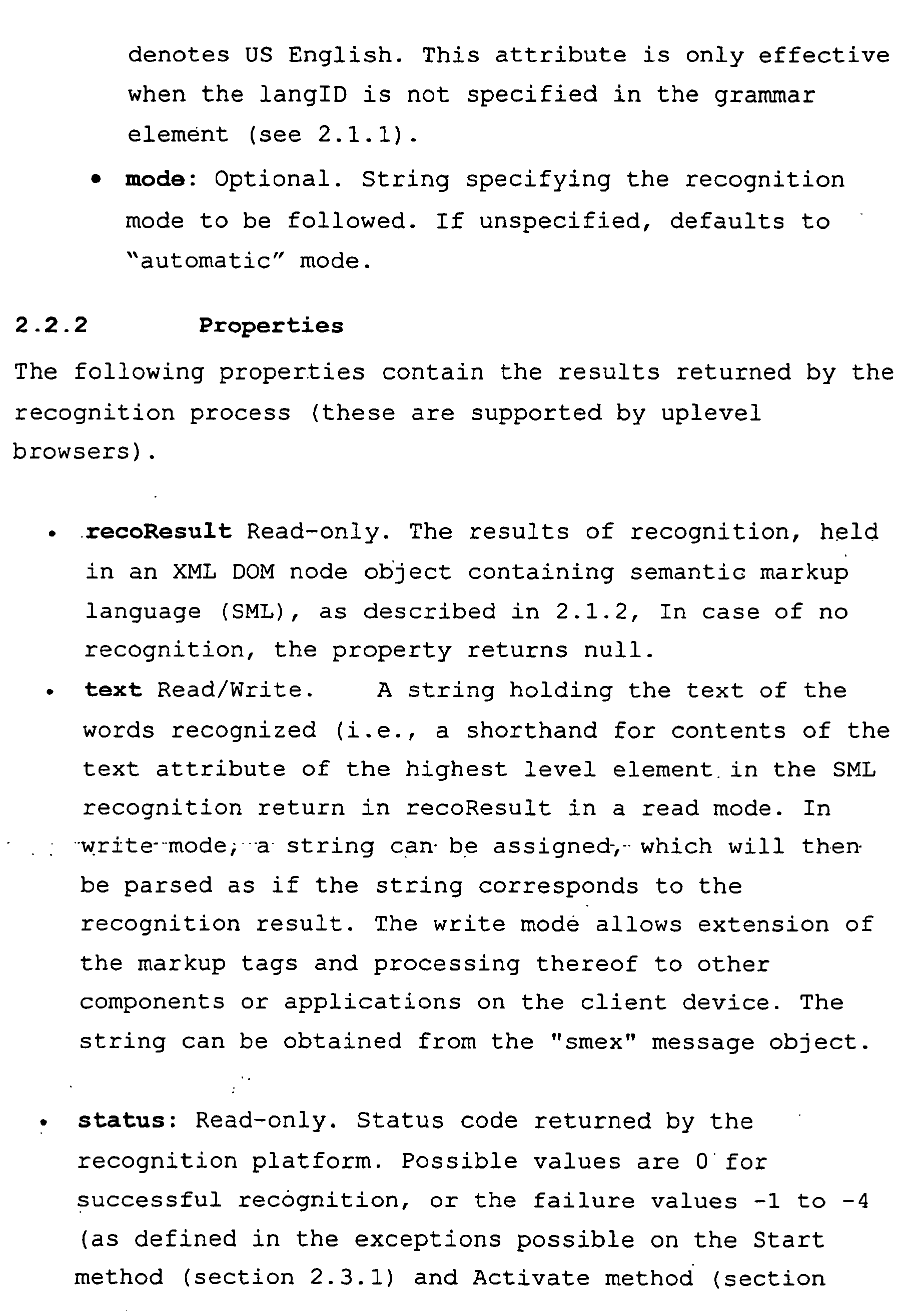

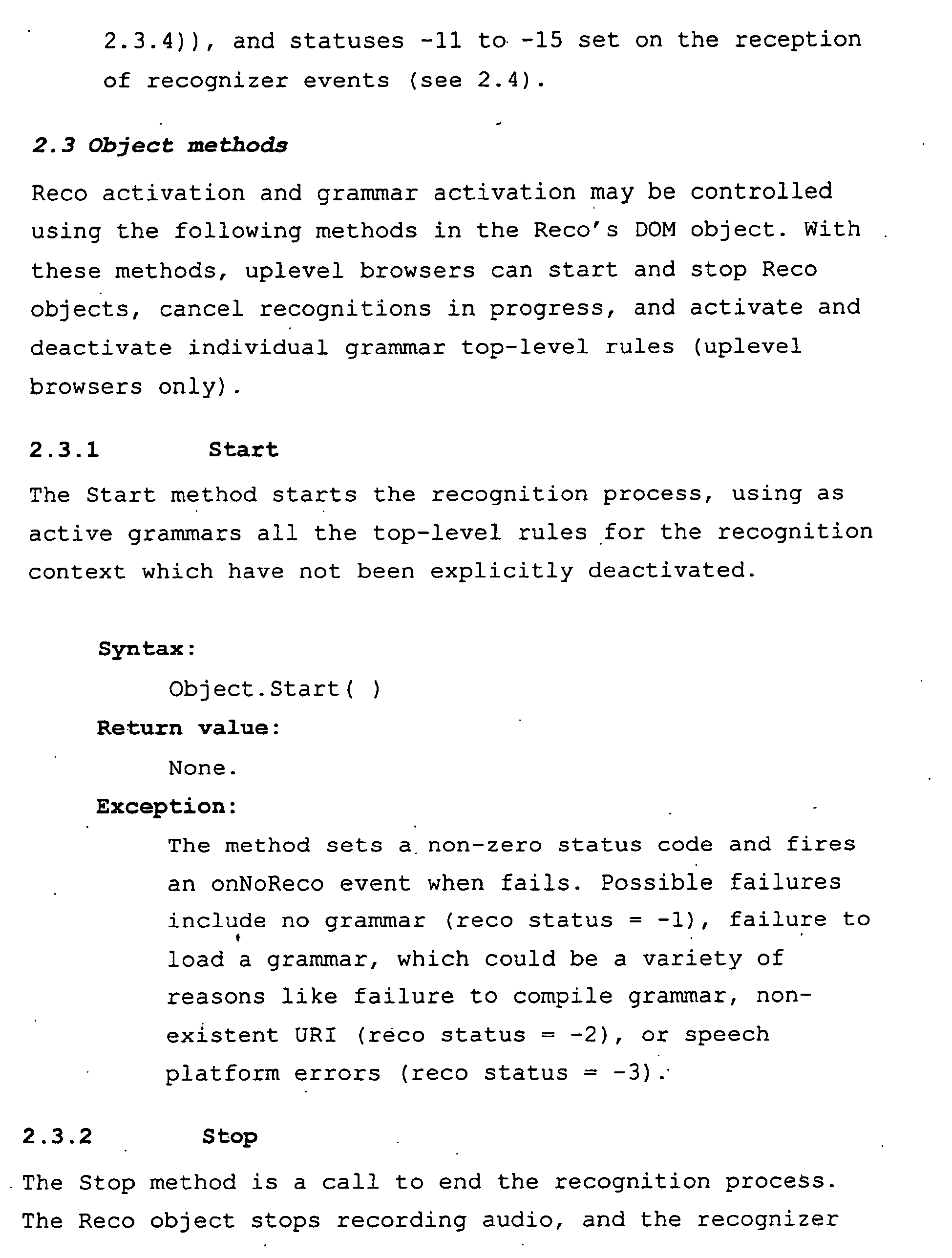

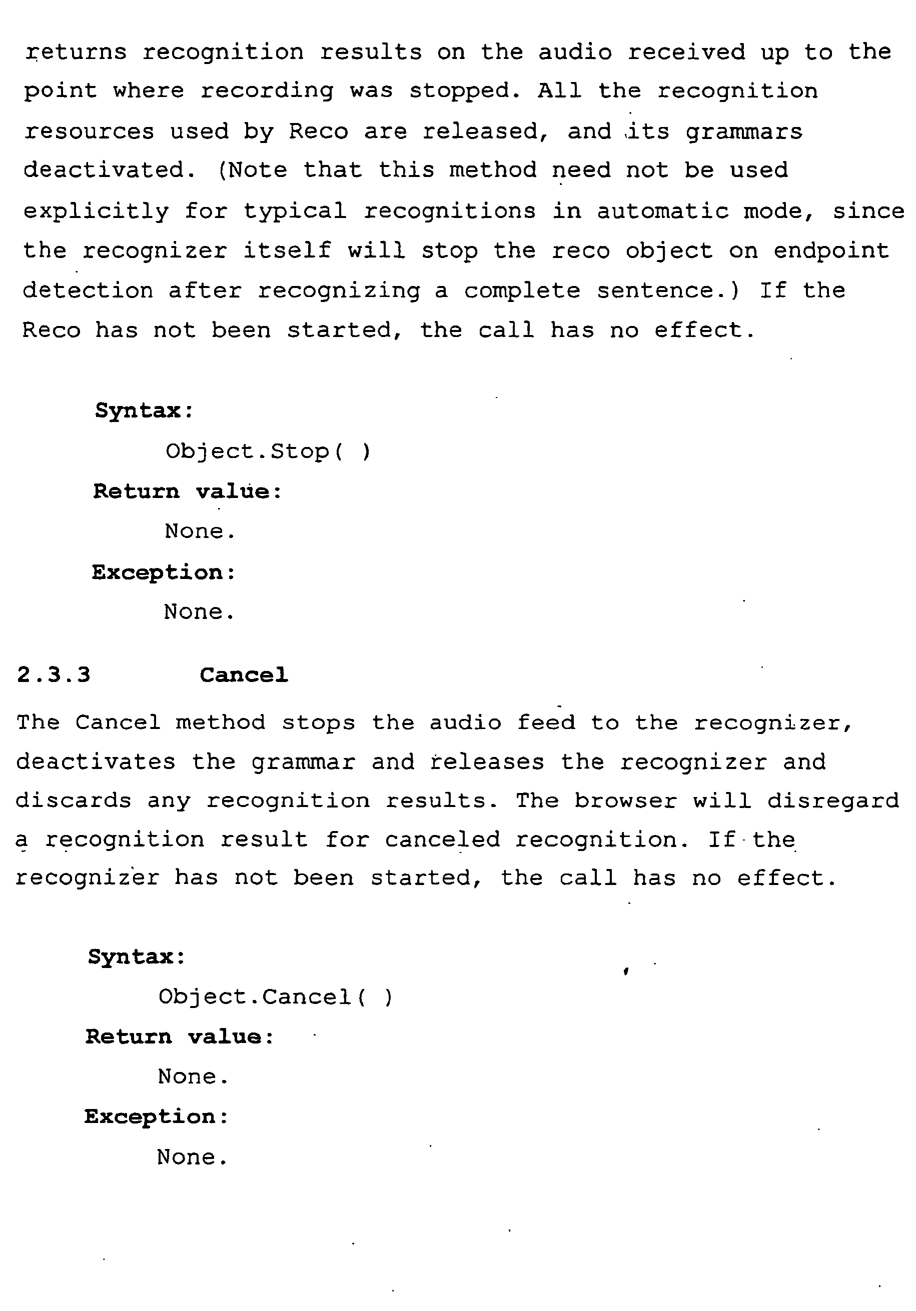

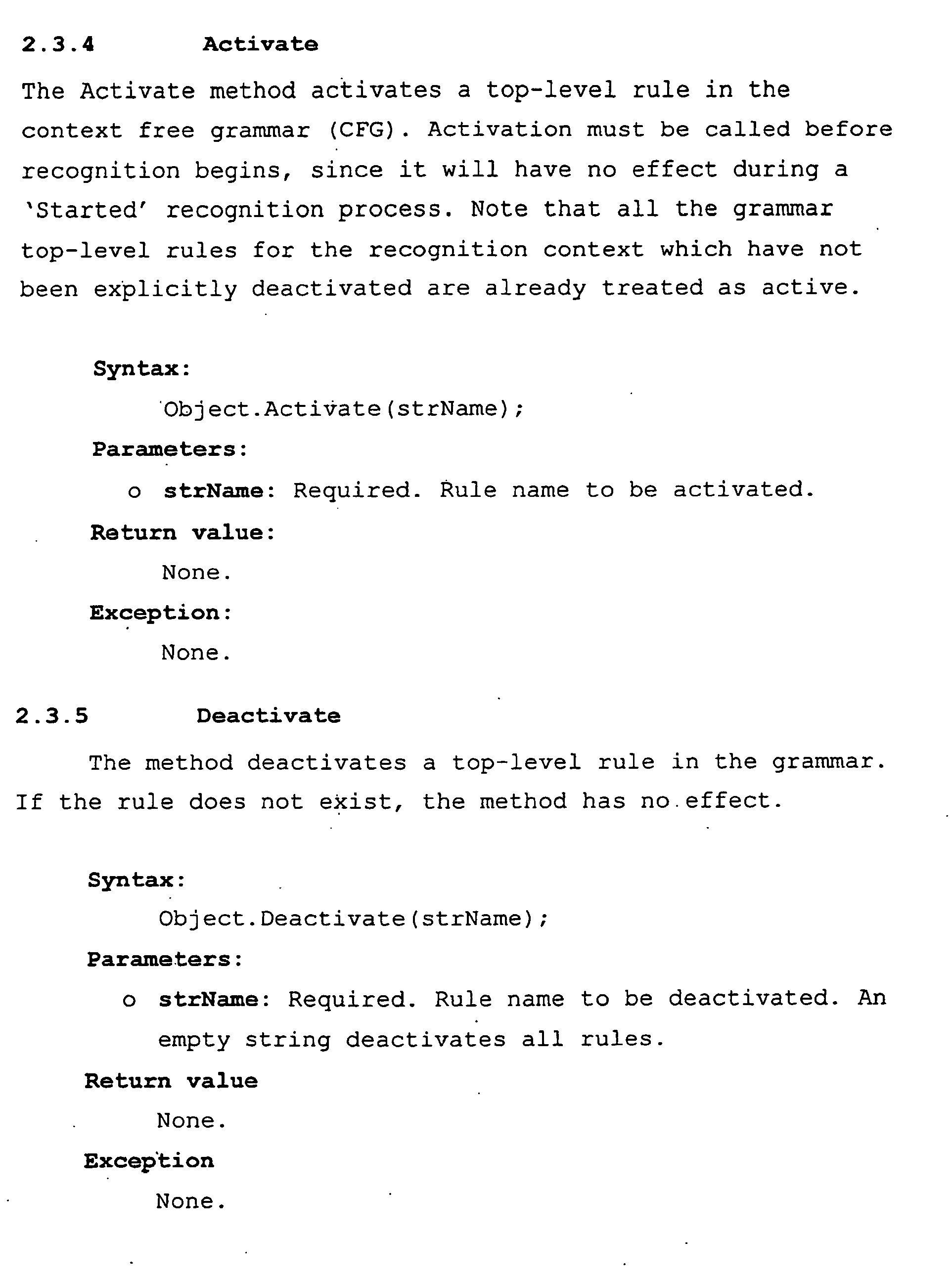

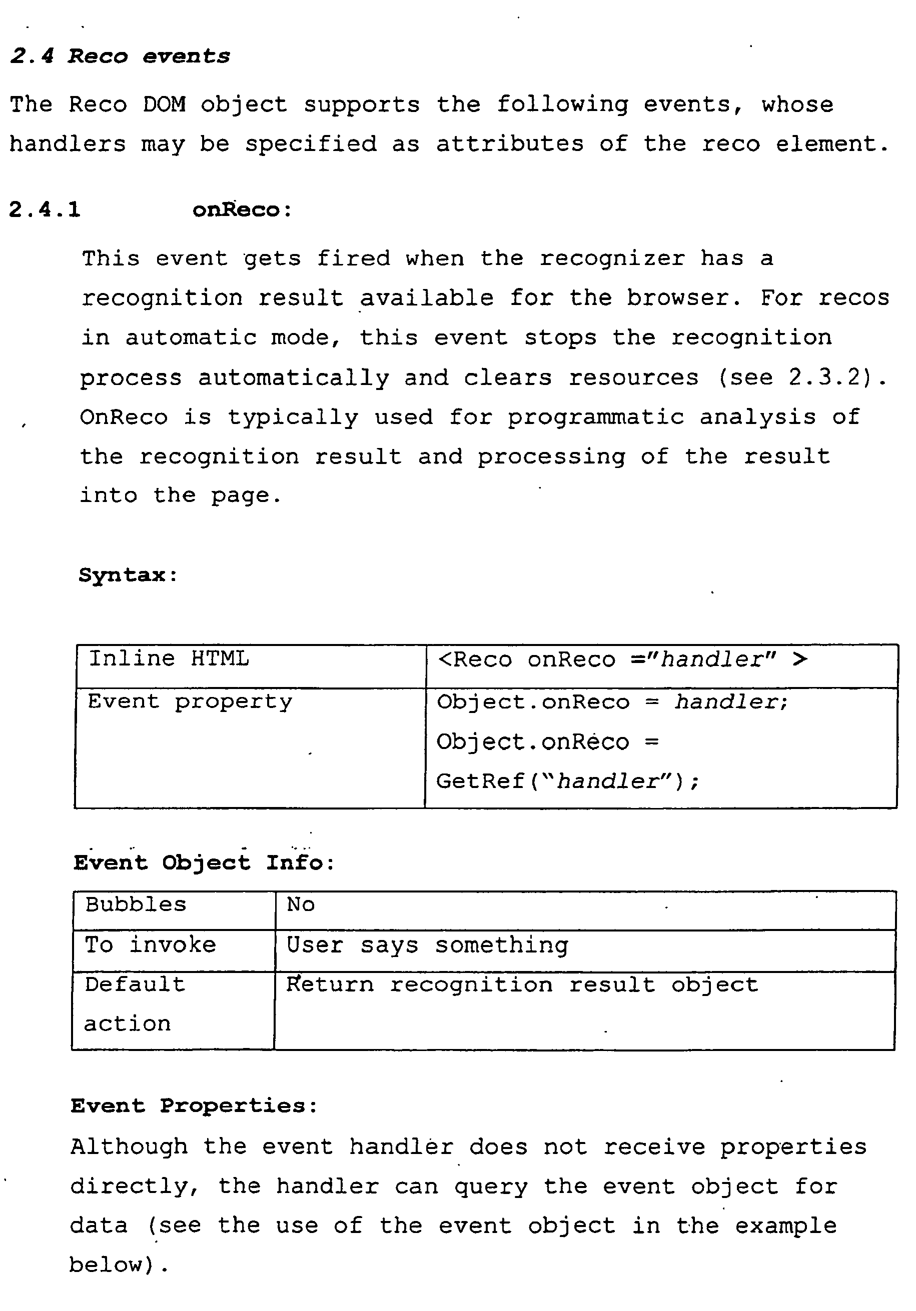

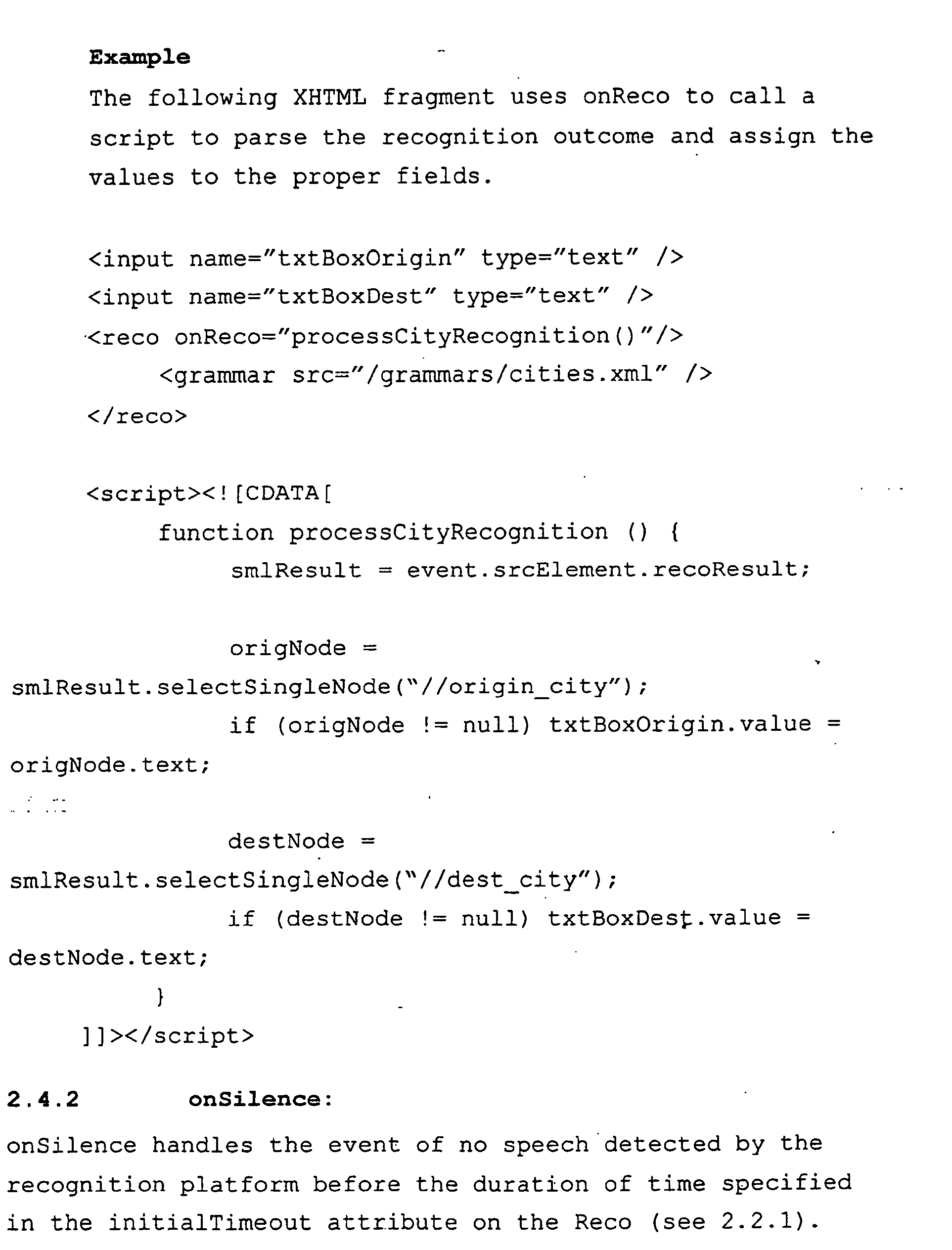

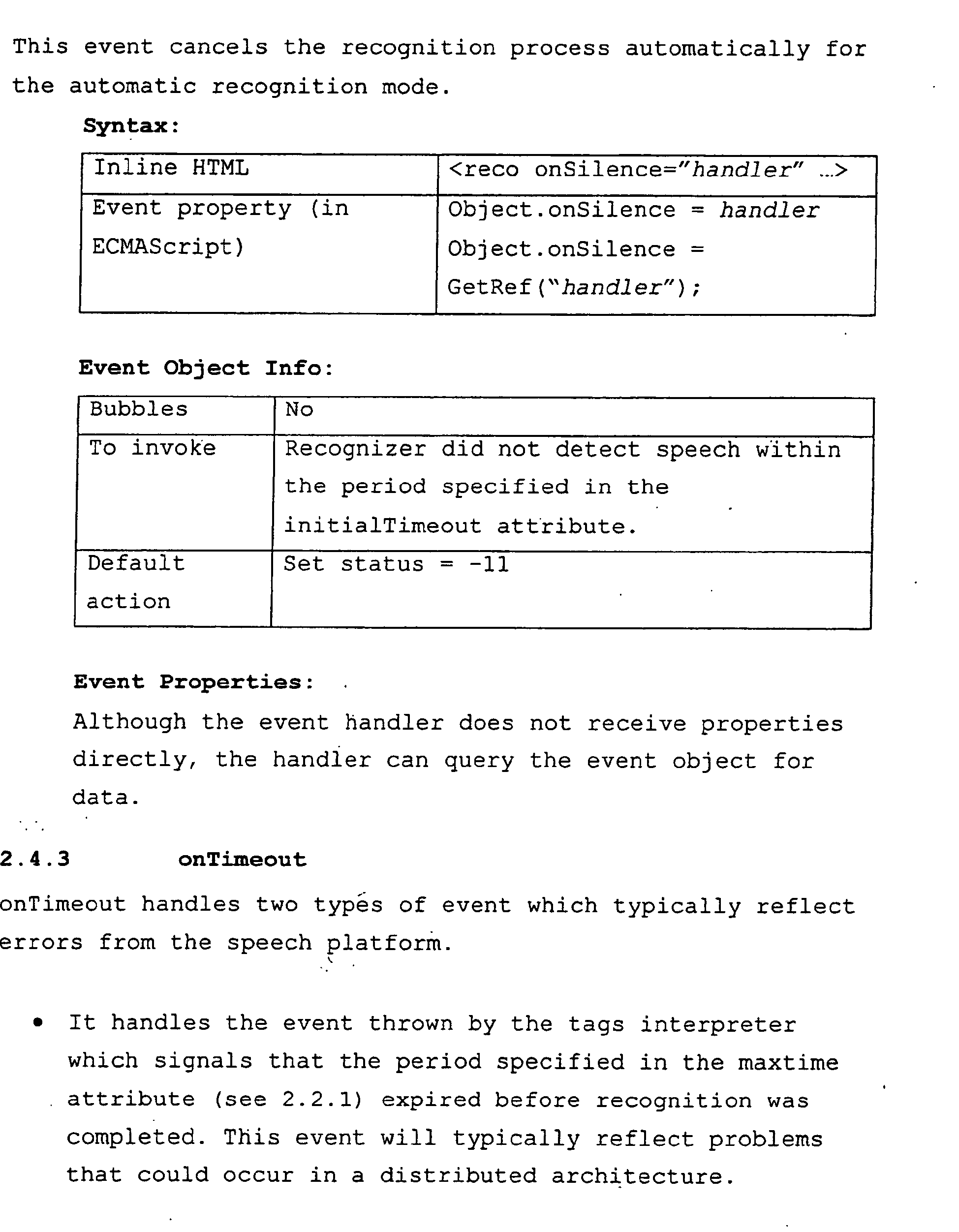

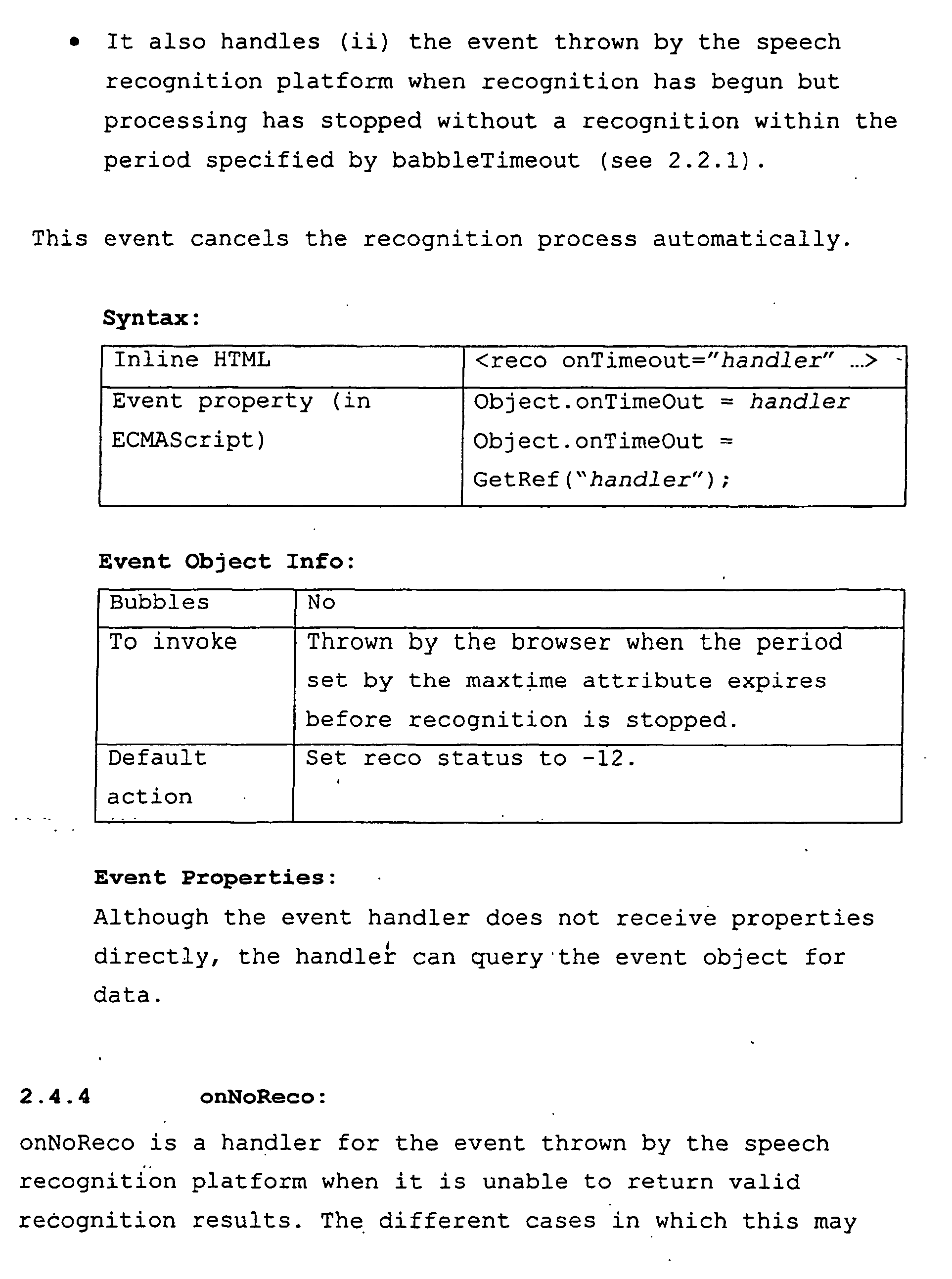

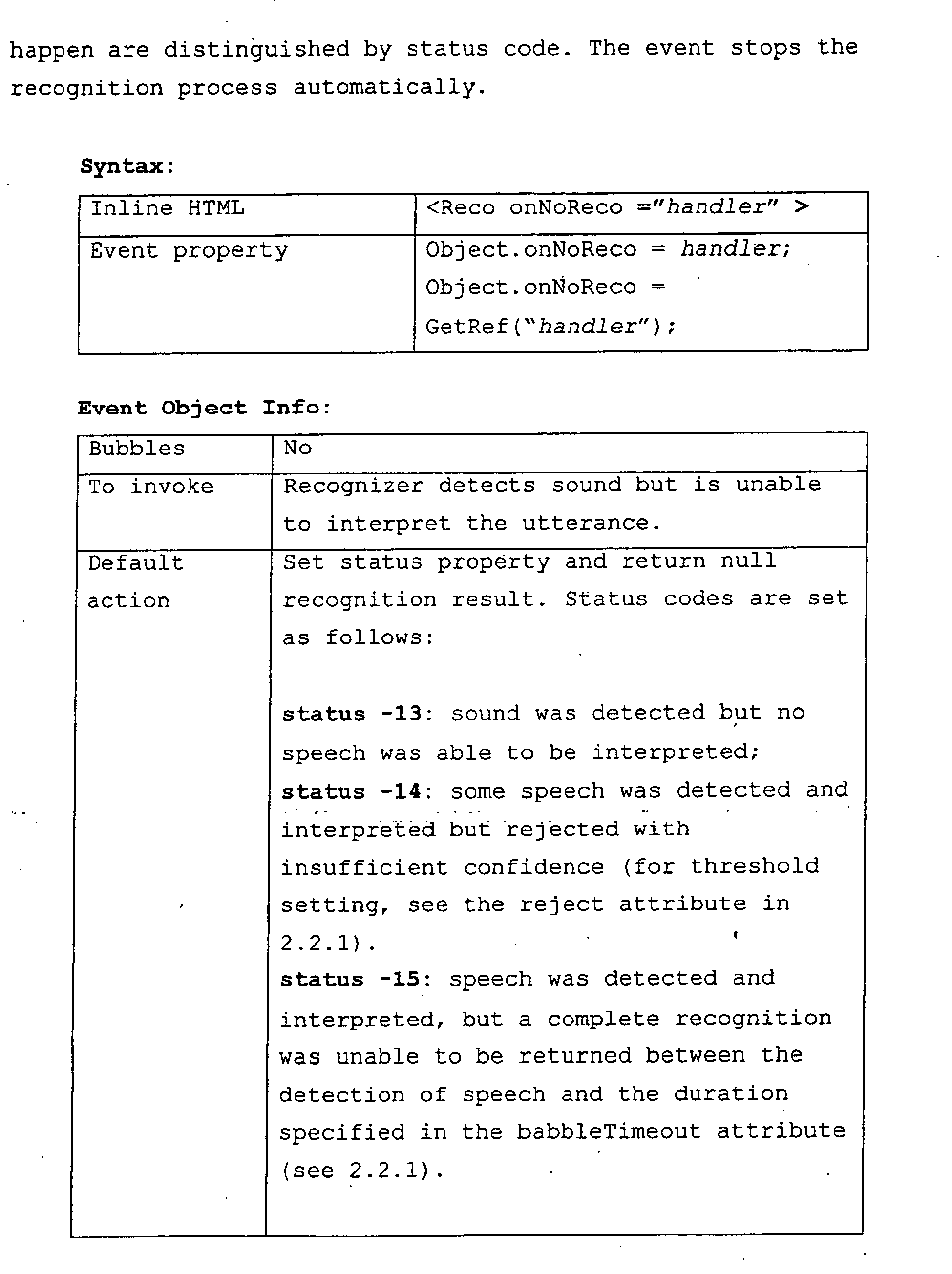

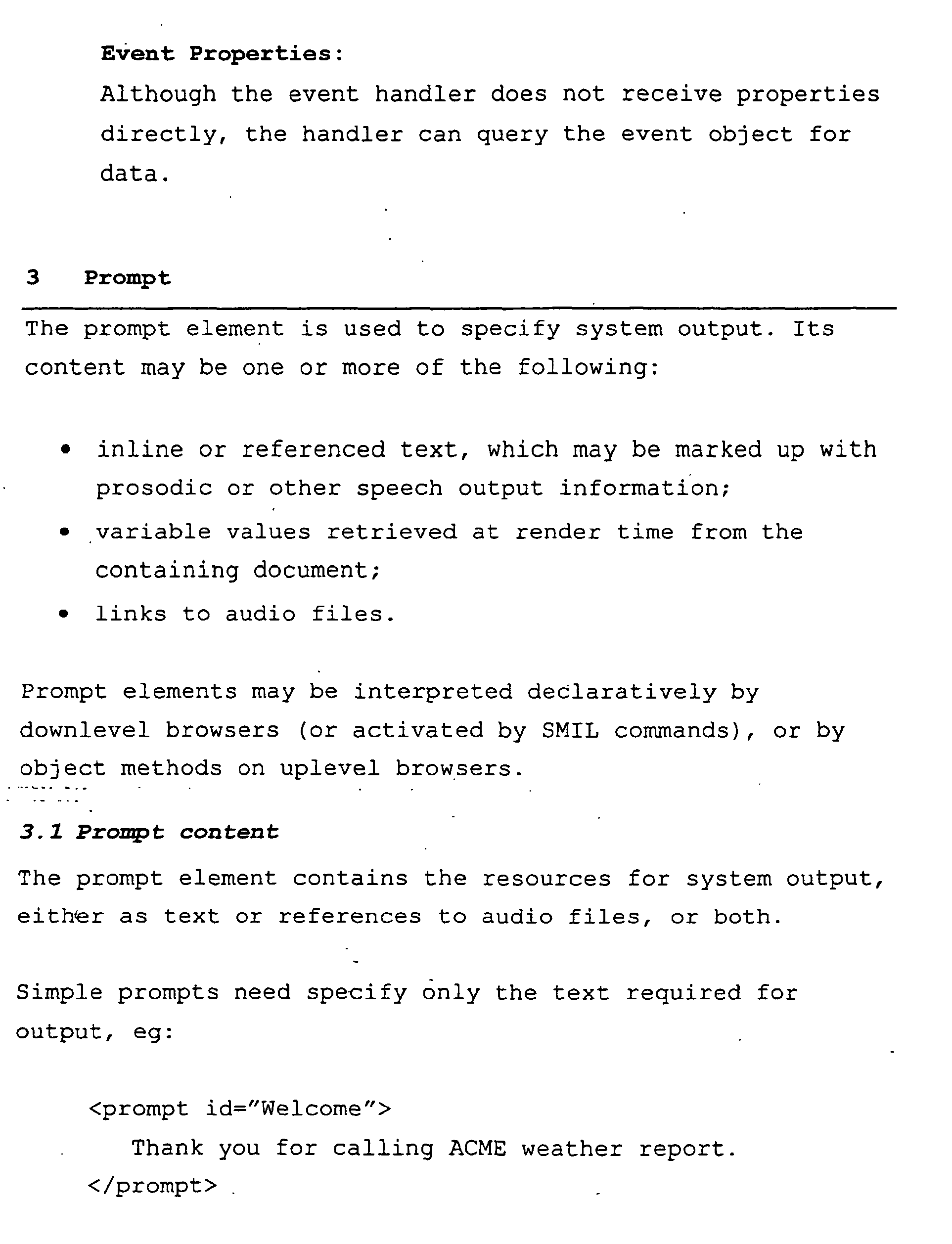

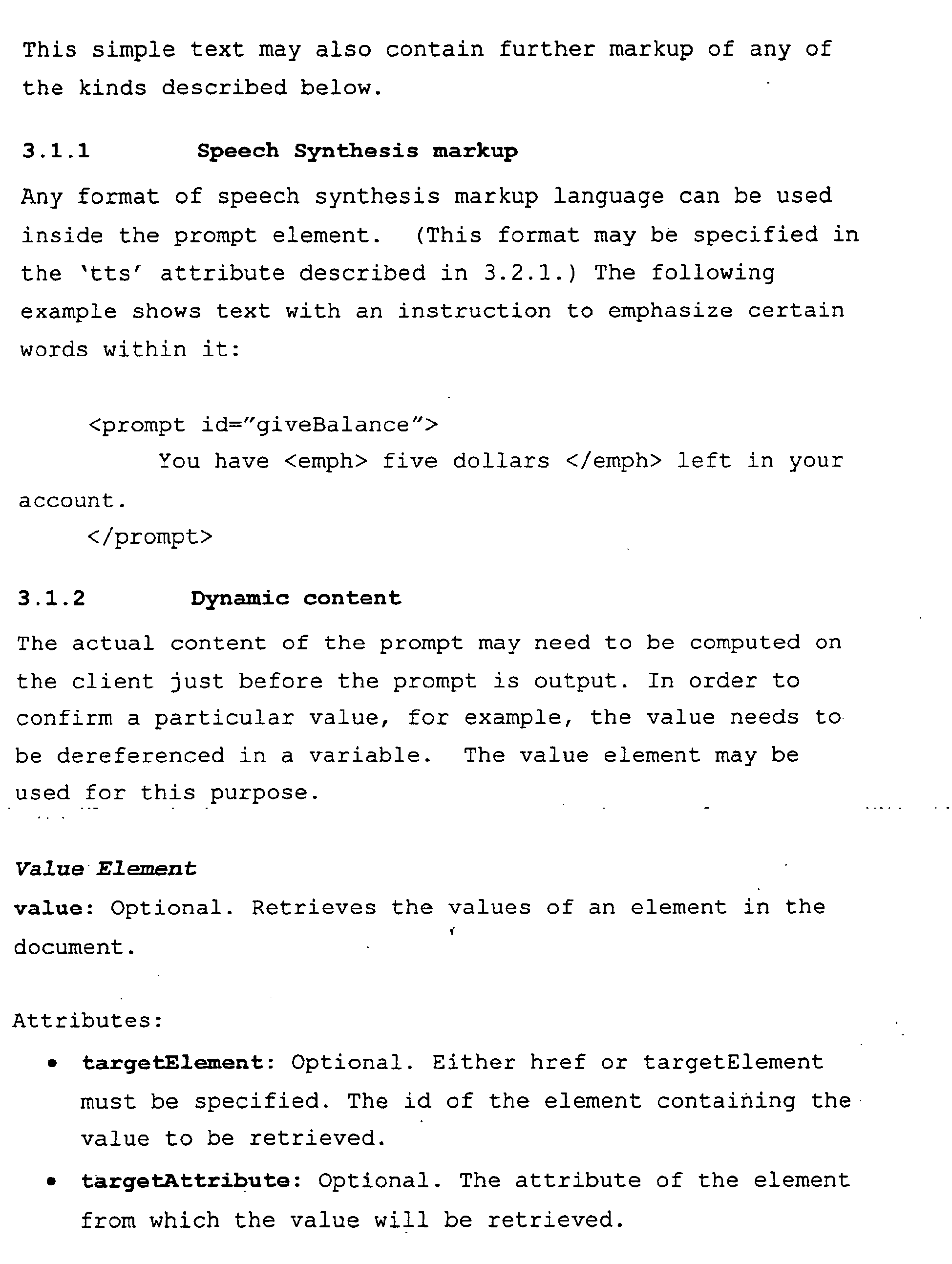

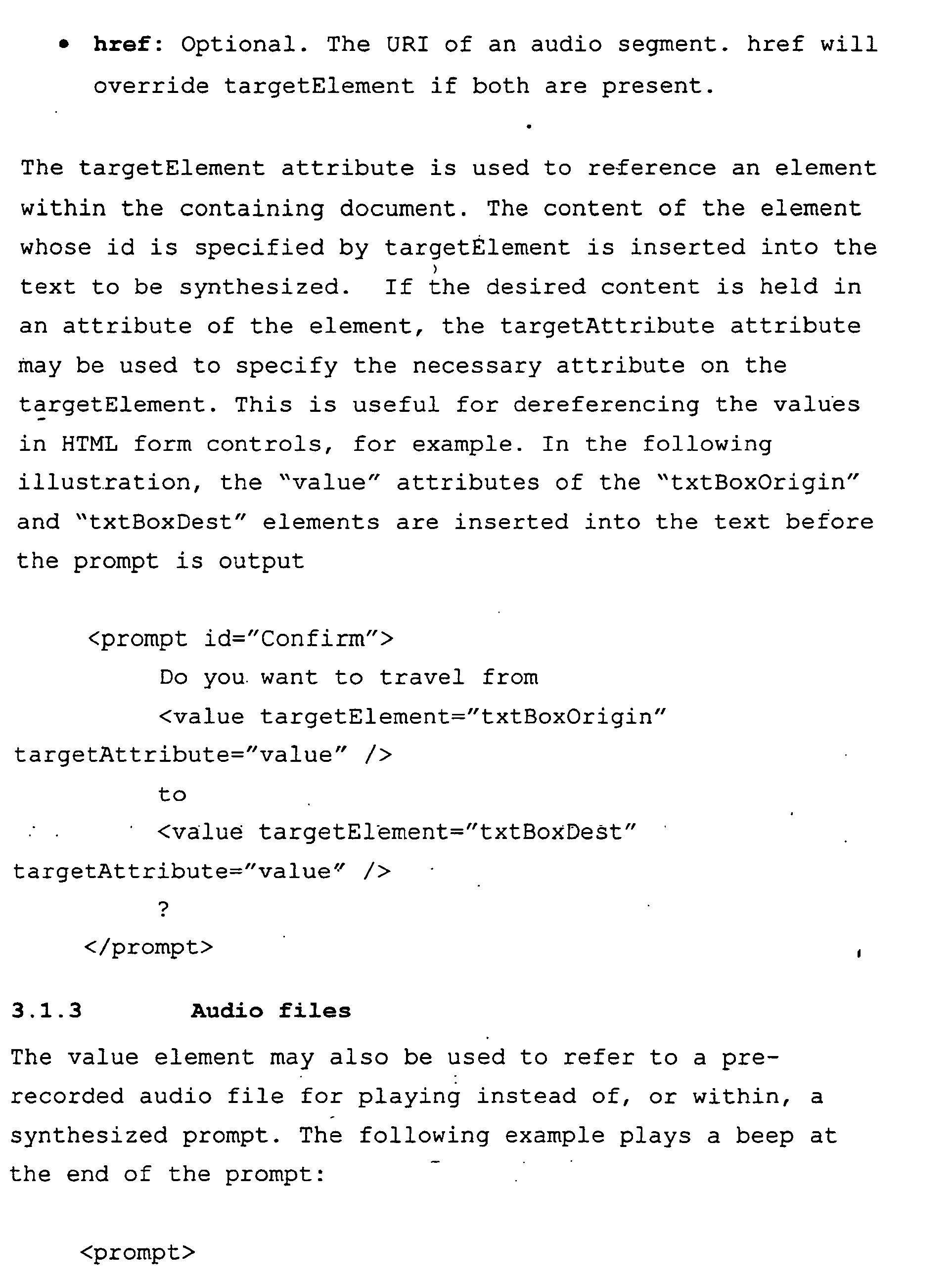

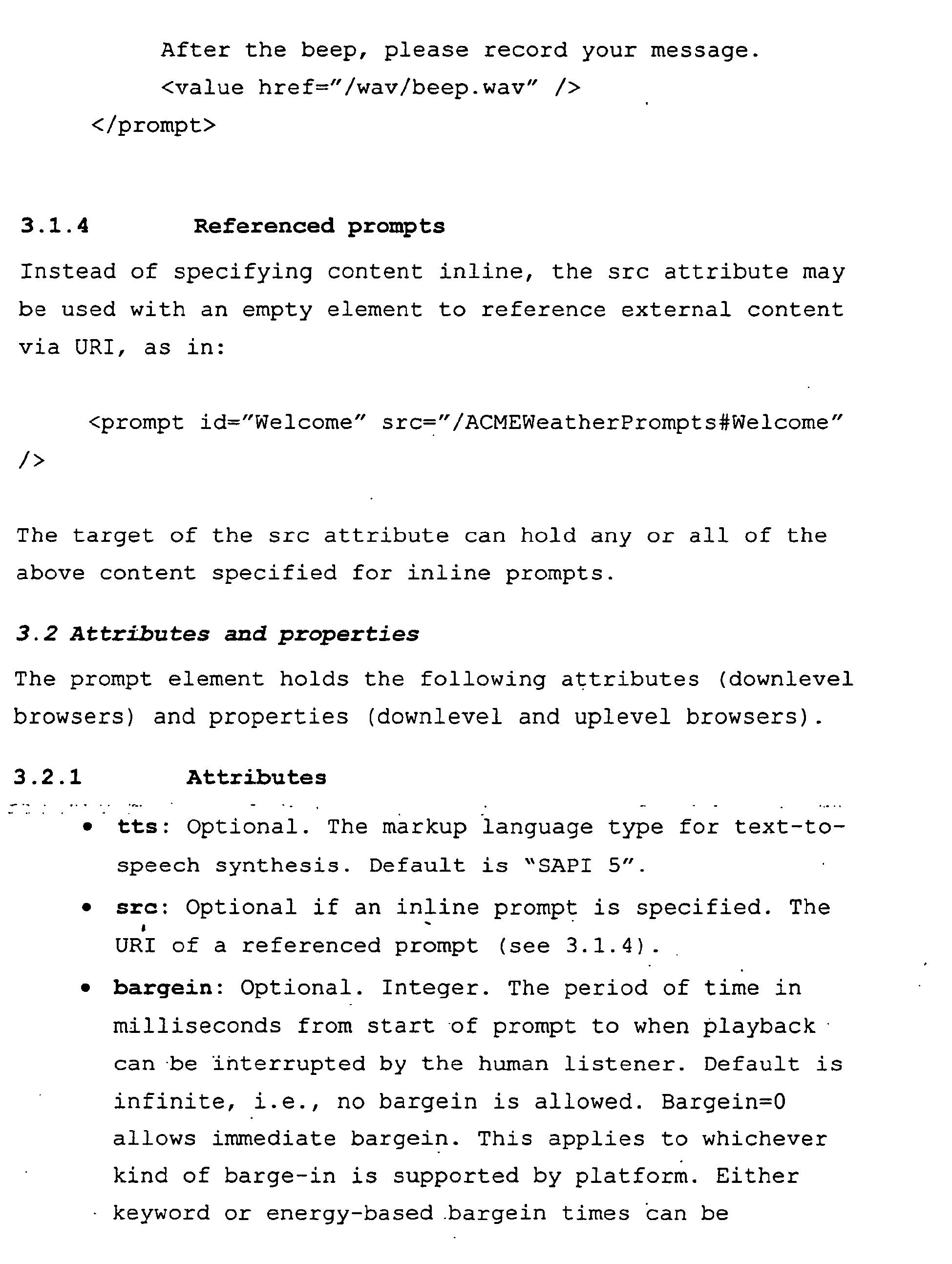

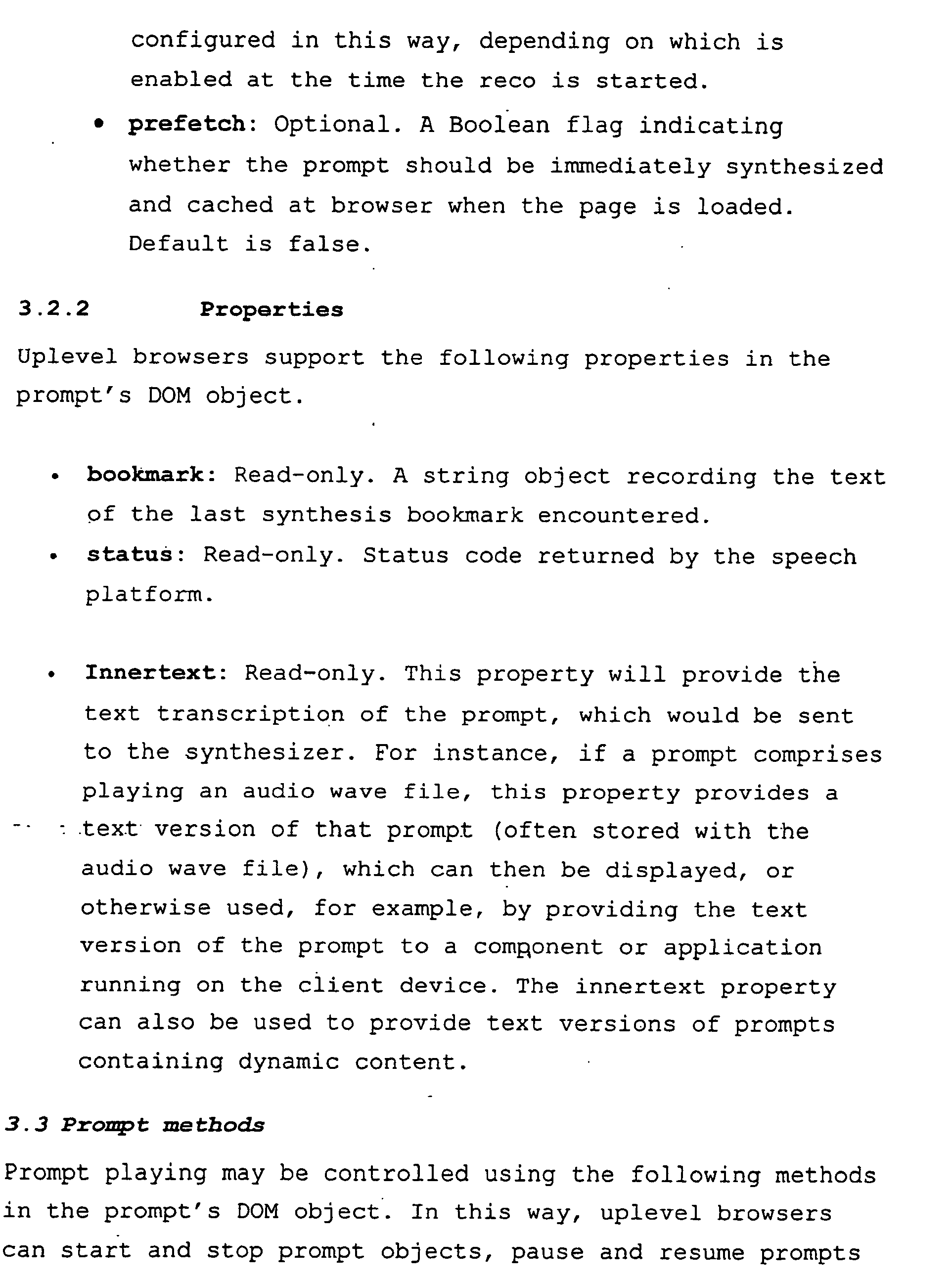

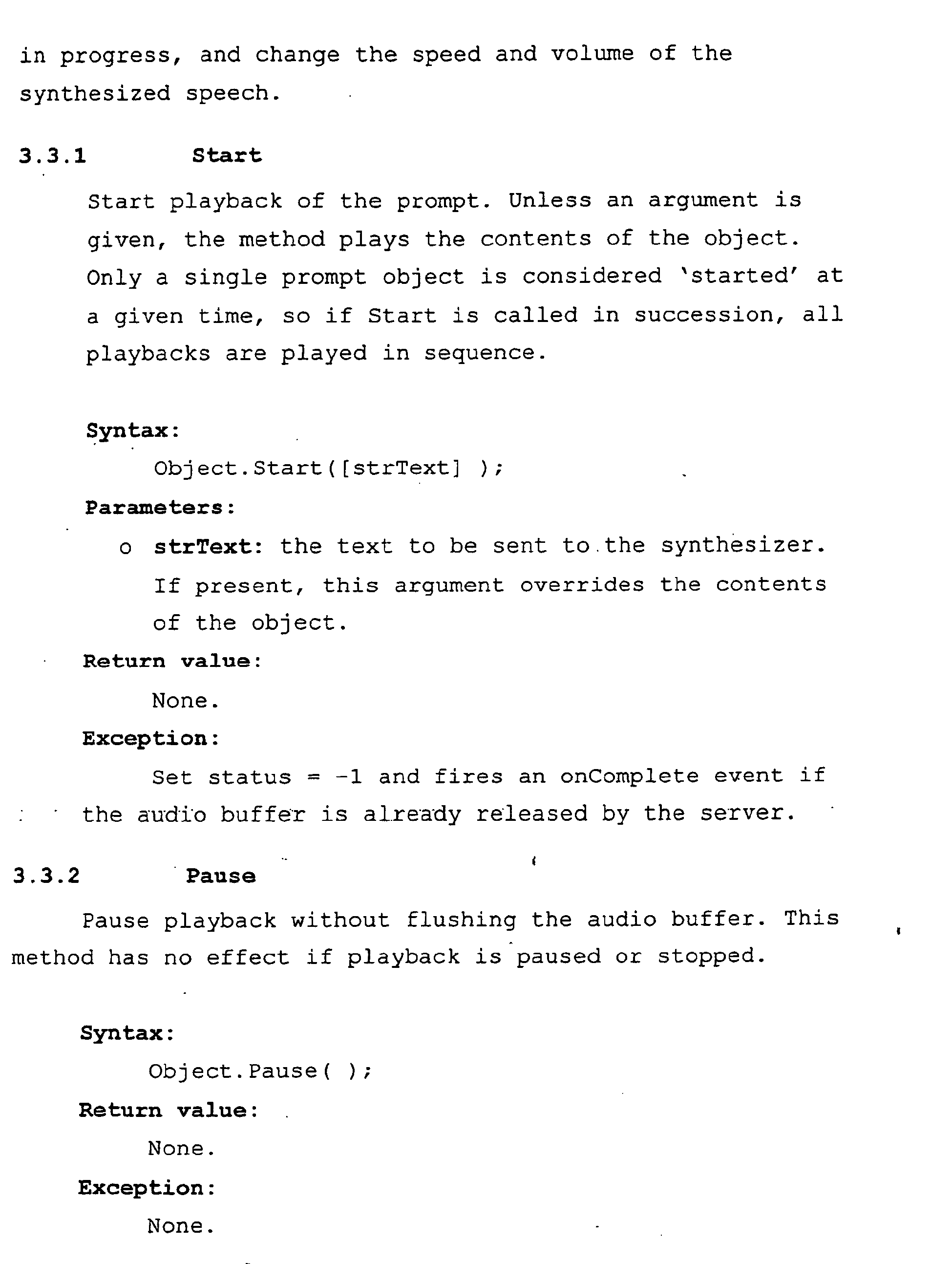

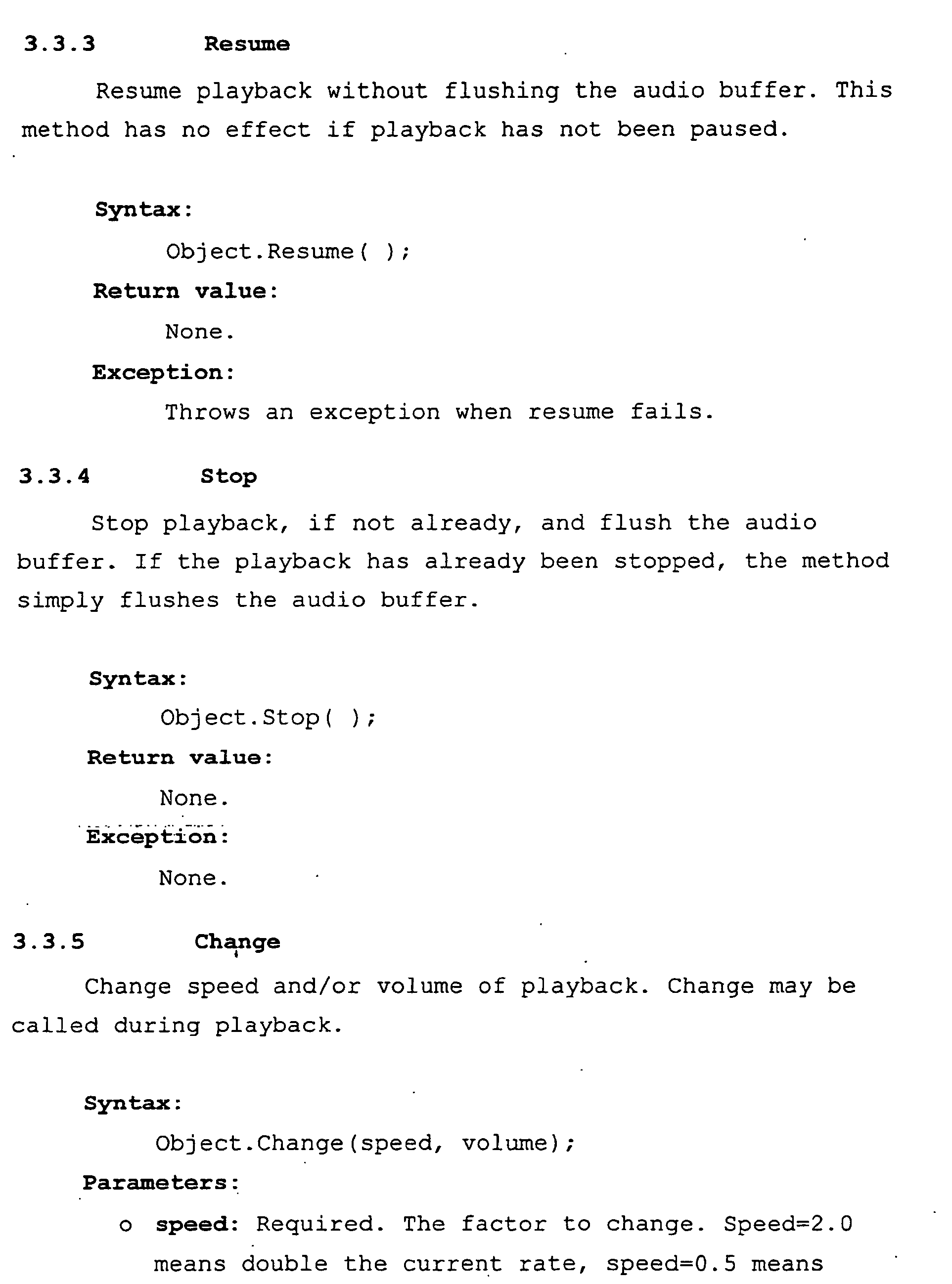

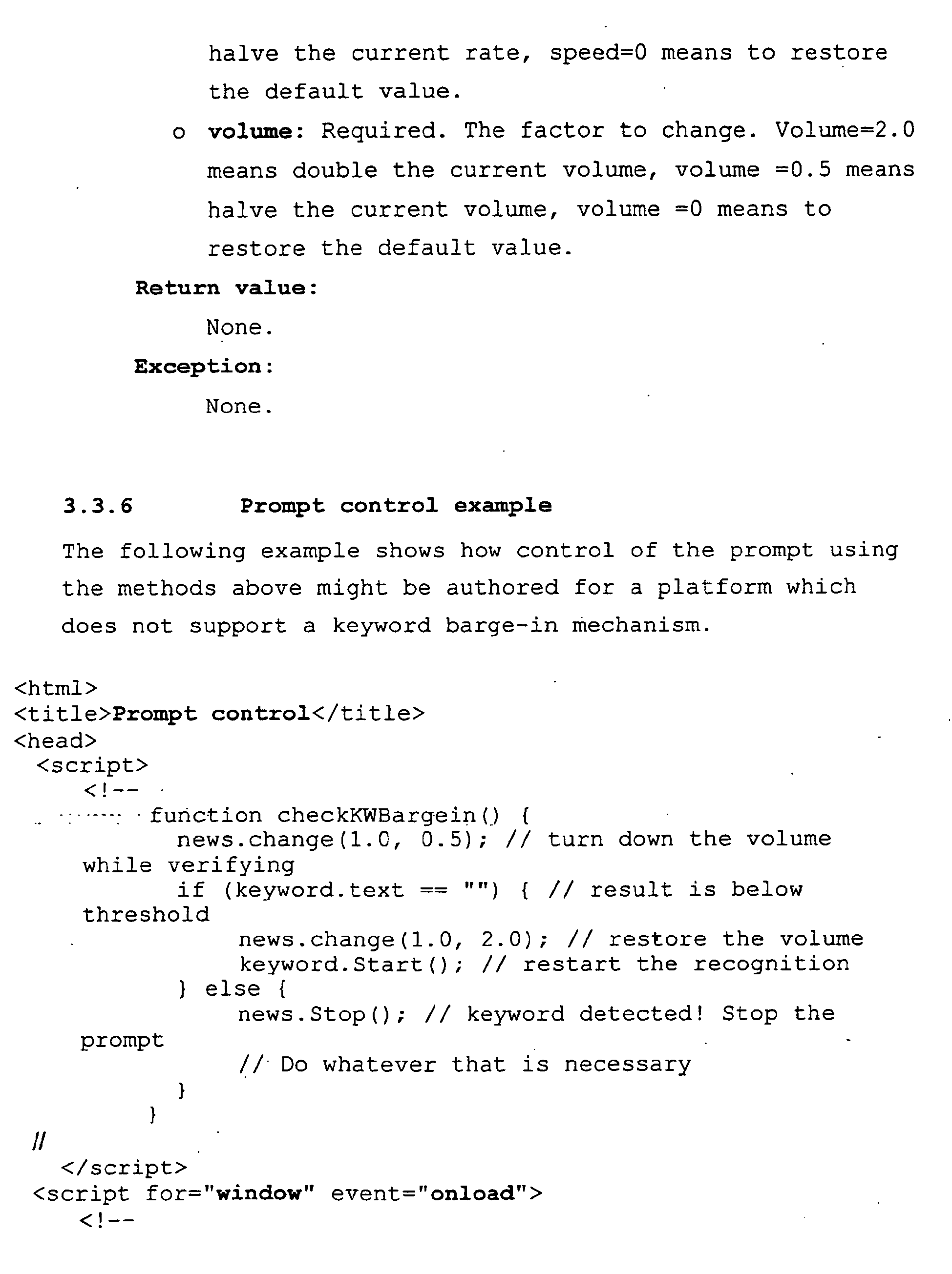

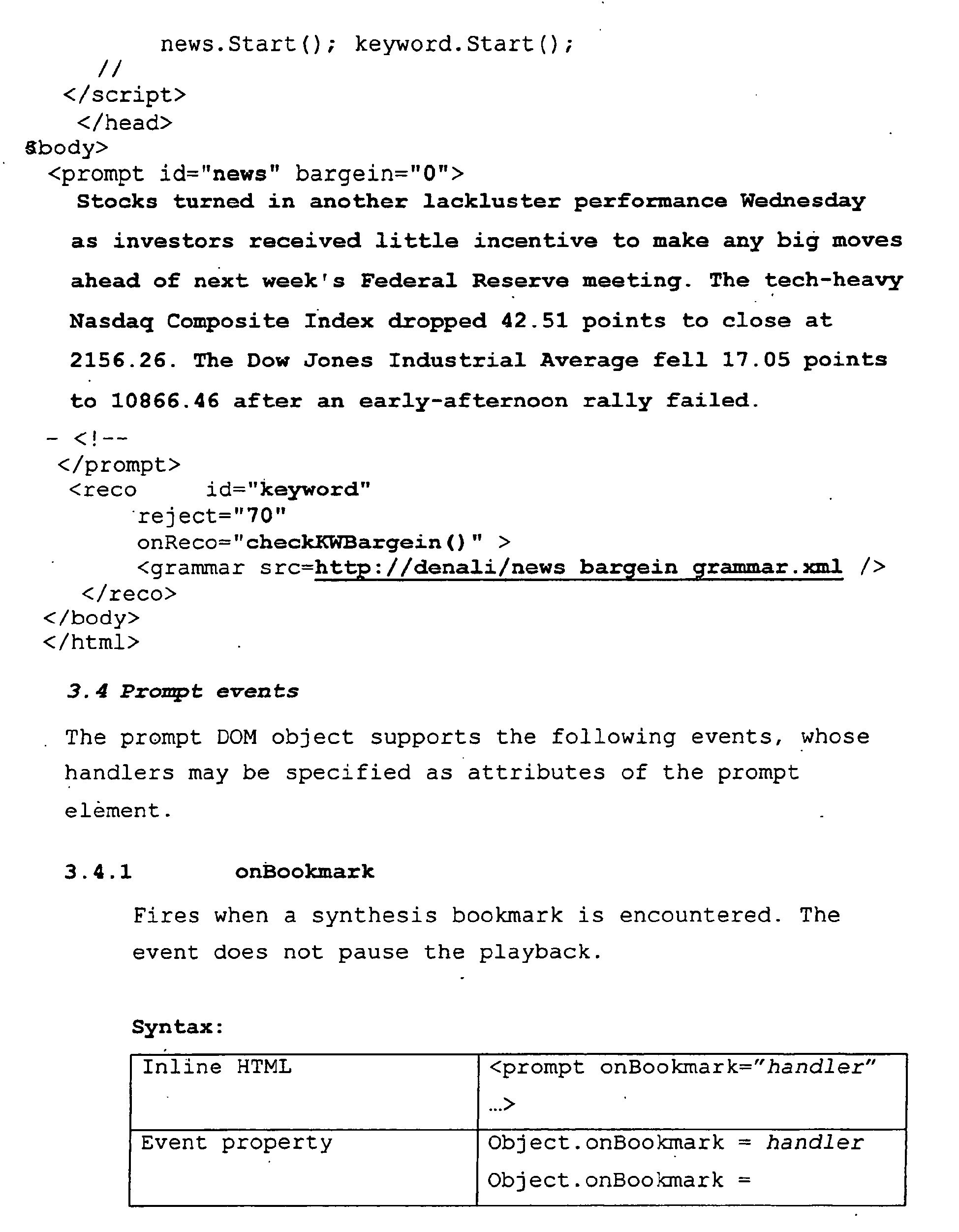

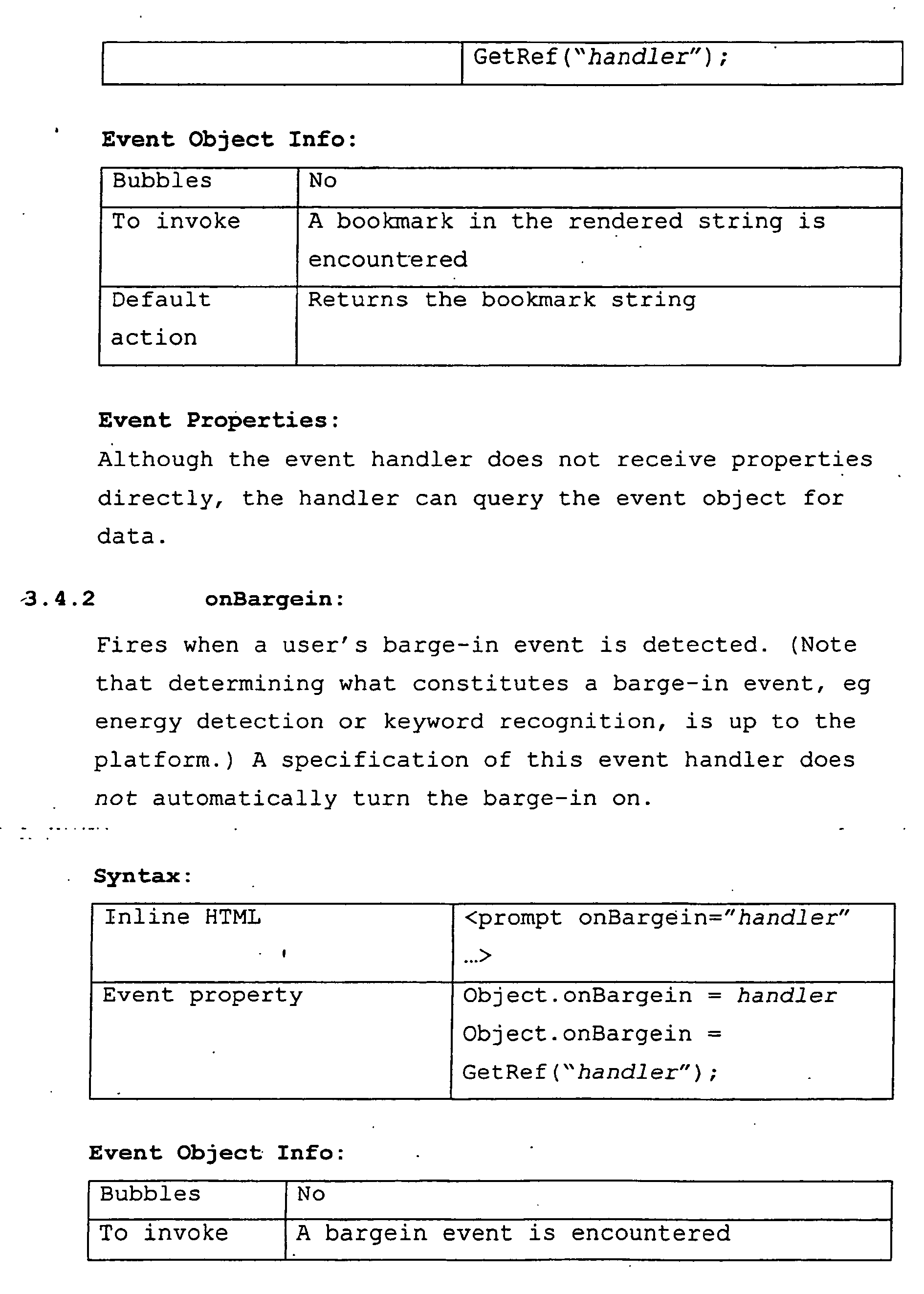

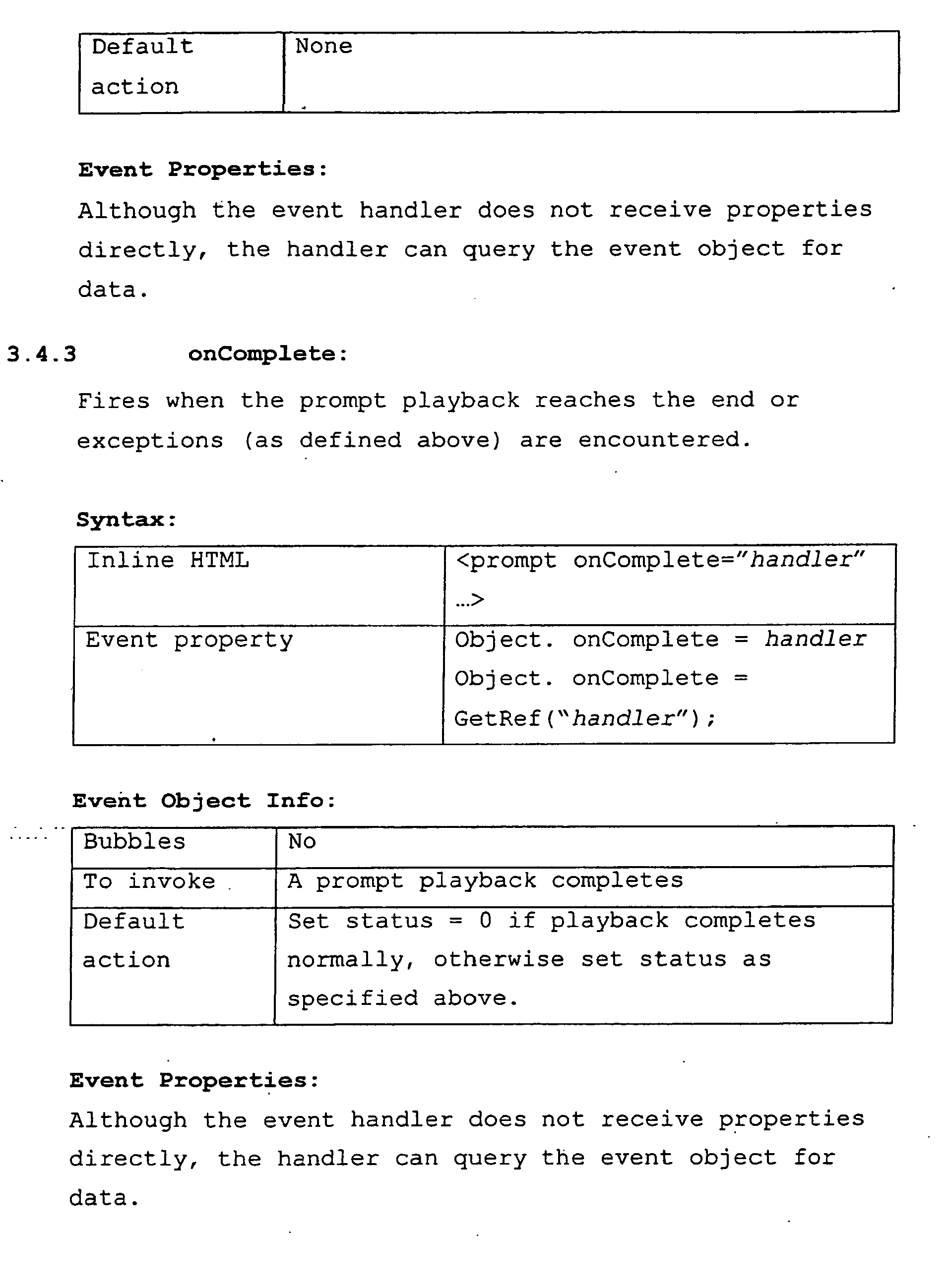

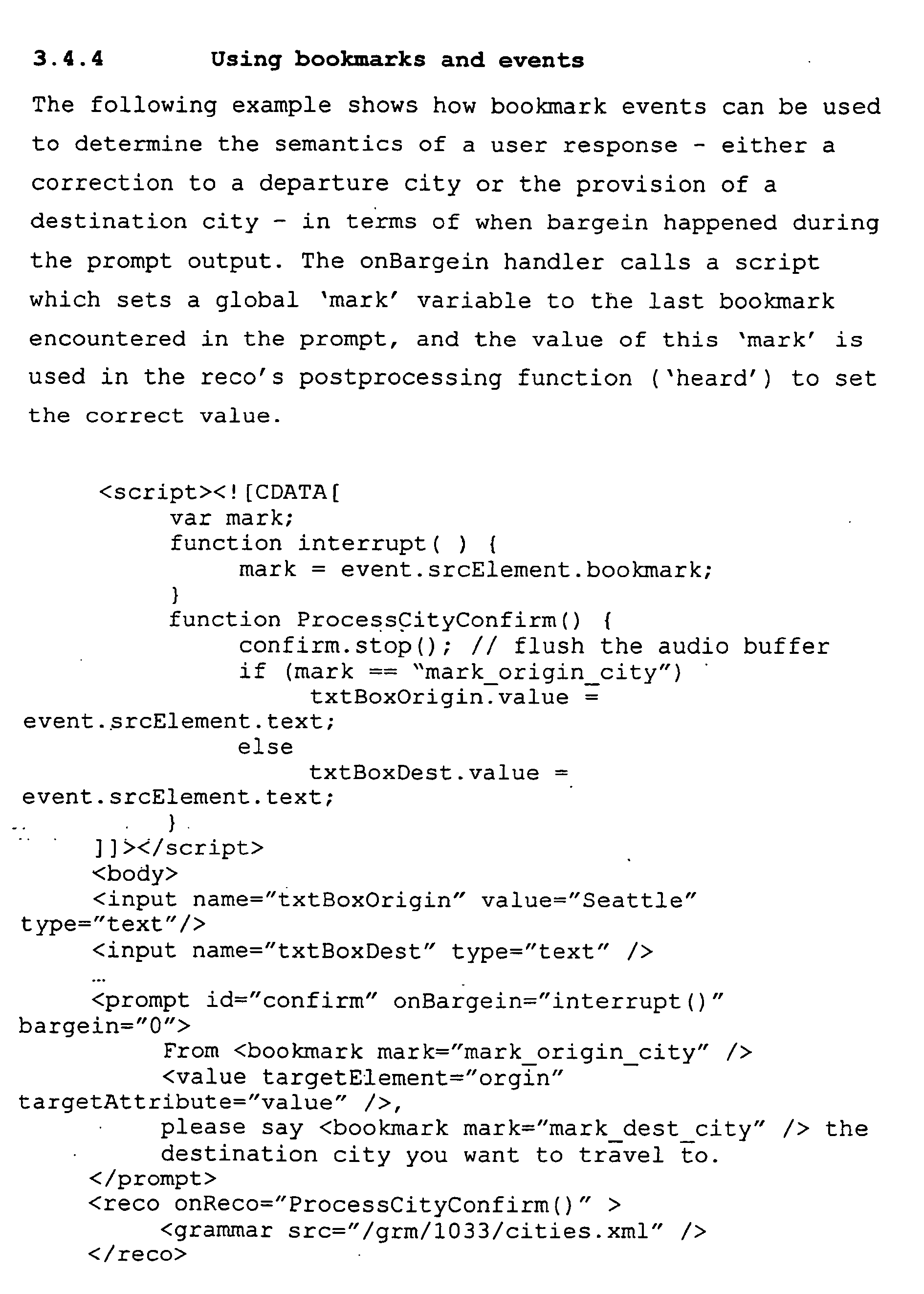

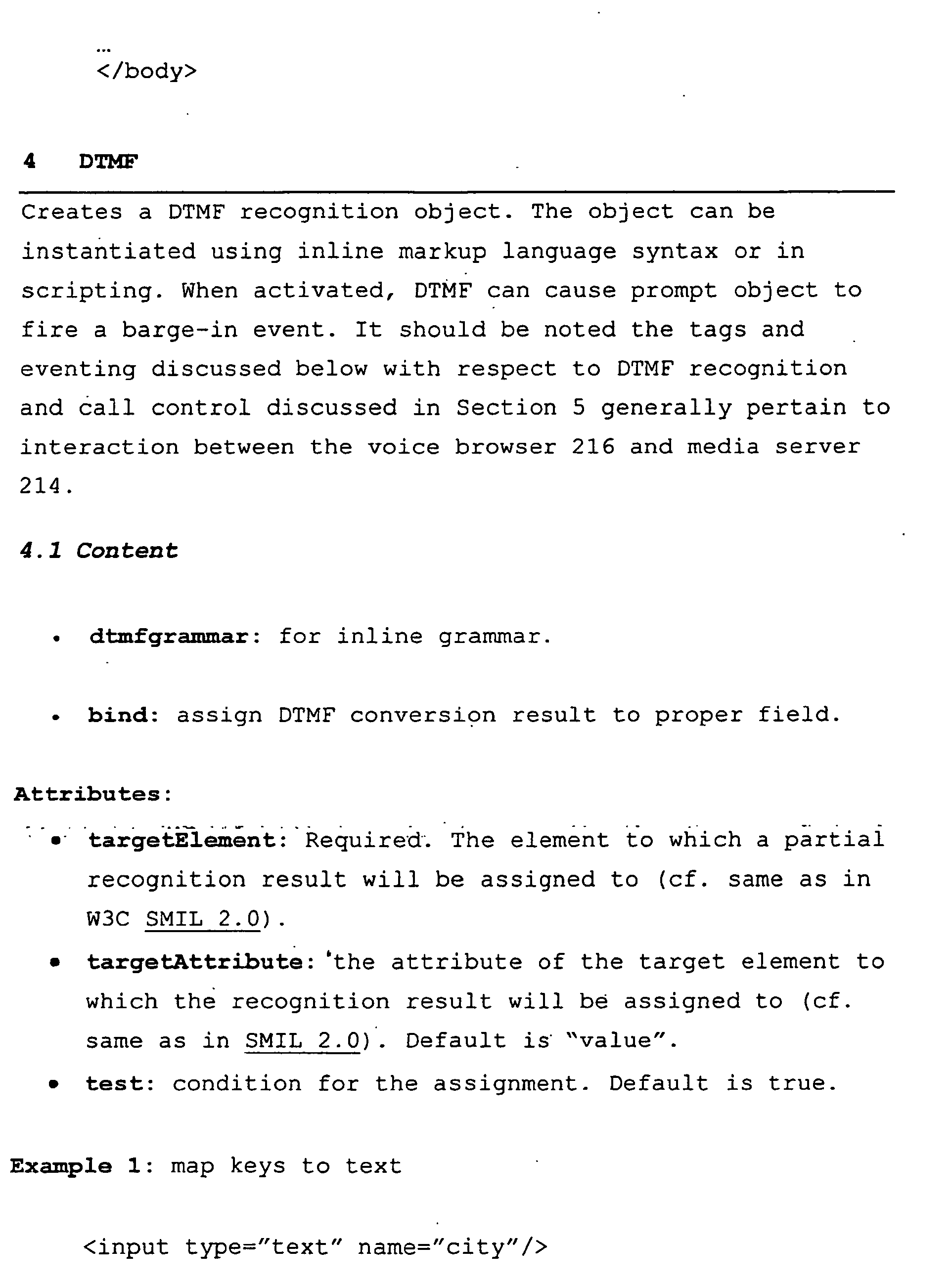

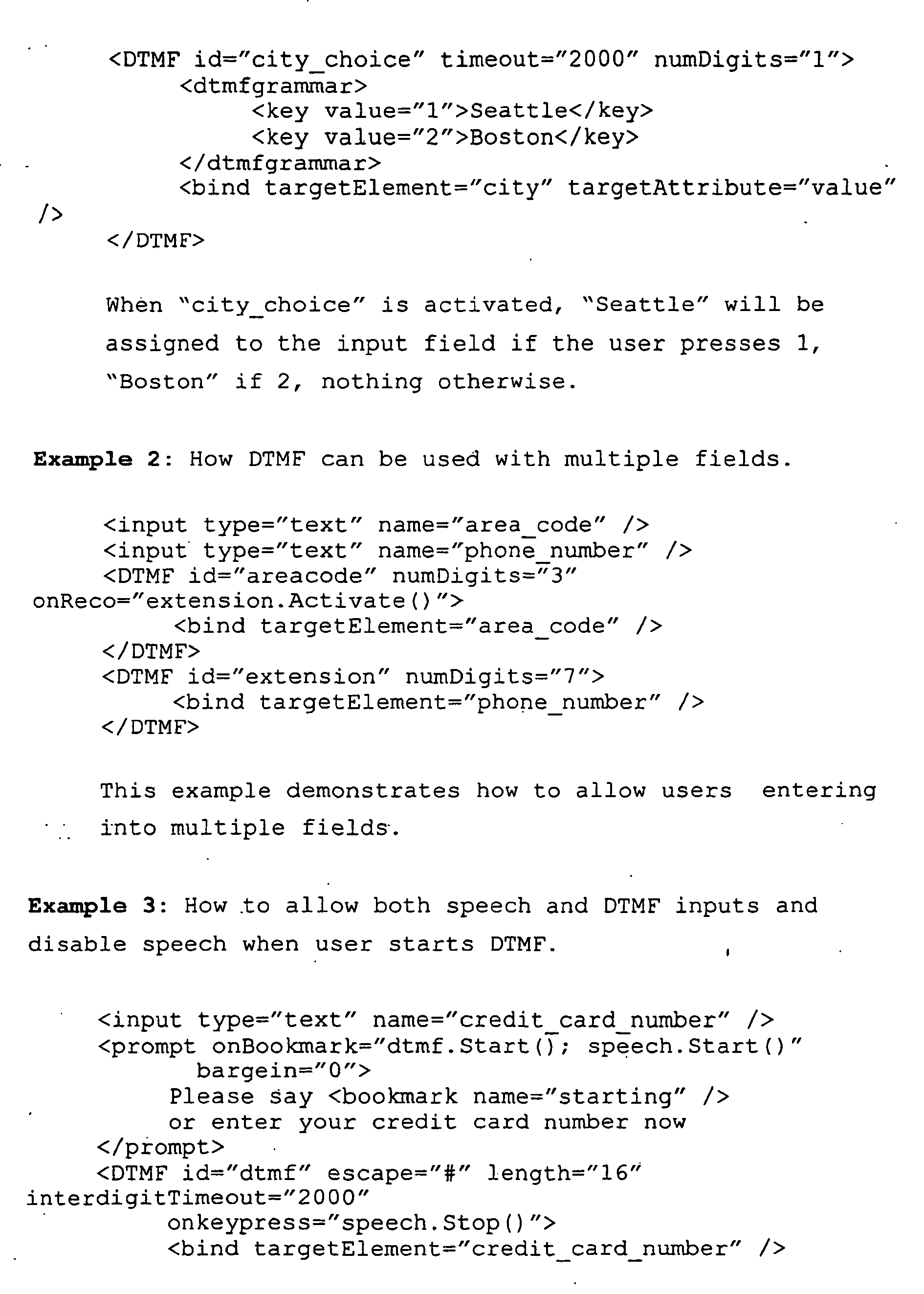

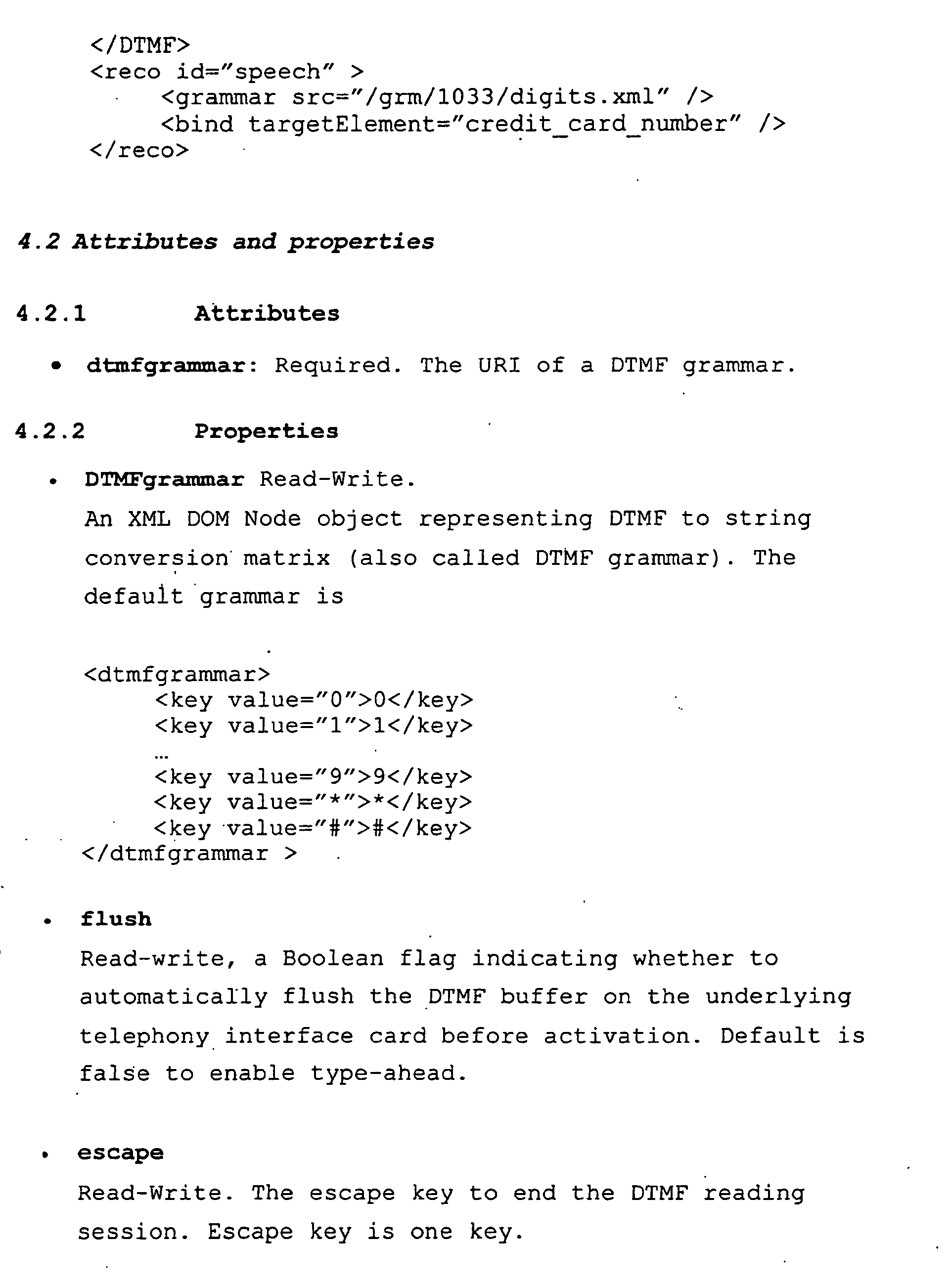

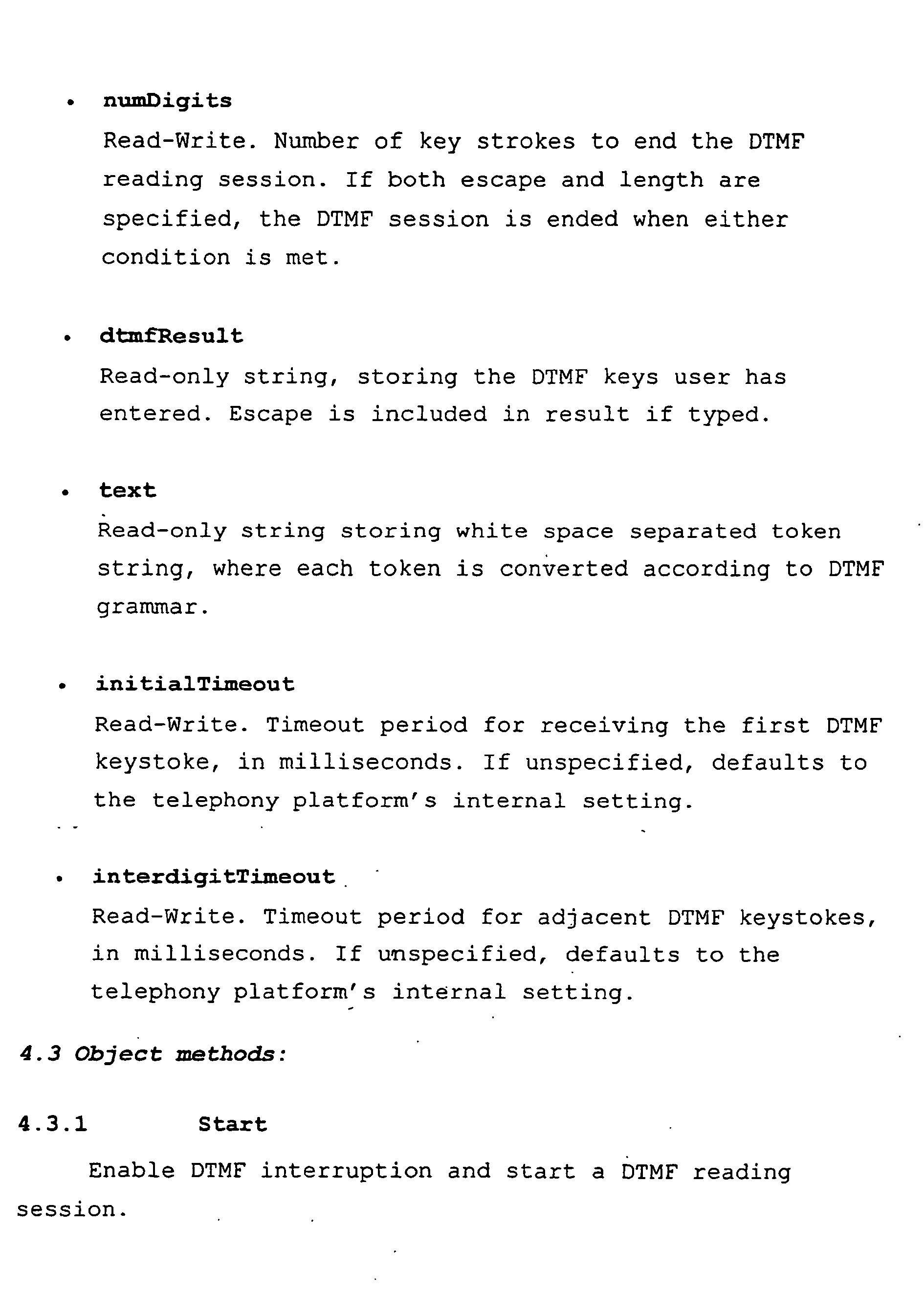

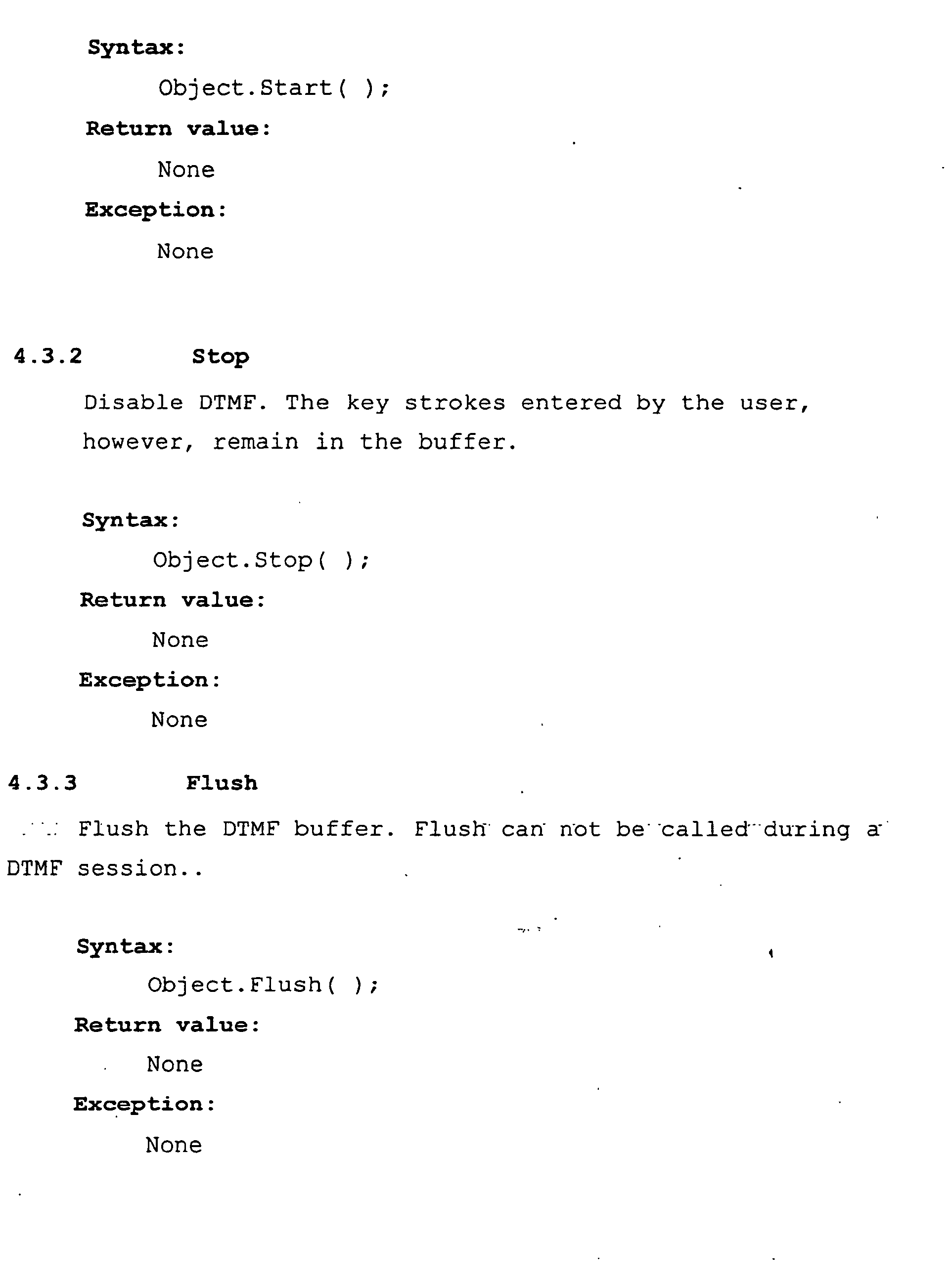

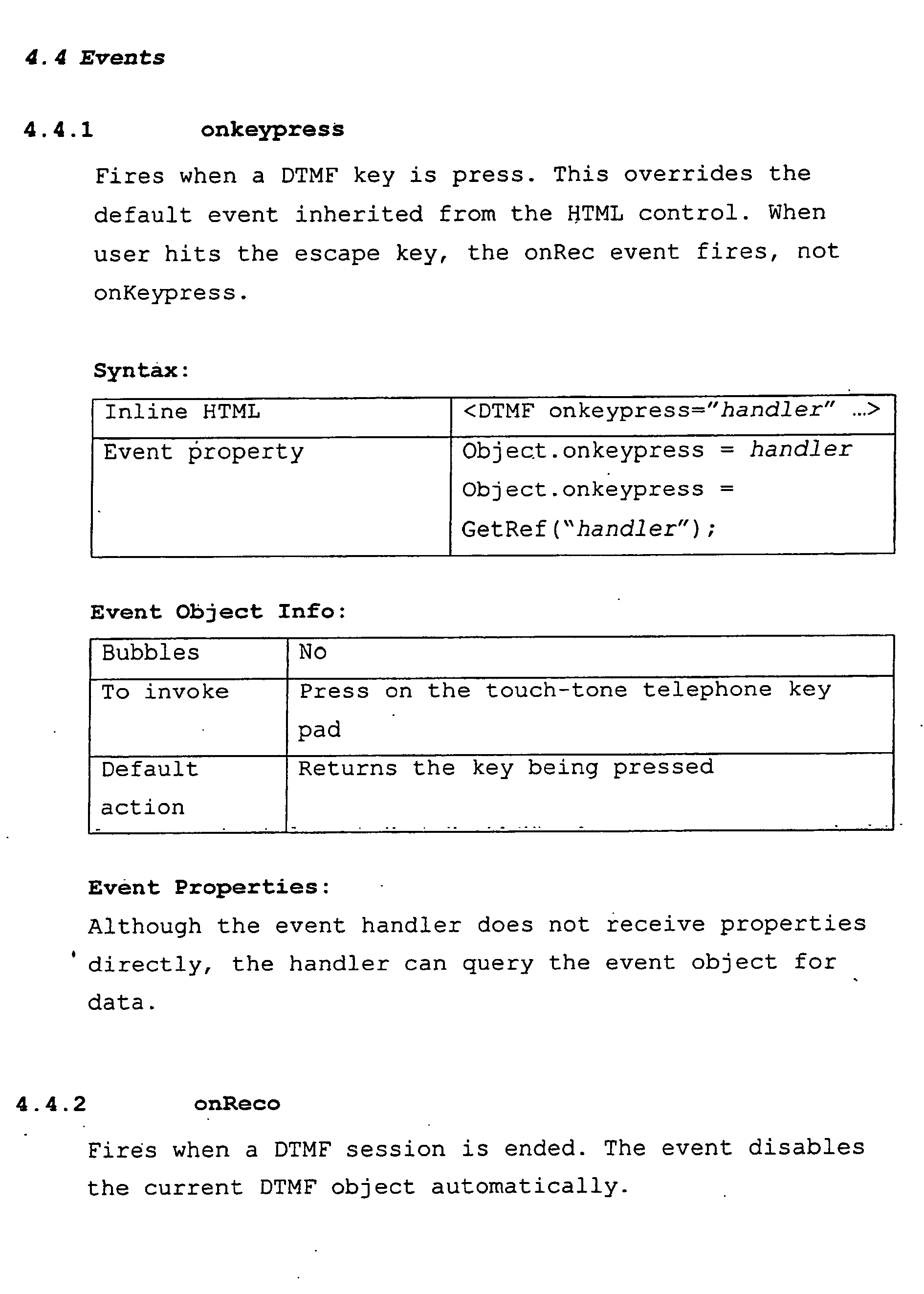

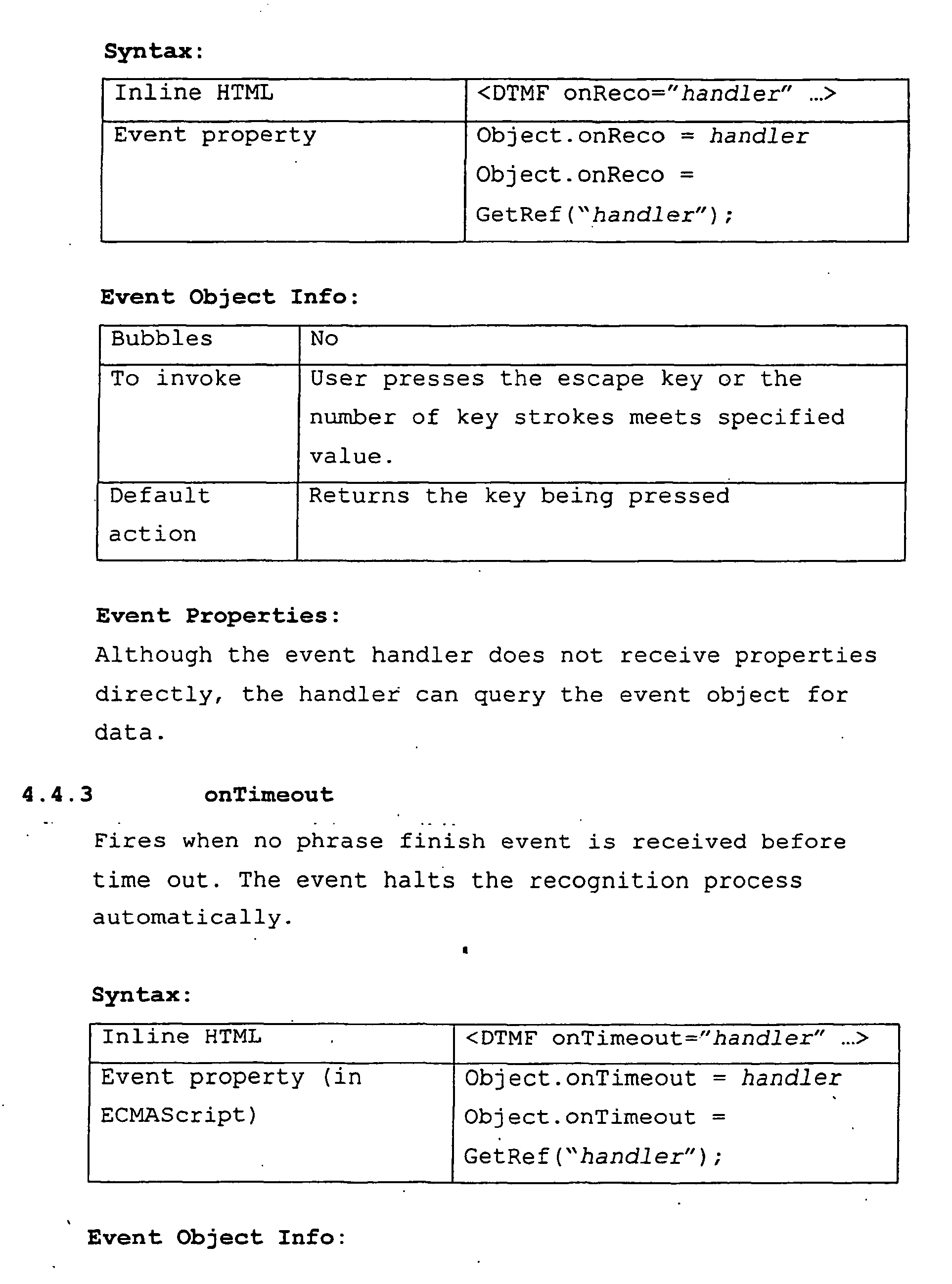

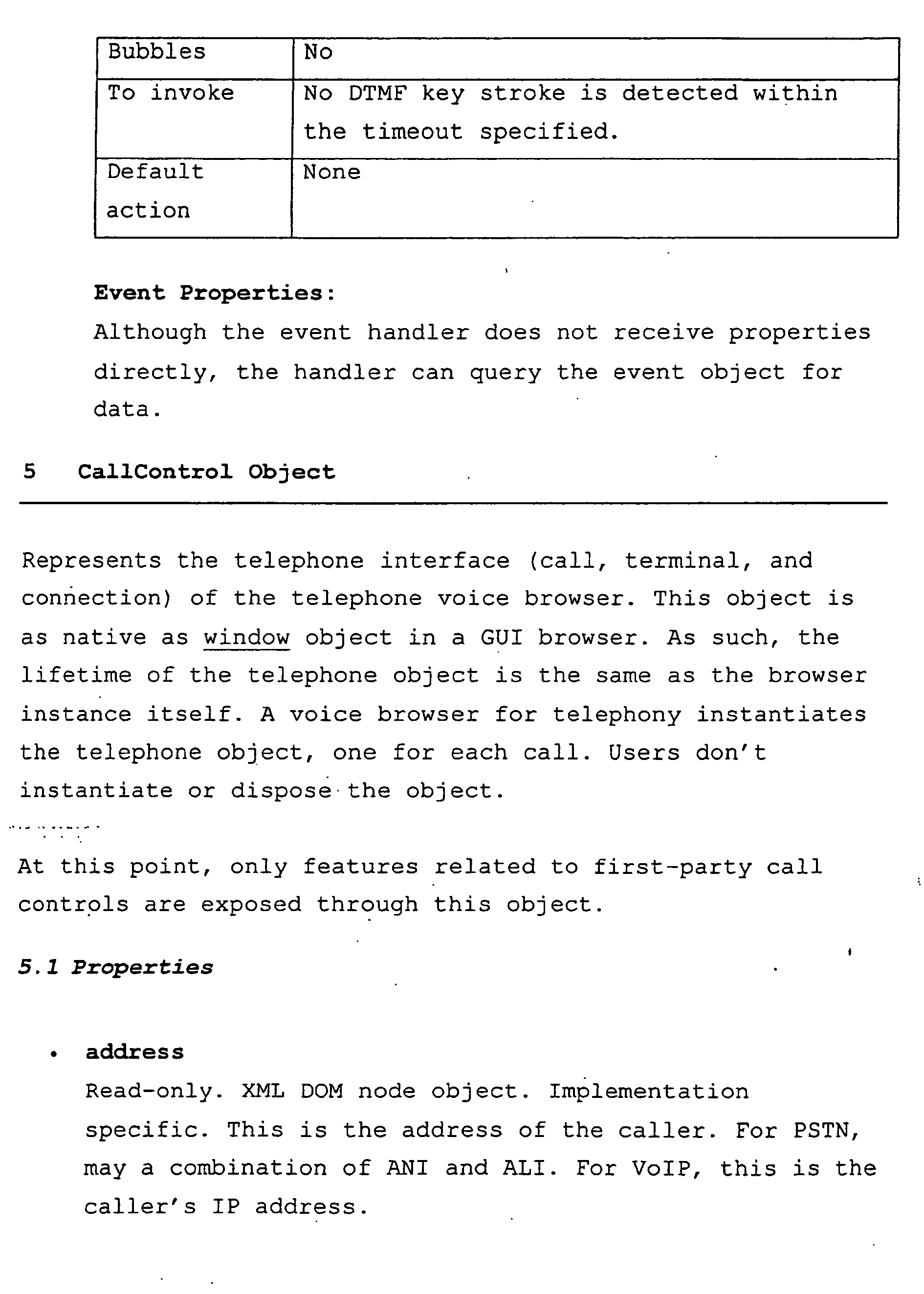

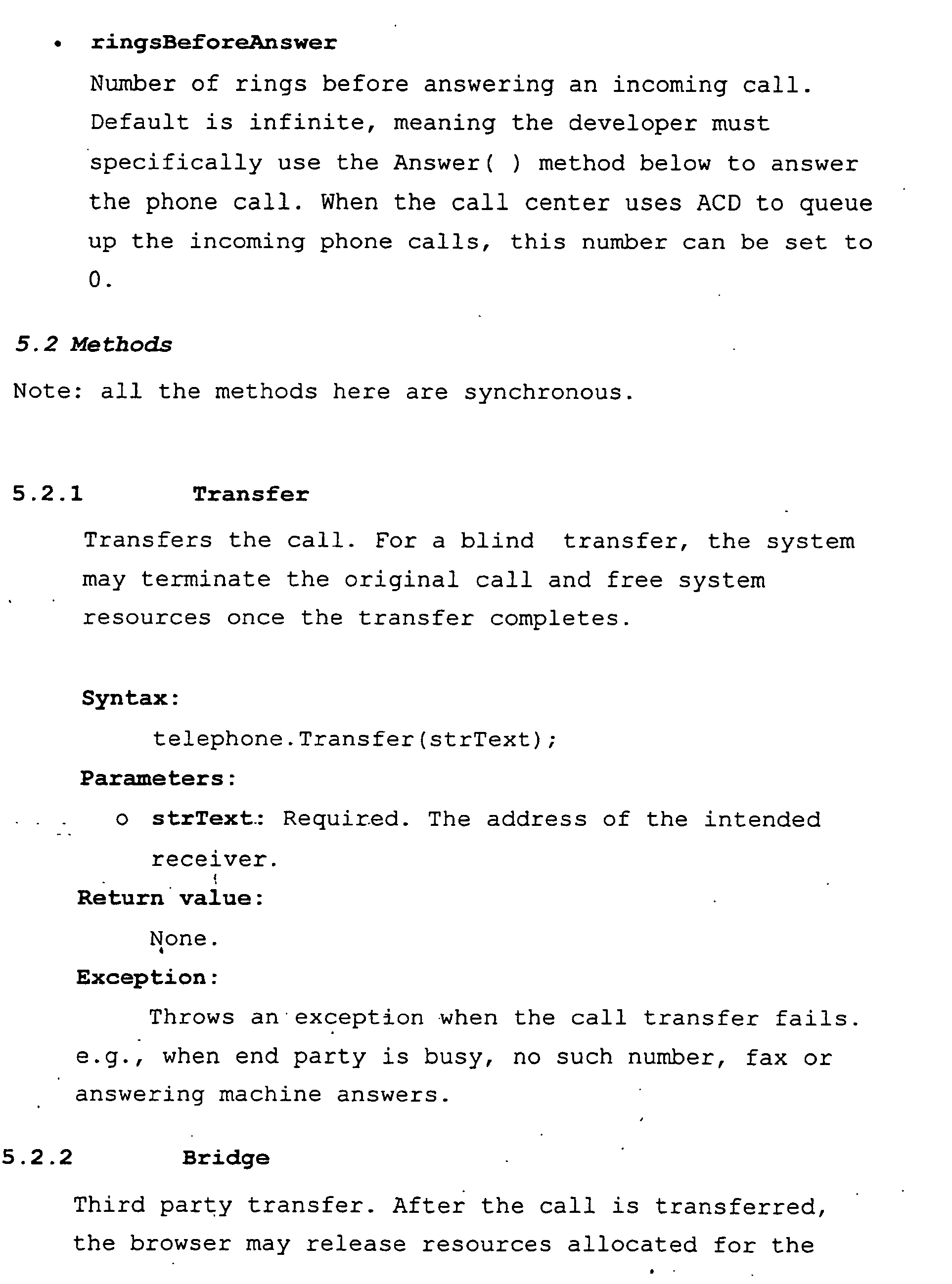

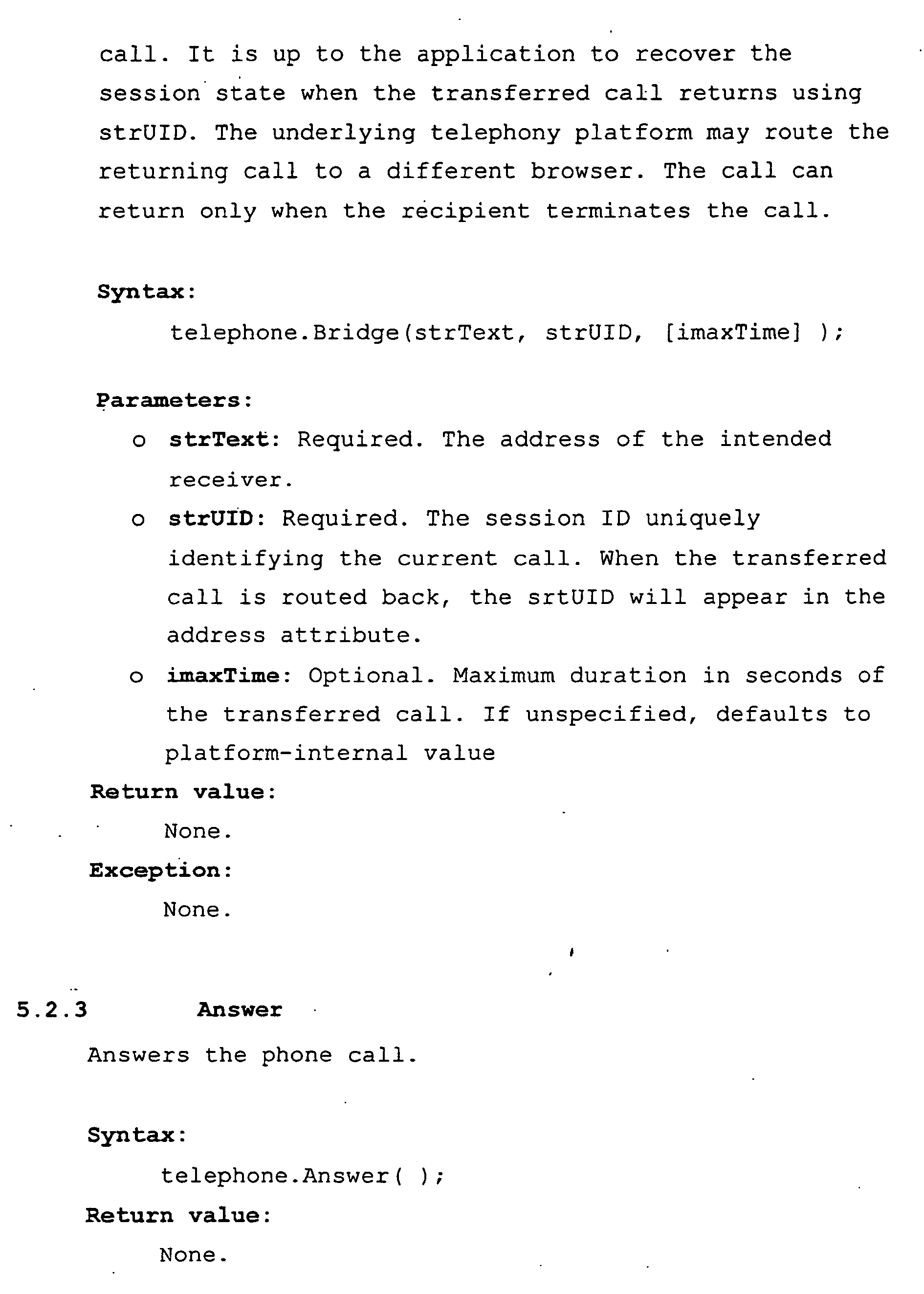

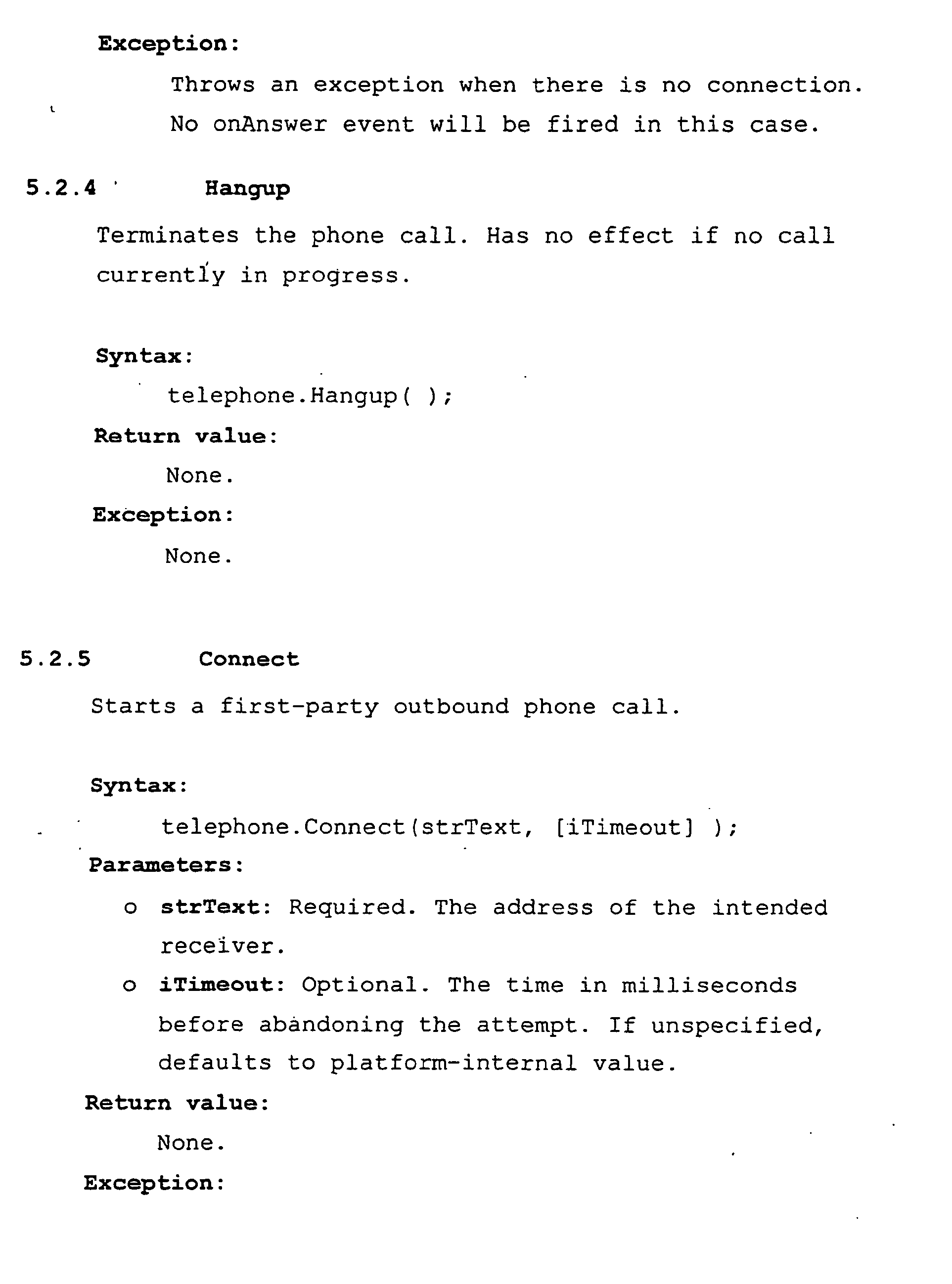

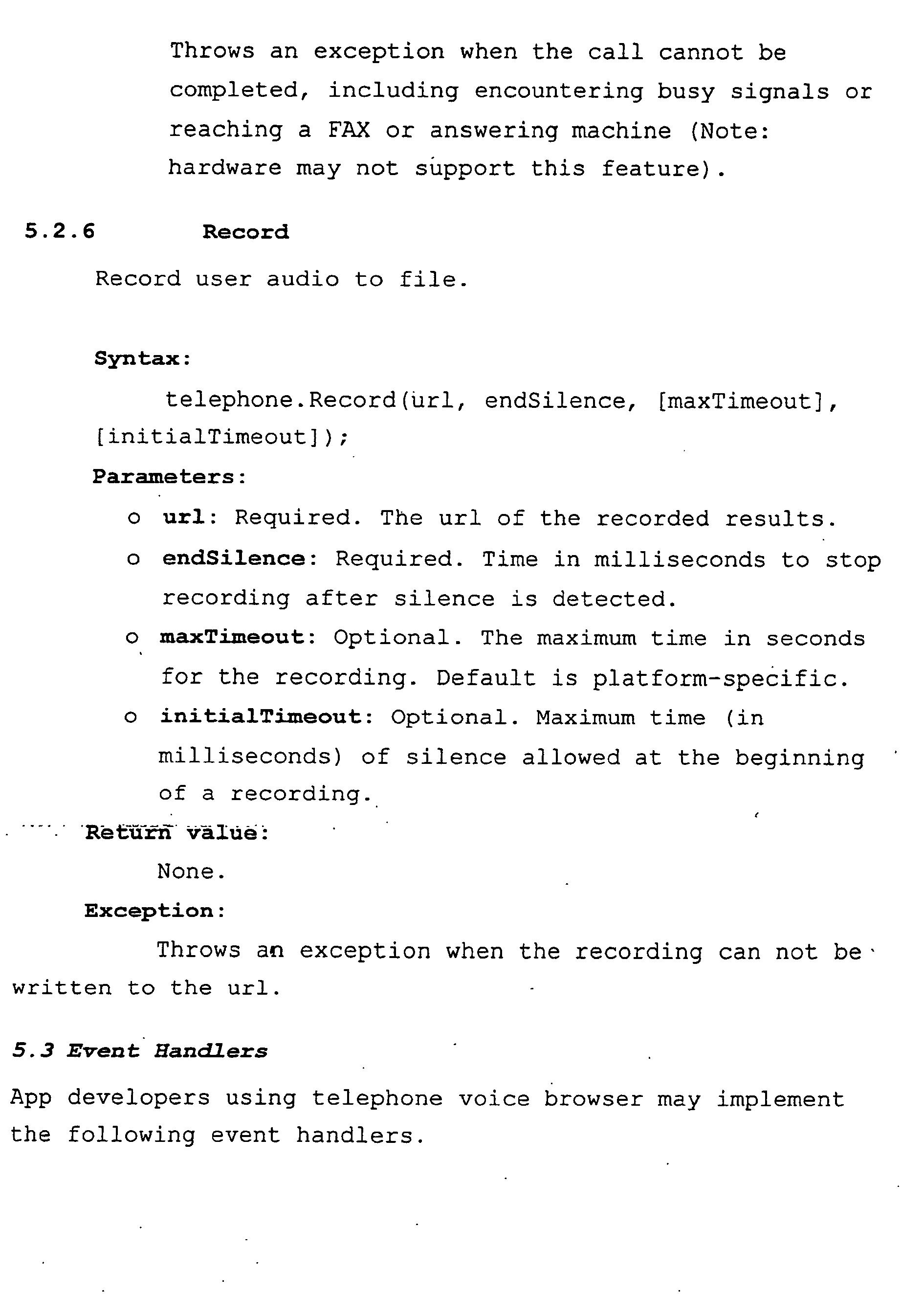

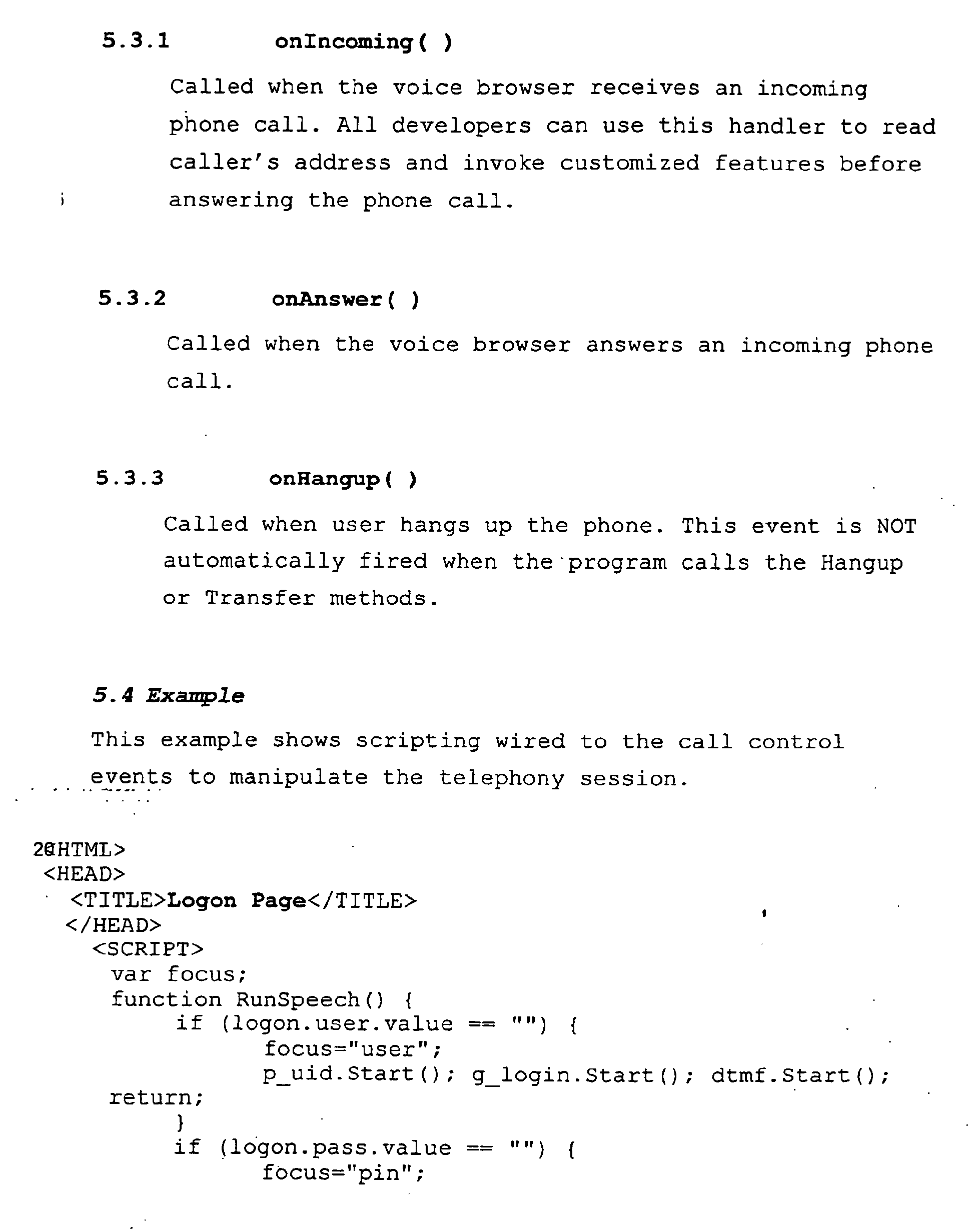

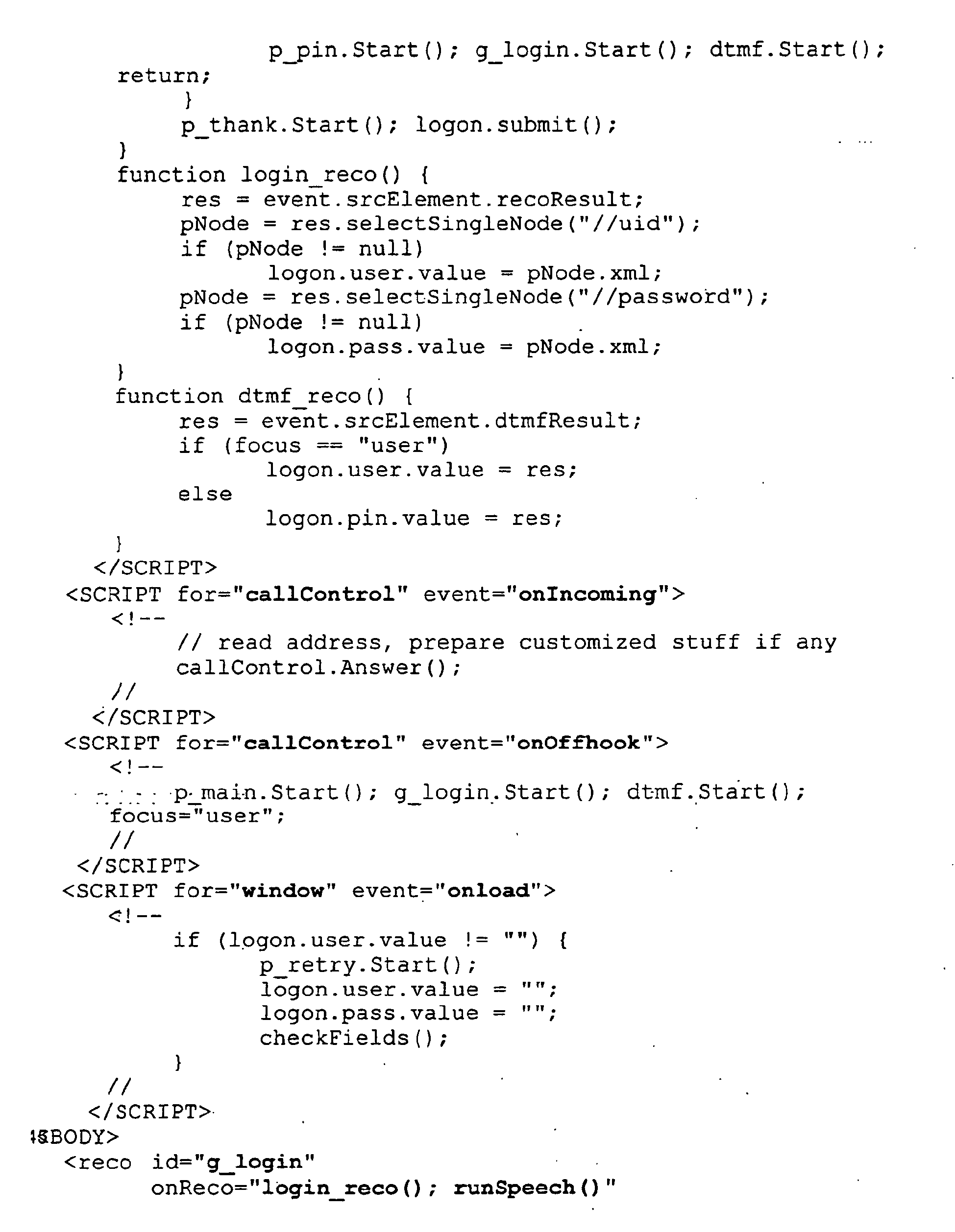

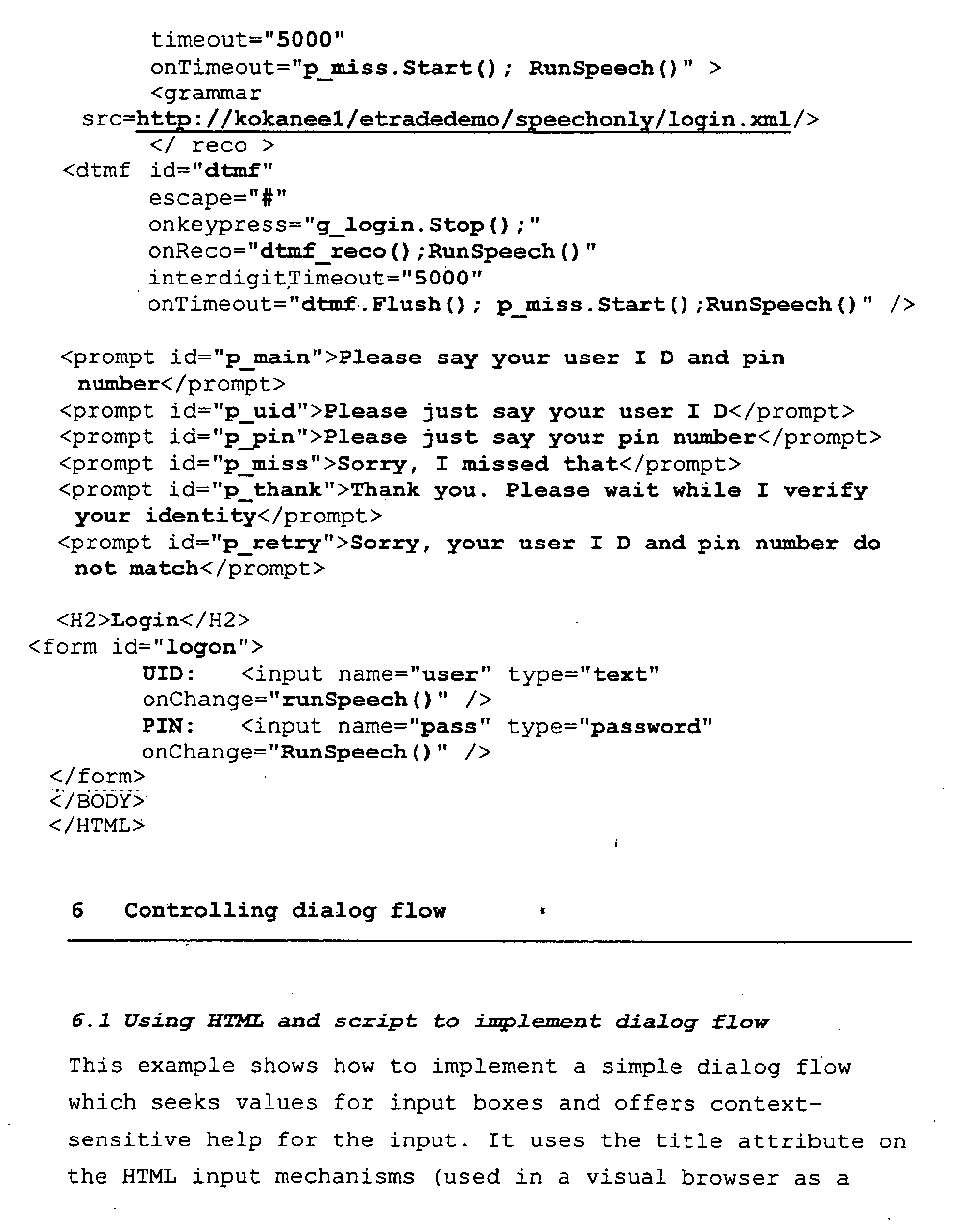

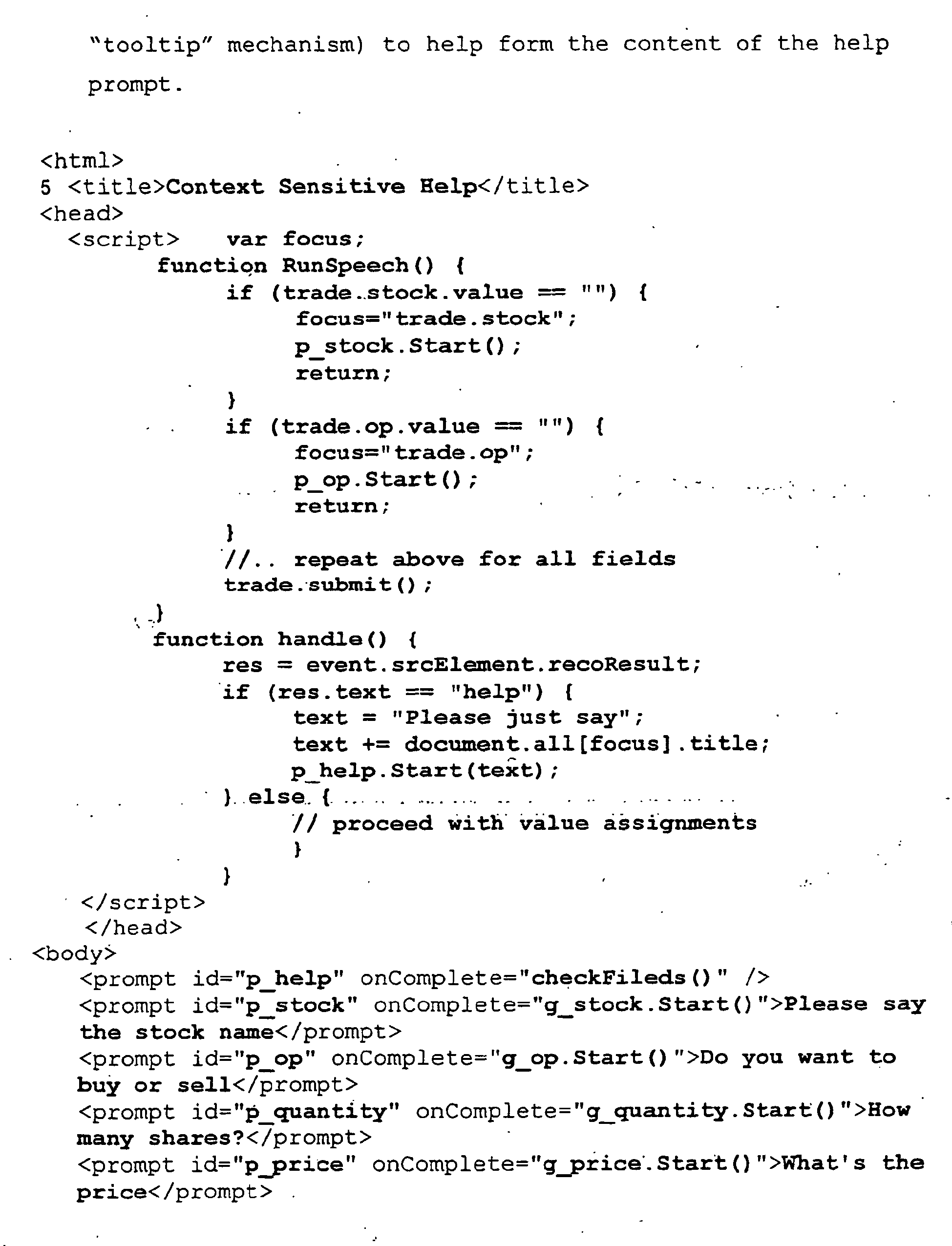

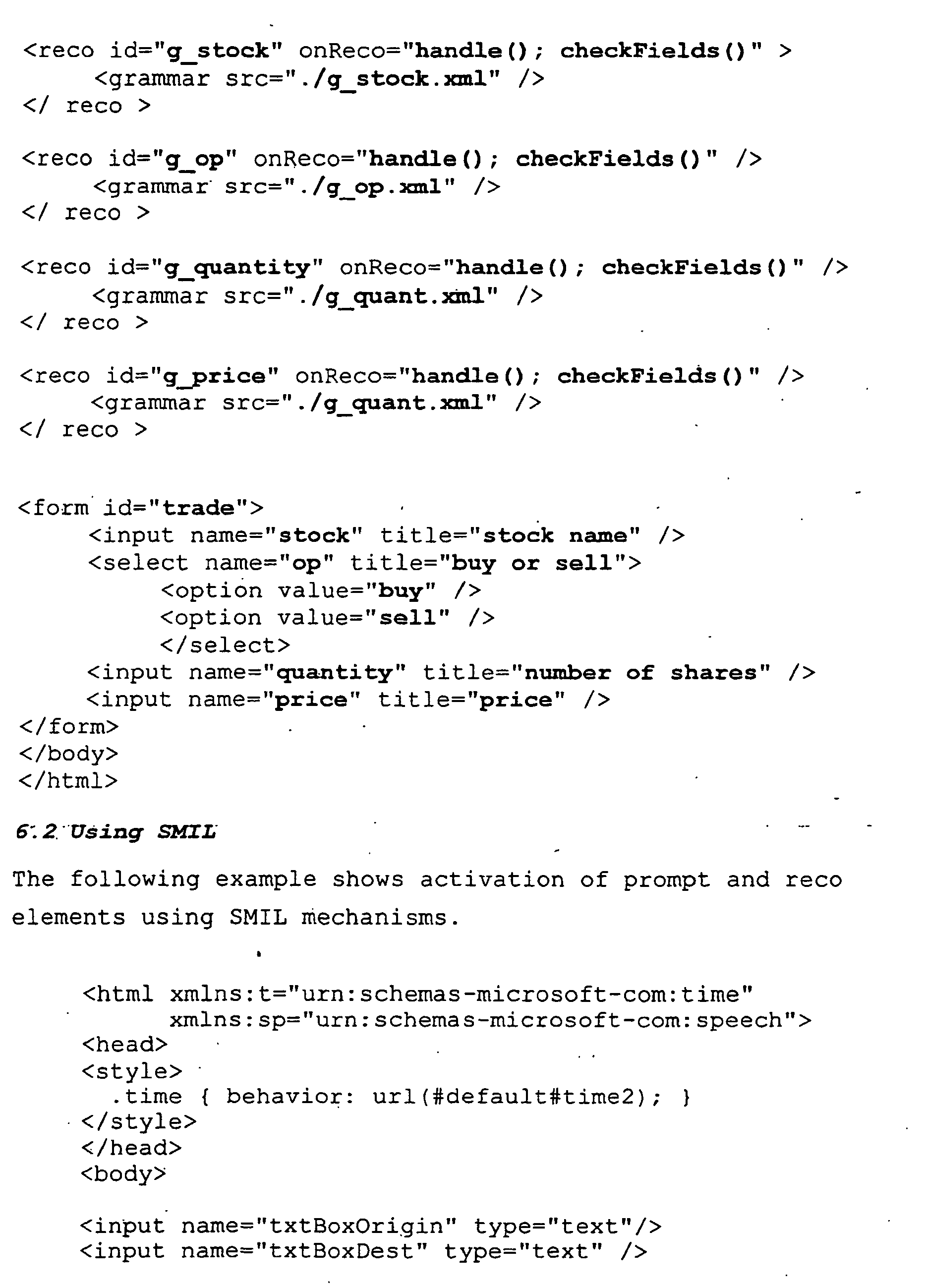

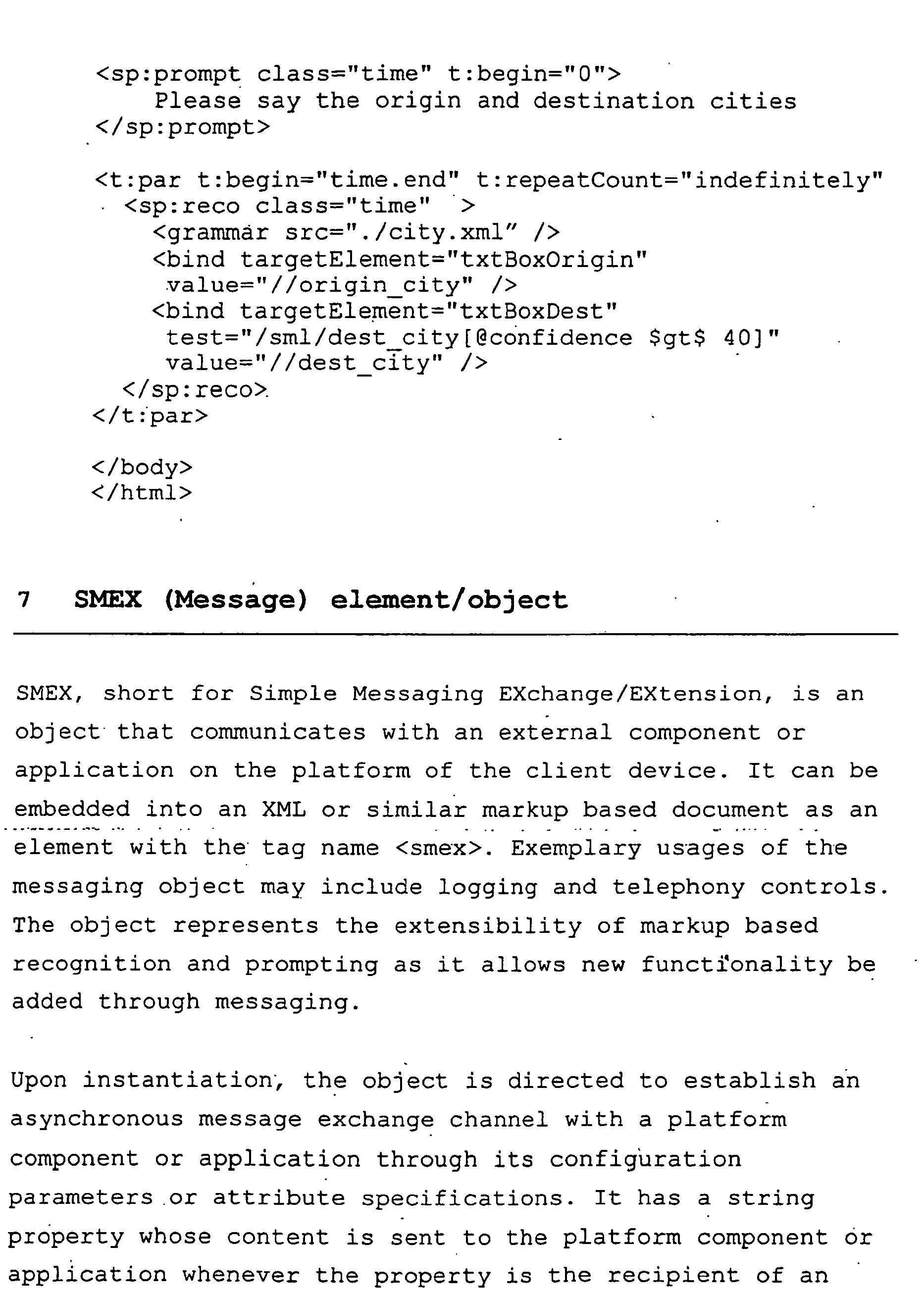

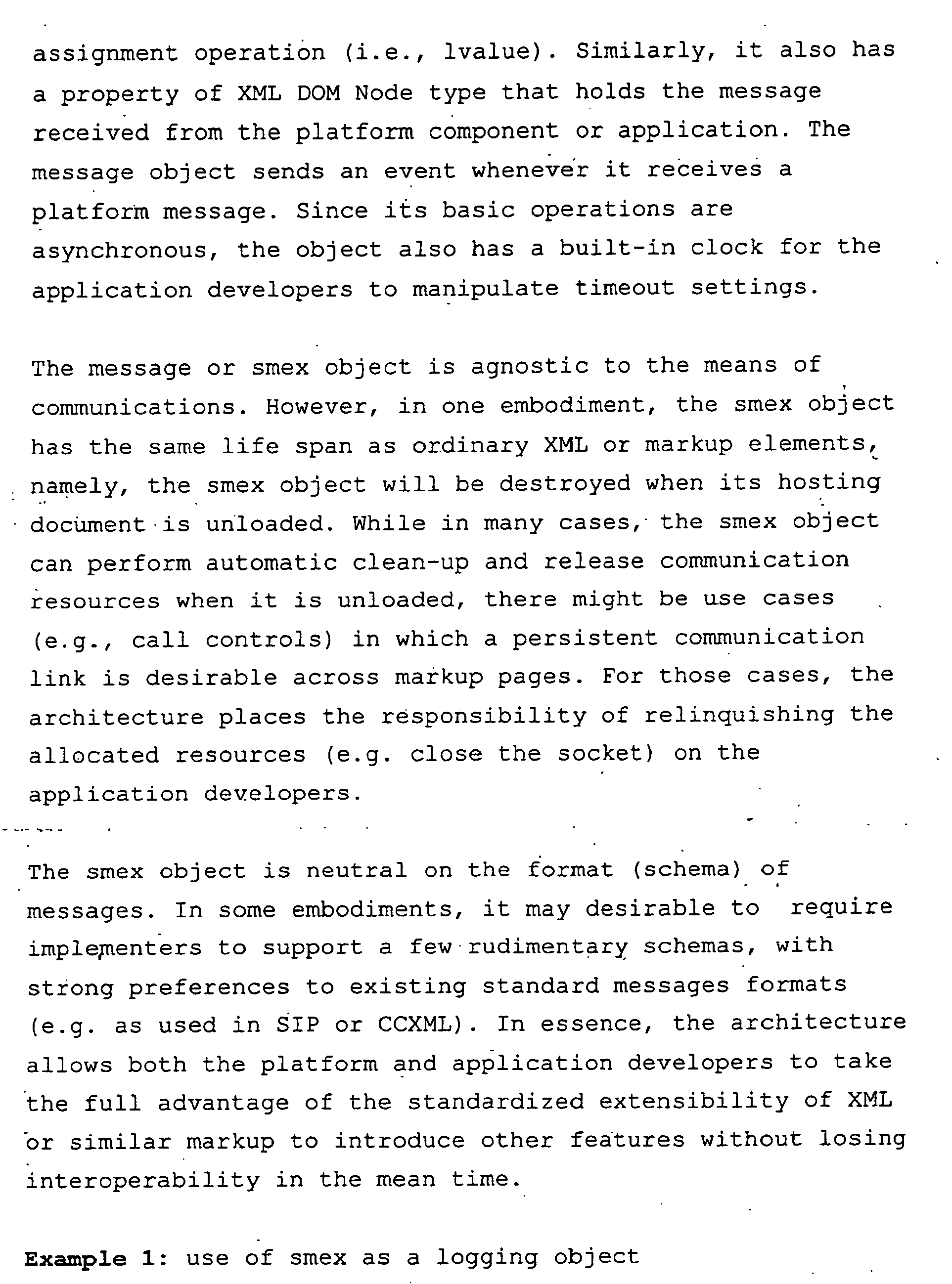

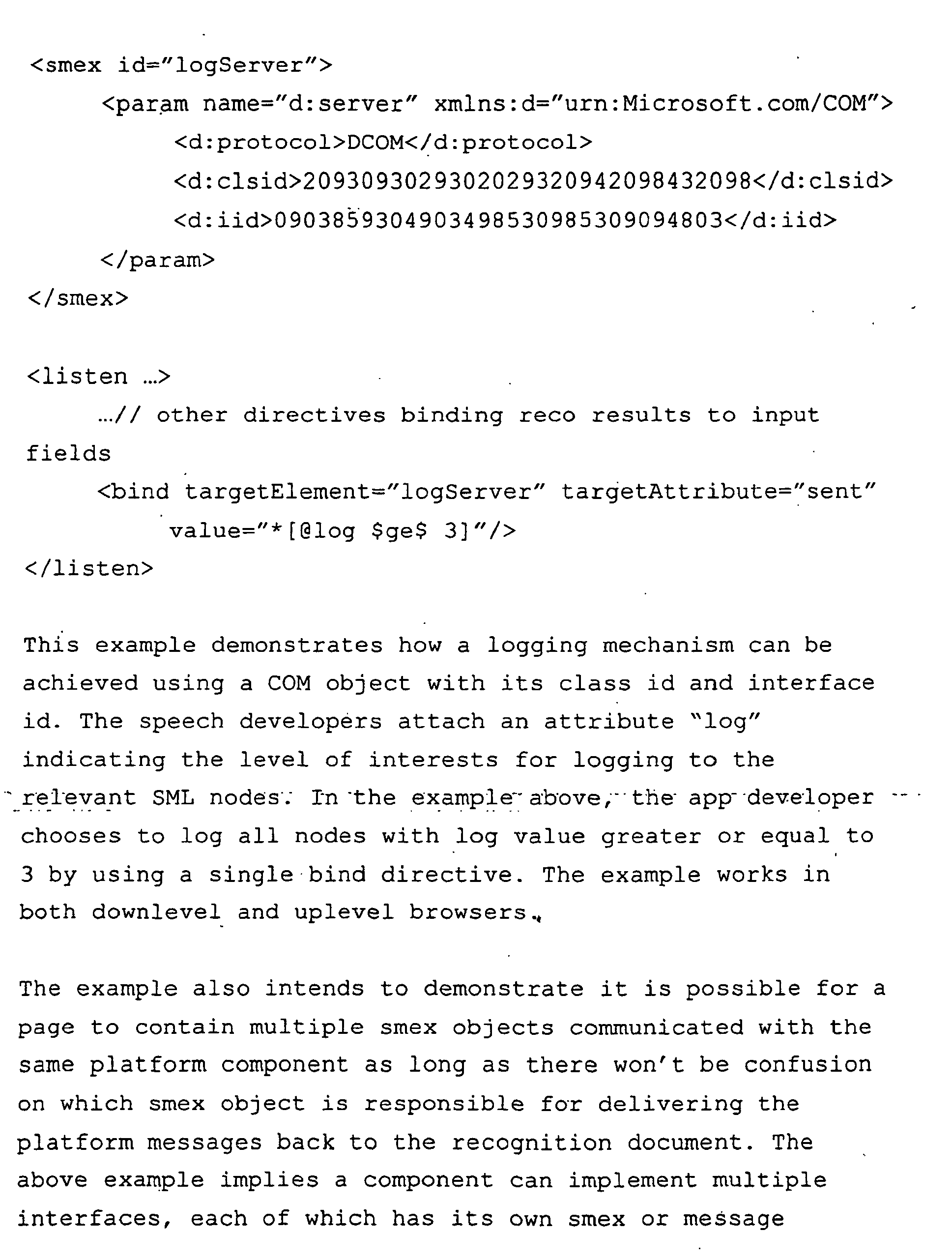

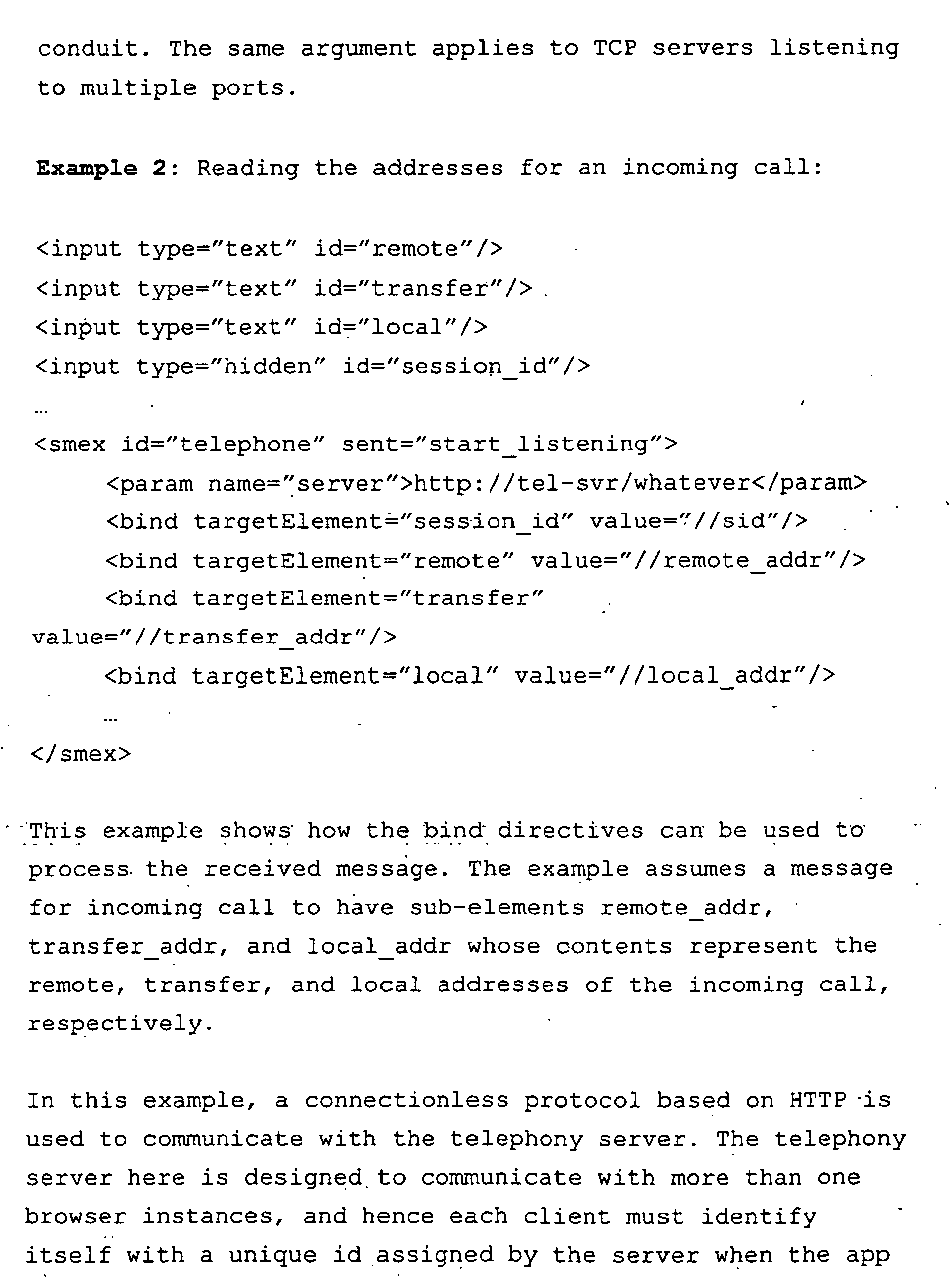

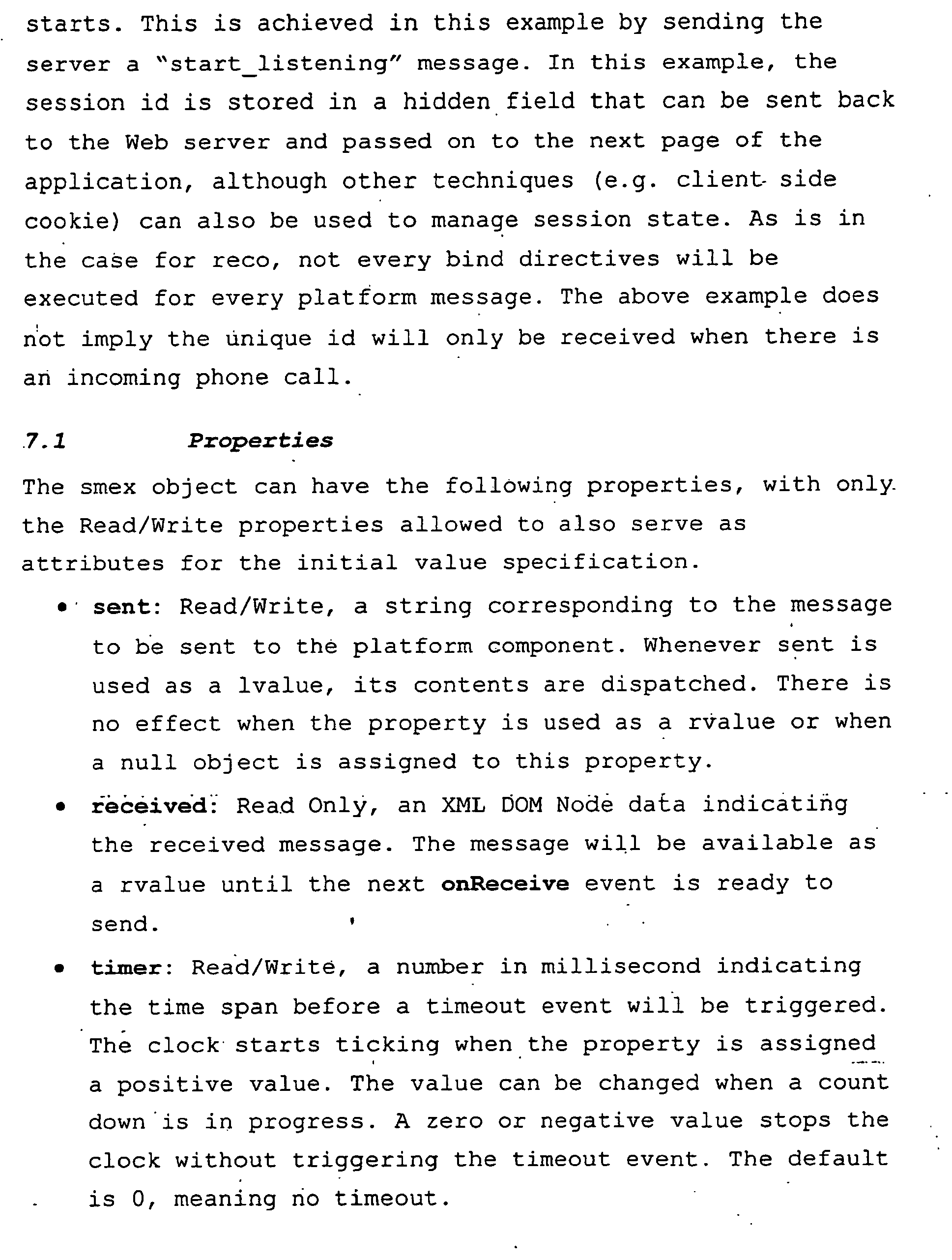

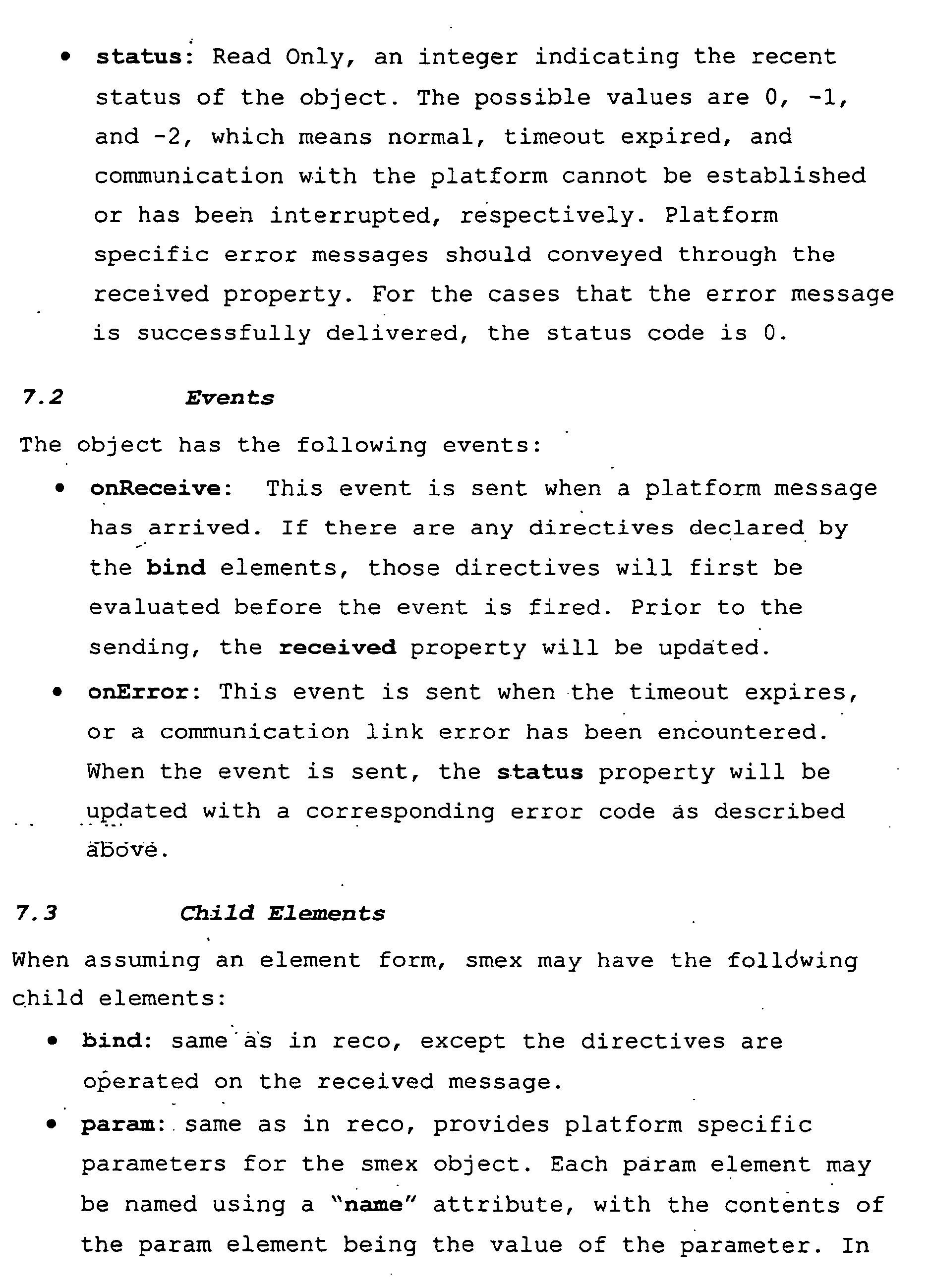

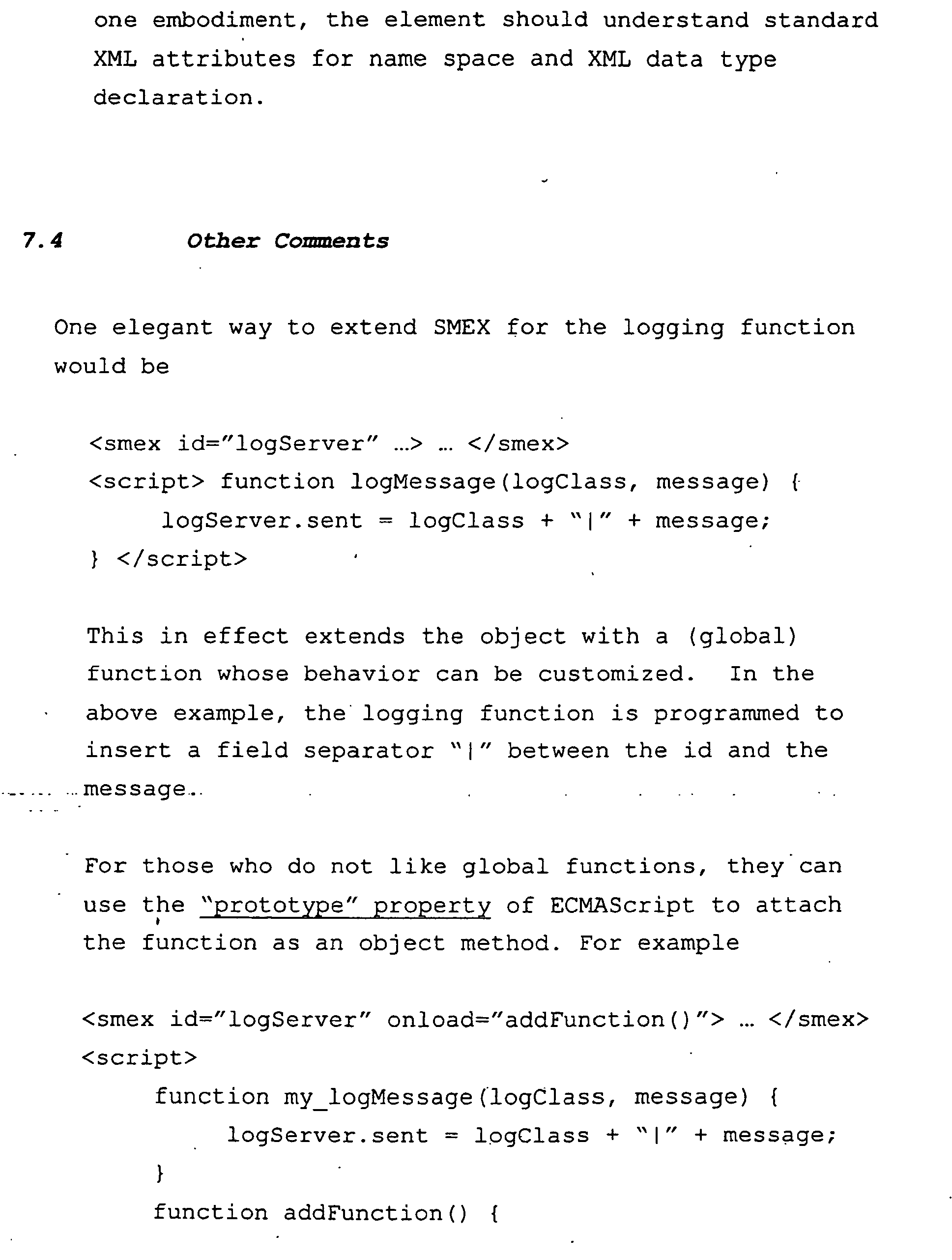

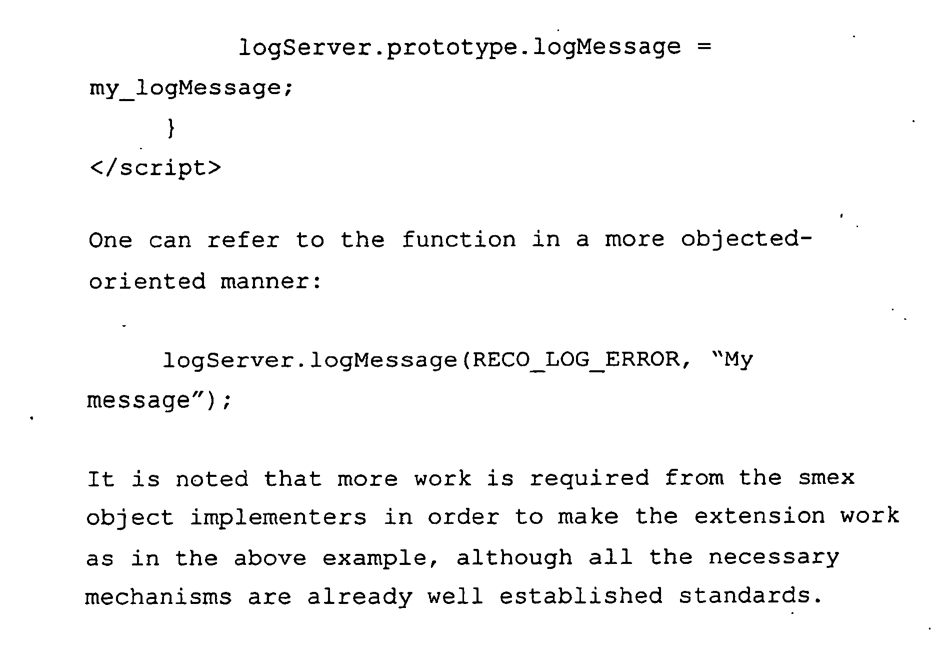

### The following is a list of further preferred embodiments of the invention:

Embodiment 1: A computer-readable medium having a markup language for execution on a client device in a client/server system, the markup language comprising an instruction indicating a grammar to associate with input entered through the client device.
Embodiment 2: The computer-readable medium of embodiment 1 wherein the instruction indicating a grammar provides a reference to a location of the grammar.
Embodiment 3: The computer-readable medium of embodiment 1 wherein the grammar is for one of speech recognition, handwriting recognition, gesture recognition and visual recognition.
Embodiment 4: The computer-readable medium of embodiment 3 wherein the instruction indicating a grammar includes a reference to a grammar for speech recognition.
Embodiment 5: The computer-readable medium of embodiment 1 wherein the markup language includes an instruction for receiving a recognition result pertaining to recognized speech and associating the result with a data field on the client device.
Embodiment 6: The computer-readable medium of embodiment 5 wherein the instruction for receiving a recognition result associates the recognition result to a plurality of data fields.
Embodiment 7: The computer-readable medium of embodiment 1 wherein the markup language includes an instruction to audibly render an indication when the speech was not recognized.
Embodiment 8: The computer-readable medium of embodiment 1 wherein the input comprises a text string.
Embodiment 9: The computer-readable medium of embodiment 8 wherein the markup language includes an instruction for receiving the text string from another component.
Embodiment 10: The computer-readable medium of embodiment 9 wherein markup language associates the grammar to process the text string.
Embodiment 11: A computer-readable medium including instructions readable by a computer which, when implemented, cause the computer to handle information by performing steps comprising:
   receiving a markup language page from a web server having a field for input data;
   receiving input from a user related to the field; and
   sending data indicative of the input and an indication of a grammar for recognition.
Embodiment 12: The computer-readable medium of embodiment 11 wherein the indication provides a reference to locations of the grammars.
Embodiment 13: The computer-readable medium of embodiment 12 wherein the indication includes a reference to a language for speech recognition.
Embodiment 14: A method for recognition in a client/server network, the method comprising:
   receiving a markup language page having a field for input data on a client device connected to a network from a web server at an address on the network different than the client device;
   receiving input from a user related to the field on the client device; and
   sending data indicative of the input and an indication of a grammar for recognition to a recognition server at an address on the network different than the client device.
Embodiment 15: The method of embodiment 14 and further comprising:
   normalizing the data indicative of the input prior to sending the data.
Embodiment 16: The method of embodiment 14 and further comprising:
   receiving a recognition result pertaining to recognized speech and associating the result with a data field on the client device.
Embodiment 17: A computer-readable medium having a markup language for execution on a client device in a client/server system, the markup language comprising an instruction indicating an object model element having an attribute or a method for recognition.
Embodiment 18: The computer-readable medium of embodiment 17 wherein the element is for one of speech recognition, handwriting recognition, gesture recognition, DTMF recognition and visual recognition.
Embodiment 19: The computer-readable medium of embodiment 17 wherein the element comprises an indication of a grammar for recognition.
Embodiment 20: The computer-readable medium of embodiment 19 wherein element pertains to receiving and processing a text string like recognition.
Embodiment 21: The computer-readable medium of embodiment 20 and further comprising a second object model receiving the text string from another component.
Embodiment 22: A computer-readable medium having a markup language for execution on a client device in a client/server system, the markup language comprising an instruction indicating an object model element having an attribute or a method for audibly prompting.
Embodiment 23: The computer-readable medium of embodiment 22 wherein the markup language comprises one of HTML, XHTML, cHTML, XML and WML.
Embodiment 24: The computer-readable medium of embodiment 22 wherein the markup language comprises a scripting language.
Embodiment 25: The computer-readable medium of embodiment 22 wherein the markup language comprises a synchronized markup language.

## Claims

1. A computer-readable storage medium having a markup language for execution on a client device in a client/server system comprising the client device and a remote recognition server, the markup language comprising:
an instruction to provide to the remote recognition server that is remote from the client device an indication of a grammar to associate with input entered through the client device, and
an instruction related to a mode of operation of the remote recognition server related to when recognition results are to be returned to the client device.

2. The computer-readable storage medium of claim 1, wherein the instruction indicating a grammar provides a reference to a location of the grammar.

3. The computer-readable storage medium of claim 1 or 2, wherein the markup language comprises one of HTML, XHTML, cHTML, XML, WML, a scripting language, and synchronized multimedia markup language.

4. The computer-readable storage medium of any one of claims 1 to 3, wherein the markup language includes an instruction to audibly render an indication when the speech was not recognized, and/or an instruction to visually render an indication when the speech was not recognized.

5. The computer-readable storage medium of any one of claims 1 to 4, wherein the instruction related to the mode of operation at least one of:
instructs the remote recognition server to provide recognition results when a time period related to speech recognition has lapsed;
instructs the remote recognition server to provide recognition results when a stop recognition indication is provided by the client device;
instructs the remote recognition server to start recognition when a start recognition indication is provided by the client device and to provide recognition results when a stop recognition indication is provided by the client device.
instructs the remote recognition server to start recognition when a start recognition indication is provided by the client device and to provide recognition results at intervals.

6. The computer-readable storage medium of any one of claims 1 to 6, wherein the markup language includes:
an instruction indicating a confidence measure to use for speech recognition; and/or
an instruction for taking action based on a value previously received.

7. The computer-readable storage medium of any one of claims 1 to 6, wherein the client/server system further comprises a second client device, wherein each client device includes the computer-readable storage medium, wherein the remote recognition server is remote from each of the client devices, and wherein the mode of operation of the remote recognition server relates to when recognition results are to be returned to each of the client devices, the markup language further comprising:
an instruction to set a time period related to speech recognition at the remote recognition server for the input provided from each client device.

8. The computer-readable storage medium of claim 7 wherein the time period indicates at least one of:
a maximum period before a result must be returned after detection of speech,
a maximum period before a result must be returned after a start recognition instruction,
a minimum period of silence to indicate an end of speech.

9. The computer-readable storage medium of claim 7, wherein the instruction related to the mode of operation of the remote recognition server for the first client device instructs the recognition server to provide recognition results only when a time period related to speech recognition has lapsed, and wherein the instruction related to the mode of operation of the remote recognition server for the second client device instructs the recognition server to provide recognition results when a stop recognition indication is provided by the second client device.

10. The computer-readable storage medium of claim 9, wherein the instruction related to the mode of operation for the second client device instructs the remote recognition server to start recognition when a start recognition indication is provided by the second client device; and/or
wherein the instruction related to the mode of operation of the first client device instructs the remote recognition server to start recognition when a start recognition indication is provided by the respective client device and to provide recognition results at intervals, wherein the time period related to speech recognition indicates a maximum time for providing recognition results.

11. A computer-readable storage medium including instructions readable by a computer which, when implemented, cause the computer to handle information by performing a method comprising:
receiving a markup language page from a web server having a field for input data;
receiving input from a user related to the field; and
sending to a remote recognition server markup language instructions for data indicative of the input, an indication of a grammar for recognition, a settable time period related to recognition to a remote recognition server, and an instruction related to a mode of operation of the remote recognition server related to when recognition results are to be returned.

12. The computer-readable storage medium of claim 11 wherein the indication provides a reference to locations of the grammars, and/or the indication includes a reference to a language for speech recognition.

13. The computer-readable storage medium of claim 11 or 12 and wherein the input comprises speech, and further including instructions, which when implemented, comprise:
processing the input speech to provide data indicative of the input speech,
wherein processing includes normalizing the data indicative of the input speech, and/or processing includes generating data indicative of parameters of the input speech.

14. The computer-readable storage medium of any one of claims 11 to 13, wherein the input comprises speech and the grammar comprises a speech recognition grammar, and/or the input comprises DTMF input and the grammar comprises a DTMF grammar.

15. The computer-readable storage medium of any one of claims 11 to 14 wherein the instruction related to the mode of operation instructs the remote recognition server to perform at least one of the following:
provide recognition results when the time period related to speech recognition has lapsed;
provide recognition results when a stop recognition indication is provided by the computer;
start recognition when a start recognition indication is provided by the computer and to provide recognition results when a stop recognition indication is provided by the computer; and
start recognition when a start recognition indication is provided by the computer and to provide recognition results at intervals.
